# EUROPÄISCHE PATENTSCHRIFT

(11) **EP 1 836 415 B1**
(45) Veröffentlichungstag und Bekanntmachung des Hinweises auf die Patenterteilung: **05.12.2012**
(21) Anmeldenummer: 06705769.5
(22) Anmeldetag: 11.01.2006
(51) Int. Cl.: F16H 59/08, G05G 5/04, G05G 1/10, F16H 61/24, H01H 3/50

(54) **BETÄTIGUNGSEINRICHTUNG MIT DREHSCHALTER**
ACTUATING DEVICE COMPRISING A ROTARY SWITCH
DISPOSITIF D'ACTIONNEMENT COMPRENANT UN LEVIER DE COMMANDE ROTATIF

(30) Priorität: 14.01.2005 DE 102005002086
(43) Veröffentlichungstag der Anmeldung: 26.09.2007
(73) Patentinhaber: ZF Friedrichshafen AG, 88038 Friedrichshafen (DE)
(72) Erfinder: GIEFER, Andreas, 49448 Lemförde (DE); MEYER, Jörg, 49419 Wagenfeld (DE)
(86) Internationale Anmeldenummer: PCT/DE2006/000030
(87) Internationale Veröffentlichungsnummer: WO 2006/074645

(56) Entgegenhaltungen:
- EP-A- 1 229 272
- EP-A- 1 484 661
- DE-A1- 10 059 794
- US-A- 4 378 474
- US-A1- 2004 093 968
- US-B1- 6 404 354

## Beschreibung

Die Erfindung betrifft eine Einrichtung zur Betätigung eines technischen Systems gemäß dem Oberbegriff des Patentanspruchs 1, wie Bekannt aus EP 1 229 272.

Gattungsgemäße Einrichtungen kommen beispielsweise, jedoch keineswegs ausschließlich, zur manuellen Betätigung der Schaltstufen bzw. zur Gangvorwahl bei Gangwechselgetrieben von Kraftfahrzeugen zum Einsatz.

Betätigungseinrichtungen der eingangs genannten Art werden in Kraftfahrzeugen zur Betätigung unterschiedlichster Systeme und Funktionen des Kraftfahrzeugs eingesetzt. Zahlreiche Systeme bzw. Funktionen sind bei modernen Kraftfahrzeugen elektrisch betrieben bzw. elektronisch gesteuert. Dies gilt sowohl für komplexe mechanische Baugruppen des Antriebsstrangs wie beispielsweise für manuell oder automatisch gesteuerte Fahrzeuggetriebe, als auch für einfachere Funktionen wie elektrische Sitzverstellung, Scheibenwischerantriebe, für diverse elektronische Systeme im Fahrzeug und dergleichen mehr. Insbesondere erfolgt jedoch Gangvorwahl bzw. Steuerung des Betriebszustands des Fahrzeuggetriebes bei einer zunehmenden Anzahl von Kraftfahrzeugen ausschließlich mittels elektrischer bzw. elektronischer Signalgebung ("shift-by-wire").

Die ohne mechanische Verbindung auskommende elektrische bzw. elektronische Ansteuerung derartiger Systeme bringt es jedoch mit sich, dass unter Umständen eine nicht mehr eindeutige Zuordnung zwischen der Position eines Betätigungselements und dem Zustand des mittels des Betätigungselements steuerbaren Systems, beispielsweise eines Fahrzeuggetriebes, vorliegt. Dies bedeutet mit anderen Worten, dass der am Betätigungselement gewählte Sollzustand des gesteuerten Systems, beispielsweise des Fahrzeuggetriebes, nicht mit dem tatsächlichen Schaltzustand des Systems bzw. Getriebes übereinstimmt.

Eine derartige Divergenz zwischen den Zuständen eines technischen Systems und dessen Bedienelemente kann unterschiedliche Ursachen haben.

So kann beispielsweise eine fehlerhafte oder nicht funktionierende Erkennung der Position des Bedienelements vorliegen, mit der Folge, dass die beispielsweise vom Fahrer am Bedienelement vorgewählte Getriebestufe vom System nicht erkannt und damit der entsprechende Steuerbefehl an das Getriebe nicht abgegeben wurde. Ebensogut vorstellbar ist beispielsweise auch eine fehlerhafte oder nicht funktionierende Übertragung des Steuerbefehls zwischen dem Bedienelement und dem damit gesteuerten System.

Bei modernen Kraftfahrzeugen mit den dort eingesetzten, untereinander immer stärker vernetzten komplexen technischen Systemen tritt jedoch auch zunehmend häufig die Situation auf, dass technische Systeme, wie beispielsweise Fahrzeuggetriebe, ihren Betriebs- bzw. Schaltzustand sogar ohne unmittelbare Einwirkung des Fahrers selbsttätig an veränderte Rahmenbedingungen anpassen und verändern. So ist es beispielsweise nicht ungebräuchlich, dass ein elektronisch bzw. by-wire-gesteuertes Fahrzeuggetriebe beim Abstellen des Motors und nach dem Abziehen des Zündschlüssels, oder sobald der Fahrer das Fahrzeug verlässt, aus Sicherheitsgründen selbsttätig die Schaltposition P (Parksperre) einnimmt.

Falls das Fahrzeug mit einem gebräuchlichen Getriebe-Betätigungselement, wie beispielsweise mit einem Automatikwählhebel ausgestattet ist, so verbleibt jedoch der Wählhebel auch im Fall der selbsttätig eingelegten Schaltposition "P" in der zuvor vom Fahrer manuell gewählten Schaltposition, beispielsweise in "N". Der Bedienhebel signalisiert somit fälschlicherweise durch seine unveränderte Position in der "N"-Stellung, dass sich das Getriebe in der Schaltposition "N" befindet, während sich das Getriebe jedoch aufgrund der automatischen Aktivierung der Parksperre tatsächlich in der Schaltposition "P" befindet. Wenn dies im hier gewählten Beispielfall auch nicht unmittelbar zu einem Sicherheitsrisiko führen mag, so verbleibt doch zumindest das Problem, dass sich der Wählhebel beim nächsten Fahrtantritt in der "N"-Stellung befindet, weshalb Schwierigkeiten oder Unklarheiten bei der Einlegung der gewünschten Fahrstufe auftreten könnten.

Ein weiteres, lediglich der Veranschaulichung dienendes Beispiel bildet der vergleichsweise einfache Fall, bei dem das gesteuerte System die Scheibenwischanlage eines Fahrzeugs ist. Auch hierbei ist es bereits bekannt, dass sich der Scheibenwischer, beispielsweise bei auftretendem starkem Nebel oder beim Aufkommen von Niederschlägen, aufgrund von entsprechenden Sensorsignalen selbsttätig einschaltet. Dies bedeutet jedoch, dass der Betriebszustand des Scheibenwischers nun möglicherweise nicht mehr mit dem Schaltzustand des Betätigungselements für den Scheibenwischer übereinstimmt.

Das Betätigungselement signalisiert somit fälschlicherweise durch seine unveränderte Position in der Aus-Stellung, dass der Scheibenwischer ausgeschaltet ist, während dieser sich jedoch aufgrund der automatischen Aktivierung tatsächlich in Betrieb befindet. Wenn die tatsächliche Betriebsstellung im Fall des Scheibenwischers auch leicht erkennbar sein mag, so verbleibt doch zumindest das Problem, dass sich das Betätigungselement beim möglicherweise gewünschten manuellen Eingriff in die Scheibenwischerautomatik, also zum Ausschalten des Scheibenwischers jedoch bereits in der Aus-Stellung befindet.

Wie leicht ersichtlich ist, stellen die genannten Fälle aus dem Bereich des Kraftfahrzeugs bzw. der Schaltgetriebesteuerung lediglich Beispiele für allgemein anwendbare Zusammenhänge bei der Mensch-Maschine-Interaktion im Fall elektronisch gesteuerter, technischer Systeme dar, bei denen die Betätigungselemente nicht mehr mit mechanischen Gestängen oder Wellen, sondern nur noch über elektrische bzw. elektronische Signale mit dem zu steuernden System in Verbindung stehen.

Zur Lösung der Problematik der nicht immer gegebenen Übereinstimung zwischen der Position des Betätigungselements und dem Zustand des mittels des Betätigungselements gesteuerten Systems ist im Stand der Technik vorgeschlagen worden, derartige technische Systeme, insbesondere automatisierte Fahrzeuggetriebe, mittels eines im Wesentlichen rotationssymmetrischen Drehschalters zu betätigen, wobei der Drehschalter für sich genommen unbegrenzt rotierbar ist.

Die Festlegung derjenigen Betätigungsstellung des Drehschalters, die dem tatsächlichen Zustand des zu steuernden Systems bzw. der tatsächlich eingelegten Fahrstufe des Automatikgetriebes entspricht, erfolgt bei dieser Betätigungseinrichtung mittels aktiver Nachführung beweglicher Endanschläge für den Drehschalter. Die Nachführung der Endanschläge erfolgt dabei variabel in Abhängigkeit des tatsächlichen Systemzustands bzw. der tatsächlich eingelegten Fahrstufe. Auf diese Weise ist sichergestellt, dass die Relativposition des Drehschalters zwischen den Endanschlägen, unabhängig davon, in welcher Schaltposition sich der Drehschalter befindet, sowie unabhängig davon, ob der Systemzustand ohne Benutzereingriff verändert wurde, stets mit dem tatsächlichen Systemzustand übereinstimmt.

Diese Nachführung bzw. motorische Anpassung der Position der Endanschläge an den tatsächlichen Systemzustand ist jedoch konstruktiv nicht ohne einen gewissen Aufwand. Zudem benötigt die motorische Nachführung der Endanschläge stets eine gewisse Zeit, bis die Endanschläge die vorgesehene Position erreicht haben, wobei diese Nachführzeit außerdem mit dem Grad der Abweichung zwischen Ist- und Sollposition der Anschläge variiert.

Hinzu kommt, dass beispielsweise bei der Steuerung eines Automatikgetriebes in bestimmten Fällen eine selektive Sperrung bestimmter Gangwahlmöglichkeiten am Betätigungselement bzw. Drehknopf wünschenswert oder erforderlich ist. So muss beispielsweise oberhalb einer bestimmten Vorwärts-Fahrgeschwindigkeit aus Sicherheitsgründen verhindert werden, dass der Fahrer den Rückwärtsgang einlegt, damit der Antriebsstrang nicht beschädigt wird. Hierzu wäre neben der Nachführung der Endanschläge für den Drehschalter allerdings zusätzlich eine selektive Sperrmöglichkeit bzw. eine Möglichkeit zur steuerbaren Veränderung des Abstands zwischen den beiden Endanschlägen des Drehschalters erforderlich, was jedoch erheblichen zusätzlichen konstruktiven Aufwand erfordern würde.

Mit diesem Hintergrund ist es Aufgabe der vorliegenden Erfindung, eine Einrichtung zur elektronischen bzw. allgemein zur by-wire-Betätigung eines technischen Systems zu schaffen, mit der sich die genannten Nachteile des Standes der Technik überwinden lassen. Insbesondere soll die Betätigungseinrichtung eine ebenso intuitive und leicht verständliche Betätigung des technischen Systems ermöglichen, wie dies bei mechanischen oder elektromechanischen Betätigungselementen wie beispielsweise Knebelschaltern und dergleichen seit jeher der Fall ist. Die Betätigungseinrichtung soll bei kompaktem, einfachem und robustem Aufbau gleichzeitig auch die selektive Sperrung einzelner, mehrerer oder aller Schaltpositionen des Betätigungselements erlauben. Ein Schwerpunkt soll dabei auch auf der unmittelbaren, intuitiven und unzweideutigen visuellen und/oder taktilen Rückmeldung des Systemzustands bei der Bedienung des entsprechenden Betätigungselements liegen.

Diese Aufgabe wird durch eine Betätigungseinrichtung mit den Merkmalen des Patentanspruchs 1 gelöst. Bevorzugte Ausführungsformen sind Gegenstand der Unteransprüche.

Die erfindungsgemäße Betätigungseinrichtung umfasst zunächst einmal ein für sich genommen unbegrenzt rotierbares Betätigungselement sowie eine Sperreinrichtung mit einer Kulissenanordnung und Anschlagelementen zur Begrenzung des Drehwinkels des Betätigungselements auf den Bereich innerhalb des vorgesehenen Gesamtschaltwinkels. Dabei kann das Betätigungselement innerhalb des Gesamtschaltwinkels zwei oder mehr Schaltstellungen einnehmen. Der Klarheit halber ist die Anzahl der möglichen Schaltstellungen mit der ganzzahligen Größe "*n*" bezeichnet, wobei gilt {*n* ist größer als 1}.

Erfindungsgemäß zeichnet sich die Betätigungseinrichtung dadurch aus, dass die Kulissenanordnung für jede der *n* Schaltstellungen des Betätigungselements einen Kulissenbereich sowie ein Anschlagelement aufweist. Jeder Kulissenbereich umfasst dabei zumindest ein Kulissensegment, das sich über den Gesamtschaltwinkel erstreckt, wobei das zum Kulissenbereich gehörige Anschlagelement so angeordnet ist, dass es zwischen den Endanschlägen des zugehörigen Kulissensegments *n* Relativpositionen einnehmen kann, die mit den *n* Schaltstellungen des Betätigungselements korrespondieren. Die Kulissensegmente der *n* Kulissenbereiche erstrecken sich dabei zusammengenommen über einen Kulissengesamtwinkel von 360° oder ein Vielfaches davon. Ferner sind die Kulissensegmente und/oder die Anschlagelemente so auf den Kulissengesamtwinkel verteilt angeordnet, dass in jeder möglichen Schaltrelativstellung des Betätigungselements genau jede der n Relativpositionen durch jeweils genau ein Anschlagelement besetzt ist.

Dies bedeutet mit anderen Worten zunächst einmal, dass das Betätigungselement aufgrund seiner für sich genommen unbegrenzten Rotierbarkeit vorderhand keine definierte Anfangs- und Endposition sowie keine definierten absoluten Schaltstellungen aufweist. Vielmehr erfolgt die Festlegung sowohl der Anfangs- bzw. Endposition als auch der Schaltstellungen des Betätigungselements dynamisch durch das Zusammenwirken der einzeln steuerbaren Anschlagelemente mit den jeweils zugeordneten Kulissensegmenten, und zwar in Abhängigkeit vom tatsächlichen momentanen Zustand des gesteuerten technischen Systems und von der Absolutwinkelstellung des Betätigungselements bzw. der Kulissenanordnung.

Eine konventionelle Betätigungseinrichtung hingegen, beispielsweise ein Knebelschalter, kann lediglich eine Anzahl von unveränderlichen Schaltstellungen innerhalb eines bezüglich seiner Winkelposition und Winkelgröße festgelegten Gesamtschaltwinkels einnehmen. Bei einer derartigen Betätigungseinrichtung erfolgt die Begrenzung des Drehwinkels am Betätigungselement in der Form, dass sich ein mit dem Betätigungselement verbundenes Anschlagelement zwischen den Endanschlägen eines Kulissenbereichs bewegen kann. Der Knebelschalter kann somit eine Anzahl von Schaltstellungen zwischen einem festen Linksanschlag (Endanschlag des Kulissenbereichs bei Linksdrehung) und einem festen Rechtsanschlag (Endanschlag des Kulissenbereichs bei Rechtsdrehung) einnehmen.

Hiervon unterscheidet sich die erfindungsgemäße Betätigungseinrichtung zunächst einmal dadurch, dass nicht wie beispielsweise beim Knebelschalter lediglich ein Kulissenbereich und ein Anschlagelement vorhanden ist, sondern dass vielmehr für jede der Schaltstellungen, die das Betätigungselement einnehmen kann, ein eigenes Anschlagelement sowie ein eigener Kulissenbereich vorgesehen ist. Besitzt die erfindungsgemäße Betätigungseinrichtung beispielsweise *n* = vier Schaltstellungen, so umfasst die Betätigungseinrichtung ebenso *n* = vier Anschlagelemente, die zudem einzeln gesteuert aktivierbar sind sowie *n* = vier Kulissenbereiche. Dabei umfasst jeder Kulissenbereich zumindest ein Kulissensegment.

Der Schlüssel zu der Erfindung liegt dabei insbesondere darin, dass die Kulissensegmente zusammengenommen eine volle Umdrehung von 360° bzw. ein Vielfaches davon abdecken, während die Kulissensegmente oder die Anschlagelemente, bzw. die Kulissensegmente und die Anschlagelemente, so entlang des Kulissengesamtwinkels verteilt angeordnet sind, dass für jede beliebige Schaltrelativstellung des Betätigungselements alle *n* = vier möglichen Relativpositionen, die jedes der *n* = vier Anschlagelemente innerhalb seines Kulissensegments einnehmen kann (im Beispielfall also "Linksanschlag" - "Mitte-Links-Stellung" - "Mitte-Rechts-Stellung" - "Rechtsanschlag") durch genau eines der Anschlagelemente besetzt ist.

Der Begriff "Schaltrelativstellung" soll dabei nicht nur die *n* möglichen Schaltstellungen des Betätigungselements innerhalb des Gesamtschaltwinkels (Kulissensegmentwinkels) umfassen, sondern ferner auch sämtliche potentiellen Schaltstellungen, die das Betätigungselement unter allen möglichen Betriebszuständen entlang einer gesamten Umdrehung von 360° einnehmen kann. Ist die Betätigungseinrichtung beispielsweise so ausgelegt, dass das Betätigungselement innerhalb eines Gesamtschaltwinkels von 135° vier verschiedene Schaltstellungen einnehmen kann, so bedeutet dies unter der Annahme gleichmäßiger Schaltabstände, dass die einzelnen Schaltstellungen jeweils durch einen Schaltwinkel von (135° aufgeteilt auf 4 Schaltstellungen einschließlich beider Endanschläge) = 45° zwischen den Schaltstellungen getrennt sind. Das für sich genommen unbegrenzt rotierbare Betätigungselement kann somit insgesamt eine Anzahl von (360° geteilt durch 45°) = acht Schaltrelativstellungen einnehmen.

Mit diesem Hintergrund ist es erfindungsgemäß möglich, dass für jede beliebige Schaltrelativstellung des Betätigungselements mittels Auswahl eines der vier Anschlagelemente zu jeder Zeit definiert werden kann, welcher Schaltposition bzw. welchem Systemzustand die momentane Schaltrelativstellung des Betätigungselements entsprechen soll. Es kann durch eine geeignete Steuerung also jederzeit festgelegt oder verändert werden, ob sich das Betätigungselement beispielsweise also am linken Anschlag, am rechten Anschlag oder auf einer der weiteren Schaltpositionen befinden soll - ohne dass hierzu das Betätigungselement belegt bzw. verdreht werden müsste.

Die prinzipielle Wirkungsweise soll zunächst mit dem einfachen Beispiel der Betätigung des Scheibenwischers verdeutlicht werden. Die Scheibenwischanlage umfasst für den Beispielsfall ein Betätigungselement mit zwei Schaltstellungen, das für sich genommen jedoch unbegrenzt rotierbar ist, beispielsweise einen im Wesentlichen runden Drehschalter. Durch entsprechende Symbolik auf dem Drehschalter oder im Umfeld des Drehschalters sei signalisiert, dass der Scheibenwischer durch Rechtsdrehen des Drehschalters eingeschaltet und durch Linksdrehen des Drehschalters wieder ausgeschaltet wird. Dieses einfache Bedienprinzip ist unmittelbar verständlich und wird vom Fahrer des Kraftfahrzeugs in kürzester Zeit verinnerlicht werden können.

Die erfindungsgemäß ausgebildete Betätigungseinrichtung umfasst im Beispielfall der Ein-Aus-Betätigung eines Scheibenwischers lediglich zwei Kulissenanordnungen sowie zwei beispielsweise von einer Steuerelektronik aktivierbare Anschlagelemente. Dabei sind die Kulissensegmente der Kulissenanordnungen bzw. die Anschlagelemente so verteilt angeordnet, dass für jede der Schaltrelativstellungen, die der Drehschalter entlang einer vollen Umdrehung von 360° einnehmen kann, sich immer eines der Anschlagelemente am Linksanschlag sowie eines der Anschlagelemente am Rechtsanschlag eines der Kulissensegmente befindet. Es sind somit mit anderen Worten in diesem Fall erfindungsgemäß für jede mögliche Schaltrelativstellung des Betätigungselements stets beide Relativpositionen ("Linksanschlag" und "Rechtsanschlag") durch die beiden Anschlagelemente besetzt. Die Festlegung, ob sich der Drehschalter mechanisch und für den Bediener spürbar tatsächlich am Linksanschlag, oder aber am Rechtsanschlag befindet, kann somit in jeder möglichen Schaltrelativstellung des Drehschalters lediglich durch Aktivierung eines der beiden Anschlagelemente und gleichzeitige Deaktivierung des anderen Anschlagelements erfolgen.

Für den Beispielfall sei angenommen, der Scheibenwischer sei zunächst ausgeschaltet. Eine Steuerelektronik sorgt in diesem Fall dafür, dass dasjenige Anschlagelement aktiviert bleibt, das sich in der momentanen Position des Drehschalters am entsprechenden Linksanschlag seiner Kulissenanordnung befindet. Somit befindet sich auch der Drehschalter mechanisch und für den Bediener spürbar an seinem linken Anschlag (entsprechend der "Aus"-Stellung) und kann nur nach rechts gedreht werden.

Zum Einschalten des Scheibenwischers wird somit der Drehschalter einfach nach rechts gedreht, bis die Drehbewegung des Drehschalters mittels Anschlag des nach wie vor aktivierten Anschlagelements am entsprechenden Rechtsanschlag seiner Kulissenanordnung begrenzt wird, was der "Ein"-Stellung des Drehschalters sowie des Scheibenwischers entspricht. Der Fahrer weiß somit nach einigen Betätigungsvorgängen intuitiv, dass ein nach rechts bis zum "Ein"-Anschlag gedrehter Drehschalter einem eingeschalteten Scheibenwischer und ein nach links bis zum "Aus"-Anschlag gedrehter Drehschalter einem ausgeschalteten Scheibenwischer entspricht. Diese Art der Betätigung entspricht prinzipiell dem weit verbreiteten, einfachen Prinzip des Knebelschalters, der sich seit jeher an den verschiedensten Geräten und Maschinen, angefangen von elektrischen Haushaltsgeräten, über gebräuchliche Schalter am Kraftfahrzeug, bis hin zu sicherheitsrelevanten Schalteinrichtungen beispielsweise in Kraftwerksanlagen wiederfindet.

Wenn sich nun jedoch - im vorliegenden Beispiel der Betätigung des Scheibenwischers - der Scheibenwischer aufgrund einsetzenden Niederschlags dank eines am Fahrzeug vorhandenen Regensensors selbsttätig einschaltet, würde bei einem konventionellen Betätigungselement die Übereinstimmung zwischen der Schaltstellung des Betätigungselements und dem Betriebszustand des gesteuerten technischen Systems, hier also des Scheibenwischers, aufgehoben. Wollte nun der Fahrer in die automatische Betätigung des Scheibenwischers eingreifen und diesen manuell wieder ausschalten, so könnte er nicht einfach intuitiv den Scheibenwischer-Drehschalter nach links bis zum "Aus"-Anschlag drehen, da sich der Drehschalter ja nach wie vor unverändert bereits am linken "Aus"-Anschlag befände. Es müsste somit eine separate Möglichkeit zum Eingriff in die Automatik geschaffen werden, die beispielsweise entweder einen zusätzlichen Reset-Knopf erforderlich machen würde, oder aber die Verwendung eines Betätigungselements mit diskreten Schaltstellungen verunmöglichen würde. Beides ginge zu Lasten der Ergonomie und würde die erwünschte intuitive Bedienbarkeit des Systems verhindern.

An dieser Stelle setzt die Erfindung ein, bei der durch Wechsel des Aktivierungszustands der Anschlagelemente die Schaltstellung des Drehschalters, in Abhängigkeit des tatsächlichen momentanen Betriebszustands des zu steuernden Systems umdefiniert werden kann, ohne dass hierzu die tatsächliche Schaltstellung des Drehschalters verändert werden müsste. Im vorliegenden Beispiel bedeutet dies mit anderen Worten, dass der Aktivierungszustand der beiden Anschlagelemente - für den Fall der automatischen Aktivierung des Scheibenwischers bei einsetzendem Regen - durch die Steuerelektronik der Betätigungseinrichtung vertauscht wird. Es wird mit anderen Worten das zuvor aktive Anschlagelement (das sich am entsprechenden Linksanschlag seiner Kulissenanordnung befindet) deaktiviert bzw. eingezogen, während das zuvor deaktive Anschlagelement (das sich am entsprechenden Rechtsanschlag seiner Kulissenanordnung befindet) aktiviert bzw. ausgefahren wird.

Der Drehschalter kann nun nicht mehr nach rechts gedreht werden, sondern es kann nun nur noch eine Bewegung des Drehschalters nach links erfolgen, obwohl der Drehschalter sich in derselben Absolutstellung kurz zuvor noch am linken Anschlag, und somit in der Aus-Stellung, befunden hatte. Für den Fahrer bedeutet dies, dass er ohne weiteres Nachdenken und ohne Konsultation einer komplizierten Anzeigeeinrichtung wie immer einfach nach dem Drehschalter greifen und diesen, wie zum Ausschalten des Scheibenwischers gewohnt, einfach nach links bis zum "Aus"-Anschlag drehen kann.

Im Vergleich zu dem eingangs genannten Drehschalter mit verstellbaren Endanschlägen besitzt die erfindungsgemäße Betätigungseinrichtung wie bereits ausgeführt insbesondere die Vorteile eines besonders einfachen und robusten Aufbaus, der praktisch verzögerungsfreien Aktivierbarkeit der Anschlagelemente sowie - bei Betätigungseinrichtungen mit mehr als zwei Schaltstellungen - der problemlosen Veränderbarkeit des Drehwinkelbereichs für das Betätigungselement, bzw. der Möglichkeit zur selektiven Sperrung lediglich einzelner Schaltstellungen oder Schaltbereiche.

Aus dem Gesagten ist unmittelbar ersichtlich, dass eine dergestalt intuitive Bedienung von technischen Systemen wie beispielsweise von Fahrzeuggetrieben sowohl dem Bedienkomfort vorteilhaft entgegenkommt als auch potenziellen Sicherheitsrisiken auf Grund komplizierter Bedienelemente oder Bedienkonzepte einen wirksamen Riegel vorschiebt.

Zur Verwirklichung der Erfindung ist es dabei zunächst unerheblich, wie die Kulissenbereiche bzw. Kulissensegmente der Kulissenanordnung konstruktiv ausgebildet und angeordnet sind, solange die vollständige Rotation des Betätigungselements um 360° abgedeckt ist und solange insbesondere für jede mögliche Schaltrelativstellung, die das Betätigungselement einnehmen kann, alle n Relativpositionen zwischen Anschlagelement und Kulissensegment vollständig mit Anschlagelementen besetzt sind. So kann beispielsweise für jedes Anschlagelement ein eigener vollkommen separater Kulissenbereich mit einem oder mehreren ebenfalls ausschließlich diesem Anschlagelement zugeordneten Kulissensegmenten vorgesehen sein.

Gemäß einer besonders bevorzugten Ausführungsform der Erfindung sind jedoch mehrere Kulissenbereiche bzw. Kulissensegmente zu einem Mehrfach-Kulissenbereich bzw. Mehrfach-Kulissensegment zusammengefasst, wobei dem Mehrfach-Kulissenbereich bzw. Mehrfach-Kulissensegment mehrere Anschlagelemente zugeordnet sind. Dabei sind dem Mehrfach-Kulissenbereich bzw. Mehrfach-Kulissensegment ebenso viele Anschlagelemente zugeordnet, wie Kulissenbereiche bzw. Kulissensegmente in dem Mehrfach-Kulissenbereich bzw. Mehrfach-Kulissensegment zusammengefasst bzw. zur Deckung gebracht wurden.

Diese Ausführungsform hat den Hintergrund, dass sich sämtliche Kulissensegmente der erfindungsgemäßen Betätigungseinrichtung über denselben Winkel, nämlich über den Gesamtschaltwinkel des Betätigungselements erstrecken. Dies bedeutet mit anderen Worten, dass durch geschickte Anordnung - bzw. Rotation um die Drehachse des Betätigungselements - sowohl der Kulissensegmente als auch der zugehörigen Anschlagelemente, die Kulissensegmente aus mehreren, oder sogar aus allen Kulissenbereichen der Betätigungseinrichtung so in der Kulissenanordnung positioniert werden können, dass jeweils mehrere, unter Umständen sogar alle Kulissenbereiche bzw. Kulissensegmente miteinander zur Deckung gebracht werden können.

Dies ist insbesondere insofern vorteilhaft, als hierdurch Bauraum in erheblichem Maße eingespart werden kann. Ferner lässt sich die Betätigungseinrichtung auf diese Weise konstruktiv einfacher und damit robuster und kostengünstiger gestalten.

Mit diesem Hintergrund sollen die Begriffe "Kulissenbereich" und "Kulissensegment" im Sinne der Patentansprüche und der Beschreibung so verstanden werden, dass auch beim Vorhandensein eines Mehrfach-Kulissenbereichs, der sich aus einer Anzahl von *m* {m>1} deckungsgleichen bzw. zur Deckung gebrachten Kulissenbereichen von *m* verschiedenen Anschlagelementen zusammensetzt - bzw. beim Vorhandensein eines Mehrfach-Kulissensegments, das sich aus einer Anzahl von *m* {m>1} zur Deckung gebrachten Kulissensegmenten von *m* verschiedenen Anschlagelementen zusammensetzt - dieser Mehrfach-Kulissenbereich bzw. dieses Mehrfach-Kulissensegment nach wie vor als *m* Kulissenbereiche bzw. *m* Kulissensegmente gezählt werden soll.

Mit anderen Worten fallen unter den Begriff "Kulissenbereich" gemäß der Patentansprüche und der Beschreibung sowohl räumlich getrennte, "eigenständige" Kulissenbereiche für verschiedene Anschlagelemente, als auch räumlich miteinander zur Deckung gebrachte, "logische" Kulissenbereiche für verschiedene Anschlagelemente. Ebenso fallen unter den Begriff "Kulissensegment" sowohl räumlich getrennte, "eigenständige" Kulissensegmente für verschiedene Anschlagelemente, als auch räumlich miteinander zur Deckung gebrachte, "logische" Kulissensegmente für verschiedene Anschlagelemente.

Zur Verwirklichung der Erfindung ist es unerheblich, welche Bauform und Gestalt Kulissenbereiche bzw. Kulissensegmente aufweisen, solange die geometrischen Anforderungen insbesondere bezüglich des Kulissengesamtwinkels und der erforderlichen Verteilung der Kulissensegmente über den Kulissengesamtwinkel erfüllt sind. So ist beispielsweise eine Ausführungsform der Erfindung denkbar, gemäß der die Kulissenbereiche Längsabschnitten der Oberfläche eines zylindrischen Körpers entsprechen, mit anderen Worten auf der Oberfläche eines Zylinders angeordnet sind, während die zugehörigen Anschlagelemente in Bezug auf den Zylinder in radialer Richtung angeordnet sind.

Gemäß einer weiteren Ausführungsform der Erfindung ist jedoch die Kulissenanordnung im Wesentlichen kreisringförmig, wobei vorzugsweise jedem Kulissenbereich der Kulissenanordnung ein bestimmter kreisringförmiger Teilflächenbereich der Kulissenanordnung zugeordnet ist. Diese Ausführungsform hat insbesondere den Vorteil, besonders platzsparend, kompakt und robust aufgebaut zu sein.

Gemäß einer weiteren Ausführungsform der Erfindung ist es dabei vorgesehen, dass mehreren oder allen Kulissenbereichen der Kulissenanordnung derselbe Teilflächenbereich der Kulissenanordnung zugeordnet ist. Dies bedeutet mit anderen Worten, dass mehrere oder sogar alle Kulissenbereiche ein und denselben Flächenbereich der Kulissenanordnung belegen und dass diese ("logischen") Kulissenbereiche beziehungsweise die ("logischen") Kulissensegmente dieser Kulissenbereiche somit deckungsgleich sind.

Für die Erfindung ist es zunächst unwesentlich, welche konkrete Gestalt das Betätigungselement aufweist, solange eine griffige und sichere Bedienung des Betätigungselements unabhängig von dessen Rotationsstellung möglich ist. Das Betätigungselement ist jedoch bevorzugt im Wesentlichen rotationssymmetrisch ausgeführt und weist vorzugsweise insbesondere keine winkelspezifische Form- bzw. Farbkennzeichnung auf. Dadurch wird vermieden, dass der Bediener bzw. beim Kraftfahrzeug der Fahrer eine bestimmte Schaltrelativstellung des Betätigungselements fälschlicherweise mit einem bestimmten Zustand des zu steuernden Systems identifiziert.

Gemäß einer weiteren bevorzugten Ausführungsform der Erfindung weist das Betätigungselement eine der Anzahl der möglichen Schaltrelativstellungen entsprechende Anzahl von Rastpositionen auf, die besonders bevorzugt gleichmäßig auf eine volle Umdrehung des Betätigungselements, also auf 360 Winkelgrade verteilt sind. Es hat sich gezeigt, dass Betätigungselemente mit definierten Rastpositionen von der Mehrzahl der Bediener bevorzugt werden, da aufgrund der bei der Betätigung spürbaren Rastpositionen eine definierte taktile Rückmeldung über den Schaltvorgang erfolgt. Dies gilt insbesondere für Betätigungseinrichtungen, die mehr als zwei Schaltpositionen umfassen, und bei denen das zu steuernde System dementsprechend mehr als zwei unterschiedliche Betriebszustände einnehmen kann.

Bevorzugt weist dabei die Rastiereinrichtung eine umlaufende Rastierkontur und ein mit der Rastierkontur korrespondierendes sowie federbeaufschlagtes Rastierelement auf. Vorzugsweise ist dabei die Rastierkontur einstückig mit einem Gehäuseteil der Betätigungseinrichtung ausgebildet, während das Rastierelement vorzugsweise mit der Kulissenanordnung verbunden ist. Eine so ausgebildete Rastiereinrichtung ist vorteilhaft insofern, als sie nur wenige Komponenten benötigt, einfach und robust aufgebaut ist und ferner kostengünstig gefertigt werden kann.

Die Art, Anordnung und Ausführung der Ansteuerung für die Anschlagelemente ist erfindungsgemäß zunächst beliebig, solange die erforderliche Verknüpfung zwischen dem Systemzustand des zu steuernden technischen Systems und dem Schaltzustand der Betätigungseinrichtung gewährleistet ist. Gemäß einer bevorzugten Ausführungsform der Erfindung ist jedoch die Einrichtung zur gesteuerten Aktivierung der Anschlagelemente von der Betätigungseinrichtung umfasst. Vorzugsweise weist die Betätigungseinrichtung dabei auch eine mit der Steuerungseinrichtung verbindbare Sensoranordnung auf, die zur Ermittlung der momentanen Schaltrelativstellung des Betätigungselements bzw. des Absolutwinkels der Kulissenanordnung dient.

Gemäß einer weiteren bevorzugten Ausführungsform weist die Betätigungseinrichtung für jedes Anschlagelement eine mit der Steuerungseinrichtung verbindbare Aktoreinrichtung auf. Die Aktoreinrichtung dient dabei jeweils zur Aktivierung des zugehörigen Anschlagelements und ist durch eine Hilfsenergie antreibbar, die der Aktoreinrichtung über die Steuerungseinrichtung zugeführt werden kann. Besonders bevorzugt ist dabei die Aktoreinrichtung so eingerichtet, dass das Anschlagelement bei Wegfall der Hilfsenergie in den aktivierten Zustand versetzt bzw. im aktivierten Zustand gehalten wird. Dies ist insbesondere insofern vorteilhaft, als auf diese Weise sichergestellt wird, dass das Betätigungselement bei Wegfall der Hilfsenergie, beispielsweise in einem Störungsfall, automatisch blockiert wird. Damit wird dem Bediener auch sofort signalisiert, dass sich das System nicht in betriebsbereitem Zustand befindet, bzw. momentan nicht über die Betätigungseinrichtung gesteuert werden kann.

Die Art der Hilfsenergie für den Antrieb der Aktoreinrichtung ist zunächst nicht wesentlich zur Verwirklichung der Erfindung. Bevorzugt weist jedoch die Aktoreinrichtung einen elektromagnetischen Antrieb zur Aktivierung des Anschlagelements auf, wobei im Sinne einer einfachen, kostengünstigen und robusten Bauweise das Anschlagelement vorzugsweise durch den Ankerstößel des Elektromagneten der Aktoreinrichtung gebildet ist.

Die Erfindung lässt sich ferner unabhängig davon verwirklichen, ob die Kulisseneinrichtung mit dem Betätigungselement verbunden oder gehäusefest angeordnet ist. Die Betätigungseinrichtung erhält jedoch einen konstruktiv besonders einfachen Aufbau, wie dies auch gemäß einer besonders bevorzugten Ausführungsform der Erfindung vorgesehen ist, wenn die Kulisseneinrichtung drehfest mit dem Betätigungselement verbunden ist und gleichzeitig die Anschlagelemente sowie deren Antriebe gehäusefest angeordnet sind.

Nach weiteren Ausführungsformen der Erfindung ist vorgesehen, dass die Betätigungseinrichtung mit einer Anzeigeeinrichtung verbunden ist, beispielsweise mit einer Anzeigeeinrichtung im Bereich des Armaturenbretts, oder dass die Betätigungseinrichtung selbst eine Anzeigeeinrichtung umfasst, die beispielsweise im unmittelbaren Bereich des Betätigungselements angeordnet sein kann. Die Ausführungsformen mit eigener Anzeigeeinrichtung sind vorteilhaft insbesondere bei der Betätigung solcher technischer Systeme, deren Betriebszustand im Unterschied zum eingangs als Beispiel angeführten Scheibenwischer nicht unmittelbar erkennbar ist. Die Anzeigeeinrichtung dient dann beispielsweise dazu, im unmittelbaren Bereich des Betätigungselements, beispielsweise im Bereich eines Drehschalters zur Steuerung eines Kraftfahrzeuggetriebes, den derzeitigen Schalt- bzw. Betriebszustand des Getriebes zu signalisieren.

Dabei ist es gemäß einer weiteren, bevorzugten Ausführungsform der Erfindung vorgesehen, dass die Anzeigeeinrichtung für jede Schaltstellung ein diskretes, also gesondertes und räumlich separat angeordnetes Anzeigeelement aufweist, wobei die Abstände zwischen den diskreten Anzeigeelementen besonders bevorzugt mit der Winkeldifferenz zwischen den Schaltstellungen bzw. Rastpositionen des Betätigungselements korrespondieren.

Dies bedeutet mit anderen Worten, dass jeder anwählbaren Schaltstellung bzw. Rastposition des Betätigungselements genau ein eigenes Anzeigeelement, beispielsweise ein Leuchtdiodenfeld oder dergleichen entspricht, wobei der Abstand der einzelnen Anzeigeelementen bzw. Leuchtfelder voneinander jeweils mit den Winkeldifferenzen zwischen den Schaltstellungen des Betätigungselements übereinstimmt.

Zusammen mit der erfindungsgemäßen Anordnung aus Kulissensegmenten und Anschlagelementen wird auf diese Weise vollständig die Funktion und Bedienungsweise des klassischen Knebelschalters nachgebildet, bei dem jeder Schaltposition genau ein definierter Betriebszustand des geschalteten bzw. des zu steuernden Systems zugeordnet ist, und bei dem in beiden Drehrichtungen sowohl optisch als auch mechanisch definierte Endstellungen bzw. Endanschläge vorhanden sind. Selbstverständlich wird dabei jedoch gleichzeitig das erfindungsgemäße Prinzip der steuerbaren Anschlagelemente beibehalten, deren Aktivierungszustand in Abhängigkeit des tatsächlichen, u.U. selbsttätig veränderten Systemzustands angepasst werden kann, um so die intuitive Bedienbarkeit, taktile Rückmeldung sowie selektive Blockierbarkeit des Betätigungselements wie weiter oben beschrieben unter allen Systemzuständen zu gewährleisten.

Nach einer weiteren Ausführungsform der vorliegenden Erfindung umfasst die Betätigungseinrichtung ferner eine mechanische Entriegelung zur manuellen Deaktivierung der Anschlagelemente. Diese steht als sog. Override-Funktion für den Fall von Fehlfunktionen der Aktoren für die Anschlagelemente und/oder von Fehlfunktionen der Aktorsteuerung zur Verfügung, und ermöglicht in einem solchen Fall mittels einer mechanischen Deaktivierung der Anschlagelemente, dass sich das Betätigungselement im Sinne eines Notbetriebs dennoch betätigen lässt und somit eine Notsteuerung des Systems erfolgen kann.

Im Folgenden wird die Erfindung anhand lediglich Ausführungsbeispiele darstellender Zeichnungen näher erläutert. Dabei zeigt:
- **Fig. 1**: in schematischer Darstellung Kulissenanordnung und Anschlagelemente einer ersten Ausführungsform einer Betätigungseinrichtung in einer ersten Schaltrelativstellung;
- **Fig. 2**: in schematischer Darstellung Betätigungselement und Anzeigeeinrichtung der Betätigungseinrichtung gemäß **Fig. 1****;**
- **Fig. 3**: in einer **Fig. 1** entsprechenden Darstellung Kulissenanordnung und Anschlagelemente der Betätigungseinrichtung gemäß **Fig. 1** und **2** in der zweiten Schaltrelativstellung;
- **Fig. 4**: in einer **Fig. 2** entsprechenden Darstellung Betätigungselement und Anzeigeeinrichtung der Betätigungseinrichtung gemäß **Fig. 1****;**
- **Fig. 5**: in einer **Fig.1** und **3** entsprechenden Darstellung Kulissenanordnung und Anschlagelemente der Betätigungseinrichtung gemäß **Fig.1** bis **4** in der zweiten Schaltrelativstellung sowie mit Darstellung des Kulissengesamtwinkels;
- **Fig. 6**: in einer **Fig. 2** und **4** entsprechenden Darstellung Betätigungselement und Anzeigeeinrichtung der Betätigungseinrichtung gemäß **Fig. 1** bis **5**;
- **Fig. 7**: in schematischer isometrischer Darstellung ein Beispiel für eine Betätigungseinrichtung mit Anzeigeeinrichtung;
- **Fig. 8**: in einer **Fig.1**, **3** und **5** entsprechenden schematischen Darstellung Kulissenanordnung und Anschlagelemente einer Ausführungsform der Sperreinrichtung einer Betätigungseinrichtung für ein Automatikgetriebe in einer ersten Schaltrelativstellung mit Getriebe in Stellung "P";
- **Fig. 9**: in einer **Fig. 8** entsprechenden Darstellung Kulissenanordnung und Anschlagelemente der Sperreinrichtung gemäß **Fig. 8** in einer zweiten Schaltrelativstellung mit Getriebe in Stellung "P";
- **Fig.10**: in einer **Fig. 8** und **9** entsprechenden Darstellung Kulissenanordnung und Anschlagelemente der Sperreinrichtung gemäß **Fig. 8** und **9** in einer dritten Schaltrelativstellung mit Getriebe in Stellung "P";
- **Fig.11**: in einer **Fig. 8** bis **10** entsprechenden Darstellung Kulissenanordnung und Anschlagelemente der Sperreinrichtung gemäß **Fig. 8** bis **10** in einer vierten Schaltrelativstellung sowie mit Darstellung des Kulissengesamtwinkels, mit Getriebe in Stellung "P";
- **Fig. 12**: in einer **Fig. 8** bis **11** entsprechenden Darstellung Kulissenanordnung und Anschlagelemente der Sperreinrichtung gemäß **Fig. 8** bis **11** in der ersten Schaltrelativstellung mit Getriebe in Stellung "P" und gesperrtem Betätigungselement (Shiftlock);
- **Fig. 13**: in einer **Fig. 8** bis **12** entsprechenden Darstellung Kulissenanordnung und Anschlagelemente der Sperreinrichtung gemäß **Fig. 8** bis **12** in der zweiten Schaltrelativstellung mit Getriebe in Stellung "P" und gesperrtem Betätigungselement (Shiftlock);
- **Fig. 14**: in einer **Fig. 8** bis **13** entsprechenden Darstellung Kulissenanordnung und Anschlagelemente der Sperreinrichtung gemäß **Fig. 8** bis **13** in der dritten Schaltrelativstellung mit Getriebe in Stellung "P" und gesperrtem Betätigungselement (Shiftlock);
- **Fig. 15**: in einer **Fig. 8** bis **14** entsprechenden Darstellung Kulissenanordnung und Anschlagelemente der Sperreinrichtung gemäß **Fig. 8** bis **14** in der vierten Schaltrelativstellung mit Getriebe in Stellung "P" und gesperrtem Betätigungselement (Shiftlock);
- **Fig. 16**: in einer **Fig. 8** bis **15** entsprechenden Darstellung Kulissenanordnung und Anschlagelemente der Sperreinrichtung gemäß **Fig. 8** bis **15** in der dritten Schaltrelativstellung mit Getriebe in Stellung "N" und gesperrtem Betätigungselement (Shiftlock);
- **Fig. 17**: in einer **Fig. 8** bis **16** entsprechenden Darstellung Kulissenanordnung und Anschlagelemente der Sperreinrichtung gemäß **Fig. 8** bis **16** in der vierten Schaltrelativstellung mit Getriebe in Stellung "N" und gesperrtem Betätigungselement (Shiftlock);
- **Fig. 18**: in einer **Fig. 8** bis **17** entsprechenden Darstellung Kulissenanordnung und Anschlagelemente der Sperreinrichtung gemäß **Fig. 8** bis **17** in einer fünften Schaltrelativstellung mit Getriebe in Stellung "N" und gesperrtem Betätigungselement (Shiftlock);
- **Fig. 19**: in einer **Fig. 8** bis **18** entsprechenden Darstellung Kulissenanordnung und Anschlagelemente der Sperreinrichtung gemäß **Fig. 8** bis **18** in einer sechsten Schaltrelativstellung mit Getriebe in Stellung "N" und gesperrtem Betätigungselement (Shiftlock);
- **Fig. 20**: in einer **Fig. 8** bis **19** entsprechenden Darstellung Kulissenanordnung und Anschlagelemente der Sperreinrichtung gemäß **Fig. 8** bis **19** in der vierten Schaltrelativstellung mit Getriebe in Stellung "D" und gesperrtem Rückwärtsgang;
- **Fig. 21**: in einer **Fig. 8** bis **20** entsprechenden Darstellung Kulissenanordnung und Anschlagelemente der Sperreinrichtung gemäß **Fig. 8** bis **20** in der fünften Schaltrelativstellung mit Getriebe in Stellung "D" und gesperrtem Rückwärtsgang;
- **Fig. 22**: in einer **Fig. 8** bis **21** entsprechenden Darstellung Kulissenanordnung und Anschlagelemente der Sperreinrichtung gemäß **Fig. 8** bis **21** in der sechsten Schaltrelativstellung mit Getriebe in Stellung "D" und gesperrtem Rückwärtsgang;
- **Fig. 23**: in einer **Fig. 8** bis **22** entsprechenden Darstellung Kulissenanordnung und Anschlagelemente der Sperreinrichtung gemäß **Fig. 8** bis **22** in einer siebten Schaltrelativstellung mit Getriebe in Stellung "D" und gesperrtem Rückwärtsgang;
- **Fig. 24**: in einer **Fig. 8** bis **23** entsprechenden Darstellung Kulissenanordnung und Anschlagelemente der Sperreinrichtung gemäß **Fig. 8** bis **23** in der dritten Schaltrelativstellung im Sperrzustand bzw. bei Wegfall der Hilfsenergie;
- **Fig. 25**: in einer **Fig. 8** bis **24** entsprechenden Darstellung Kulissenanordnung und Anschlagelemente der Sperreinrichtung gemäß **Fig. 8** bis **24** in der vierten Schaltrelativstellung im Sperrzustand bzw. bei Wegfall der Hilfsenergie;
- **Fig. 26**: in einer **Fig. 8** bis **25** entsprechenden Darstellung Kulissenanordnung und Anschlagelemente der Sperreinrichtung gemäß **Fig. 8** bis **25** in der fünften Schaltrelativstellung im Sperrzustand bzw. bei Wegfall der Hilfsenergie;
- **Fig. 27**: in einer **Fig. 8** bis **26** entsprechenden Darstellung Kulissenanordnung und Anschlagelemente der Sperreinrichtung gemäß **Fig. 8** bis **26** in der sechsten Schaltrelativstellung im Sperrzustand bzw. bei Wegfall der Hilfsenergie;
- **Fig. 28**: in isometrischer Explosionsdarstellung eine weitere Ausführungsform einer Betätigungseinrichtung für ein Automatikgetriebe;
- **Fig. 29**: in einer **Fig. 28** entsprechenden Darstellung die Betätigungseinrichtung gemäß **Fig. 28** in der Untersicht;
- **Fig. 30**: in schematischer Darstellung die Betätigungseinrichtung gemäß **Fig. 28** und **29** im Längsschnitt mit deaktivierten Anschlagelementen;
- **Fig. 31**: in einer **Fig. 30** entsprechenden Darstellung die Betätigungseinrichtung gemäß **Fig. 28** bis **30** im Längsschnitt mit aktivierten Anschlagelementen;
- **Fig. 32**: in schematischer Darstellung die Betätigungseinrichtung gemäß **Fig. 28** bis **31** in der Draufsicht mit Darstellung der Schnittebene gemäß **Fig. 30** und **31**;
- **Fig. 33**: in einer **Fig. 8** bis **25** entsprechenden Darstellung Kulissenanordnung und Anschlagelemente der Sperreinrichtung gemäß **Fig. 8** bis **25****;**
- **Fig. 34**: in einer **Fig. 33** entsprechenden Darstellung einen ersten Übergangsschritt von der Ausführungsform gemäß **Fig. 33** zu der Ausführungsform gemäß **Fig. 36****;**
- **Fig. 35**: in einer **Fig. 33** und **34** entsprechenden Darstellung einen weiteren Übergangsschritt von der Ausführungsform gemäß **Fig. 33** zu der Ausführungsform gemäß **Fig. 36****;**
- **Fig. 36**: in einer **Fig. 33** bis **35** entsprechenden Darstellung Kulissenanordnung und Anschlagelemente der Sperreinrichtung für die Betätigungseinrichtung gemäß **Fig. 28** bis **32****;**
- **Fig. 37**: in einer **Fig. 36** entsprechenden Darstellung Kulissenanordnung und Anschlagelemente der Sperreinrichtung gemäß **Fig. 28** bis **32** in einer ersten Schaltrelativstellung mit Getriebe in Stellung "P";
- **Fig. 38**: in einer **Fig. 37** entsprechenden Darstellung Kulissenanordnung und Anschlagelemente der Sperreinrichtung gemäß **Fig. 28** bis **32** in einer zweiten Schaltrelativstellung mit Getriebe in Stellung "P";
- **Fig. 39**: in einer **Fig. 37** und **38** entsprechenden Darstellung Kulissenanordnung und Anschlagelemente der Sperreinrichtung gemäß **Fig. 28** bis **32** in einer dritten Schaltrelativstellung mit Getriebe in Stellung "P";
- **Fig. 40**: in einer **Fig. 37** bis **39** entsprechenden Darstellung Kulissenanordnung und Anschlagelemente der Sperreinrichtung gemäß **Fig. 28** bis **32** in einer vierten Schaltrelativstellung mit Getriebe in Stellung "P";
- **Fig. 41**: in einer **Fig. 37** bis **40** entsprechenden Darstellung Kulissenanordnung und Anschlagelemente der Sperreinrichtung gemäß **Fig. 28** bis **32** in der ersten Schaltrelativstellung mit Getriebe in Stellung "P" und gesperrtem Betätigungselement (Shiftlock);
- **Fig. 42**: in einer **Fig. 37** bis **41** entsprechenden Darstellung Kulissenanordnung und Anschlagelemente der Sperreinrichtung gemäß **Fig. 28** bis **32** in der zweiten Schaltrelativstellung mit Getriebe in Stellung "P" und gesperrtem Betätigungselement (Shiftlock);
- **Fig. 43**: in einer **Fig. 37** bis **42** entsprechenden Darstellung Kulissenanordnung und Anschlagelemente der Sperreinrichtung gemäß **Fig. 28** bis **32** in der dritten Schaltrelativstellung mit Getriebe in Stellung "P" und gesperrtem Betätigungselement (Shiftlock);
- **Fig. 44**: in einer **Fig. 37** bis **43** entsprechenden Darstellung Kulissenanordnung und Anschlagelemente der Sperreinrichtung gemäß **Fig. 28** bis **32** in der vierten Schaltrelativstellung mit Getriebe in Stellung "P" und gesperrtem Betätigungselement (Shiftlock);
- **Fig. 45**: in einer **Fig. 37** bis **44** entsprechenden Darstellung Kulissenanordnung und Anschlagelemente der Sperreinrichtung gemäß **Fig. 28** bis **32** in der dritten Schaltrelativstellung mit Getriebe in Stellung "N" und gesperrtem Betätigungselement (Shiftlock);
- **Fig. 46**: in einer **Fig. 37** bis **45** entsprechenden Darstellung Kulissenanordnung und Anschlagelemente der Sperreinrichtung gemäß **Fig. 28** bis **32** in der vierten Schaltrelativstellung mit Getriebe in Stellung "N" und gesperrtem Betätigungselement (Shiftlock);
- **Fig. 47**: in einer **Fig. 37** bis **46** entsprechenden Darstellung Kulissenanordnung und Anschlagelemente der Sperreinrichtung gemäß **Fig. 28** bis **32** in einer fünften Schaltrelativstellung mit Getriebe in Stellung "N" und gesperrtem Betätigungselement (Shiftlock);
- **Fig. 48**: in einer **Fig. 37** bis **47** entsprechenden Darstellung Kulissenanordnung und Anschlagelemente der Sperreinrichtung gemäß **Fig. 28** bis **32** in einer sechsten Schaltrelativstellung mit Getriebe in Stellung "N" und gesperrtem Betätigungselement (Shiftlock);
- **Fig. 49**: in einer **Fig. 37** bis **48** entsprechenden Darstellung Kulissenanordnung und Anschlagelemente der Sperreinrichtung gemäß **Fig. 28** bis **32** in der vierten Schaltrelativstellung mit Getriebe in Stellung "D" und gesperrtem Rückwärtsgang;
- **Fig. 50**: in einer **Fig. 37** bis **49** entsprechenden Darstellung Kulissenanordnung und Anschlagelemente der Sperreinrichtung gemäß **Fig. 28** bis **32** in der fünften Schaltrelativstellung mit Getriebe in Stellung "D" und gesperrtem Rückwärtsgang;
- **Fig. 51**: in einer **Fig. 37** bis **50** entsprechenden Darstellung Kulissenanordnung und Anschlagelemente der Sperreinrichtung gemäß **Fig. 28** bis **32** in der sechsten Schaltrelativstellung mit Getriebe in Stellung "D" und gesperrtem Rückwärtsgang;
- **Fig. 52**: in einer **Fig. 37** bis **51** entsprechenden Darstellung Kulissenanordnung und Anschlagelemente der Sperreinrichtung gemäß **Fig. 28** bis **32** in einer siebten Schaltrelativstellung mit Getriebe in Stellung "D" und gesperrtem Rückwärtsgang;
- **Fig. 53**: in einer **Fig. 37** bis **52** entsprechenden Darstellung Kulissenanordnung und Anschlagelemente der Sperreinrichtung gemäß **Fig. 28** bis **32** in der dritten Schaltrelativstellung im Sperrzustand bzw. bei Wegfall der Hilfsenergie;
- **Fig. 54**: in einer **Fig. 37** bis **53** entsprechenden Darstellung Kulissenanordnung und Anschlagelemente der Sperreinrichtung gemäß **Fig. 28** bis **32** in der vierten Schaltrelativstellung im Sperrzustand bzw. bei Wegfall der Hilfsenergie;
- **Fig. 55**: in einer **Fig. 37** bis **54** entsprechenden Darstellung Kulissenanordnung und Anschlagelemente der Sperreinrichtung gemäß **Fig. 28** bis **32** in der fünften Schaltrelativstellung im Sperrzustand bzw. bei Wegfall der Hilfsenergie; und
- **Fig. 56**: in einer **Fig. 37** bis **55** entsprechenden Darstellung Kulissenanordnung und Anschlagelemente der Sperreinrichtung gemäß **Fig. 28** bis **32** in der sechsten Schaltrelativstellung im Sperrzustand bzw. bei Wegfall der Hilfsenergie.

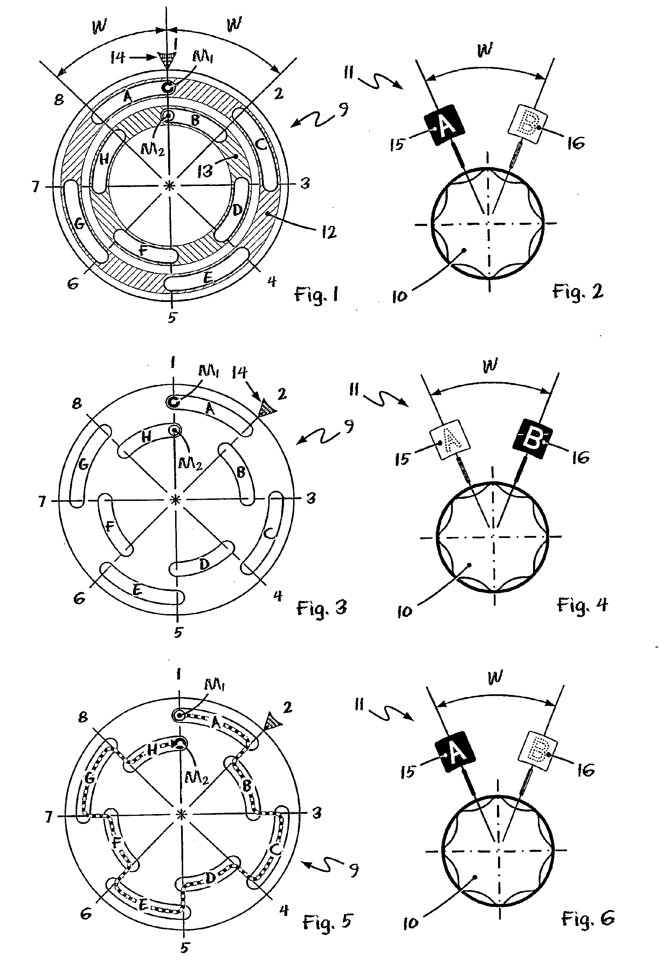

Die **Fig.1** bis **6** zeigen in schematischer Darstellung Kulissenanordnung 9 und Anschlagelemente M1, M2 (**Fig.1, 3** und **5**) der Sperreinrichtung sowie das zugehörige Betätigungselement 10 mit Anzeigeeinrichtung 11 (**Fig. 2, 4** und **6**) einer ersten Ausführungsform einer erfindungsgemäßen Betätigungseinrichtung in unterschiedlichen Schaltstellungen.

Man erkennt anhand der Darstellung des Betätigungselements 10 in den **Fig. 2, 4** und **6** zunächst einmal das als rotationssymmetrischer Drehschalter 10 mit Fingermulden ausgebildete Betätigungselement, das zur Steuerung eines nicht dargestellten technischen Systems dient. Lediglich der einfachen Veranschaulichung halber sei hier wieder angenommen, dass der dargestellte Drehschalter 10 zum Ein- und Ausschalten eines Scheibenwischers dienen soll.

Der Drehschalter 10 befindet sich dabei auf derselben Drehachse wie die in den **Fig. 1, 3** und **5** dargestellte Kulissenscheibe 9 und ist mit dieser drehfest verbunden. Die beiden Anschlagbolzen M1, M2 gemäß **Fig.1, 3** und **5****,** bzw. deren elektromagnetische Antriebe, sind hingegen mit einem - hier nicht dargestellten - Gehäuse der Betätigungseinrichtung verbunden. Die Kulissenscheibe 9 umfasst eine Kulissenanordnung 9 aus acht Kulissensegmenten A bis H, wobei die acht Kulissensegmente A bis H auf zwei Külissenbereiche 12, 13 verteilt angeordnet sind. Jedem der beiden Kulissenbereiche 12, 13 ist dabei ein kreisringförmiger Flächenbereich - in **Fig. 1** schraffiert unterlegt - auf der Kulissenscheibe 9 zugeordnet. Somit sind dem (äußeren) Kulissenbereich 12 sowohl die Kulissensegmente A, C, E und G als auch der Anschlagbolzen M1 zugeordnet, während dem (inneren) Kulissenbereich 13 die Kulissensegmente B, D, F und H und der Anschlagbolzen M2 zugeordnet sind.

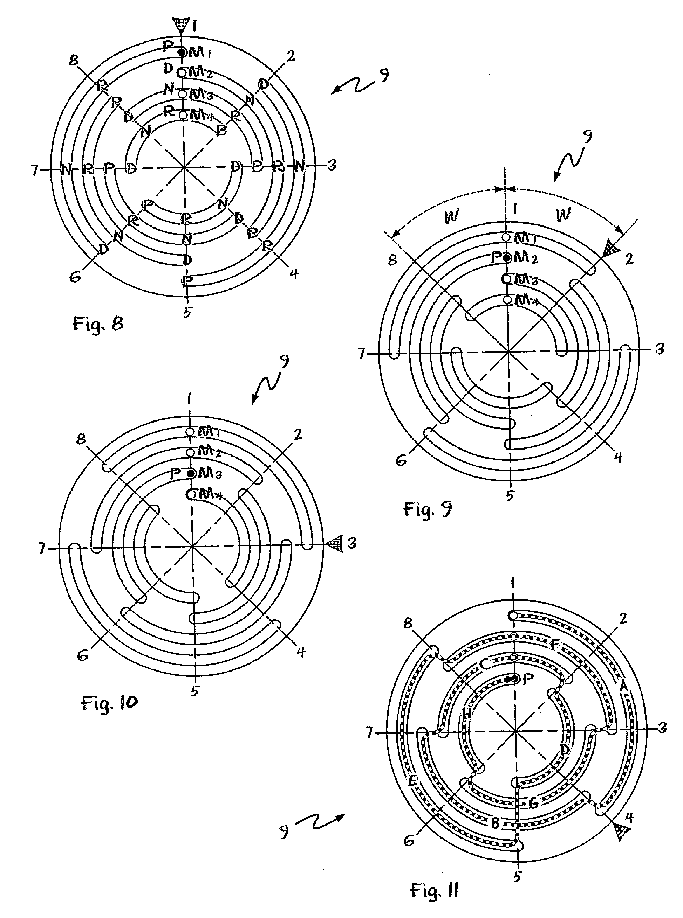

Das in den **Fig. 1, 3** und 5 wie auch in den **Fig. 8** bis **27** und **37** bis **56** am Außenumfang der Kulissenscheibe 9 angeordnete Pfeilsymbol 14 ist kein Element der Betätigungseinrichtung, sondern dient lediglich der Kennzeichnung und leichteren Erfassung der jeweiligen Winkelstellung der Kulissenscheibe 9 in den unterschiedlichen Schaltpositionen.

Die prinzipielle Funktion der erfindungsgemäßen Betätigungseinrichtung soll im Folgenden anhand der **Fig. 1** bis **6** erläutert werden.

Im Zustand gemäß **Fig.1** und **2** sei das zu steuernde System, im vorliegenden Beispielfall somit der Scheibenwischermotor, ausgeschaltet. Man erkennt in **Fig. 1****,** dass der Anschlagbolzen M1 aktiviert bzw. senkrecht zur Zeichnungsebene ausgefahren ist (symbolisiert durch die schwarz ausgefüllte Darstellung des Anschlagbolzens M1), der Anschlagbolzens M1 somit also in das Kulissensegment A eingreift. Der zweite Anschlagbolzen M₂ ist in der Darstellung gemäß **Fig.1** hingegen deaktiviert bzw. senkrecht zur Zeichnungsebene zurückgezogen, und greift daher nicht in das zugehörige Kulissensegment B ein.

Dies bedeutet mit anderen Worten, dass Kulissenscheibe 9 und Anschlagbolzen M1 gemäß der Darstellung in **Fig. 1** dergestalt interagieren, dass sich die Kulissenscheibe 9 und somit auch der Drehschalter 10 aufgrund des aktivierten Anschlagbolzens M₁ momentan am Linksanschlag befinden und somit nur um den Betrag des Schaltwinkels W nach rechts im Uhrzeigersinn gedreht werden können. Durch Rechtsdrehen des Drehschalters 10 und der damit verbundenen Kulissenscheibe 9 um den Betrag des Schaltwinkels W ergibt sich sodann die Darstellung gemäß **Fig. 3** bzw. **4.**

Gemäß **Fig.1** und 2 befindet sich der Drehschalter 10 anhand der mit dem Drehschalter 10 verbundenen Kulissenscheibe 9 sowie anhand des aktivierten Anschlagbolzens M₁ mechanisch an seinem linken Anschlag, vorliegend also entsprechend der "Aus"-Stellung des Scheibenwischermotors. Nun soll der Scheibenwischer durch den Bediener bzw. Fahrer manuell eingeschaltet werden. Das manuelle Einschalten des Scheibenwischers erfolgt durch rechtsgerichtetes Drehen am Drehschalter 10 bis zur Anlage des linken Endes des Kulissensegments A am Anschlagbolzen M₁, vgl. **Fig. 3****.** Die Bewegung des Drehschalters 10 wird dabei durch eine geeignete Sensorik registriert. Die Steuerelektronik schaltet sodann den Scheibenwischermotor ein.

Stellt nun jedoch beispielsweise der Fahrer den Motor und die Zündung ab, und verlässt das Fahrzeug, so wird dadurch zunächst auch der Scheibenwischer stillgesetzt. Um bei der späteren Weiterfahrt bzw. beim nächsten Start des Fahrzeugs ein unerwartetes und zumeist unerwünschtes Wiederanspringen des Scheibenwischers zu verhindern, stellt jedoch die Steuerelektronik den Schaltzustand des Scheibenwischers, beispielsweise beim Verlassen und Abschließen des Fahrzeugs, in die Aus-Stellung zurück.

Dies bedeutet jedoch, dass der Betriebszustand des Scheibenwischers nun zunächst nicht mehr mit dem Schaltzustand des Drehschalters 10 übereinstimmt. Vielmehr befindet sich der Drehschalter 10 zunächst nach wie vor in der mechanischen "Ein"-Stellung am rechten Anschlag gemäß **Fig. 3** und **4**. Bei einer konventionellen Betätigungseinrichtung mit diskreten Schaltstellungen könnte der Fahrer in einem solchen Fall den zwischenzeitlich automatisch abgestellten Scheibenwischer somit nicht wie üblich durch Rechtsdrehen am Drehschalter 10 wieder einschalten, da sich der Drehschalter 10 ja nach wie vor am rechten Anschlag, und damit bereits in der mechanischen "Ein"-Stellung befände.

Diese Problematik wird bei der dargestellten Betätigungseinrichtung dadurch gelöst, dass die Steuerelektronik gleichzeitig mit dem automatischen Abstellen des Scheibenwischers, bzw. spätestens beim Beginn der Weiterfahrt, den Aktivierungszustand der Anschlagbolzen M₁ und M₂ vertauscht - ohne dass sich dabei jedoch die absolute Position des Drehschalters 10 verändert hätte. Damit ergibt sich das in Fig. 5 und 6 dargestellte Bild. Sowohl die Position des Drehschalters 10 als auch die Winkelstellung der Kulissenscheibe 9 wurden dabei nicht verändert. Es wurde lediglich der Anschlagbolzen M₁ deaktiviert bzw. zurückgezogen, während gleichzeitig der Anschlagbolzen M₂ aktiviert bzw. ausgefahren wurde.

Ohne ihre Winkelstellungen verändert zu haben, befinden sich somit Kulissenscheibe 9 und Drehschalter 10 nunmehr wieder an ihrem mechanisch korrekten Linksanschlag (siehe Kulissensegment H gemäß **Fig. 5**), und stimmen damit auch wieder mit dem durch die Steuerelektronik selbsttätig veränderten Systemzustand (nämlich mit der automatisch eingelegten Aus-Stellung des Scheibenwischers) überein. Für den Fahrer ergibt sich trotz automatisch abgeschaltetem Scheibenwischer sowie trotz der unveränderten Absolutposition des Drehschalters 10 die gewünschte, intuitiv klare Situation "Scheibenwischer ist aus, Einschalten wie immer durch Drehen am Knopf nach rechts".

Gemäß der Darstellung der **Fig. 2, 4** und **6** umfasst die dargestellte Betätigungseinrichtung zudem eine Einrichtung 11 zur Anzeige des jeweiligen Schaltzustands. Die Anzeigeeinrichtung 11 umfasst beim vorliegenden Ausführungsbeispiel zwei diskrete Anzeigeelemente 15, 16. Dank der Anzeigeeinrichtung 11 wird zusammen mit den zuvor erläuterten Eigenschaften der Betätigungseinrichtung die sichere, intuitive Logik und die unter allen Bedingungen unmittelbar verständliche, leichte Bedienbarkeit eines klassischen Knebelschalters vollständig nachgebildet. Denn zusätzlich zu der mittels Steuerelektronik , Kulissenscheibe 9 und steuerbaren Anschlagbolzen M₁ und M₂ automatisch nachführbaren, vom Bediener taktil erfassbaren Anschlagsposition von Kulissenscheibe 9 bzw. Drehschalter **10,** wird durch die Anzeigeeinrichtung 11 mit den räumlich diskreten Anzeigeelementen 15 und 16 die momentane Schaltstellung des Drehschalters 10 bzw. der tatsächliche Zustand des damit gesteuerten Systems auch visuell eindeutig signalisiert.

Übertragen auf das der Veranschaulichung halber gewählte Beispiel der Betätigung eines Scheibenwischers bedeutet dies in Bezug auf **Fig. 2, 4** und **6****,** dass der Scheibenwischer durch intuitives Rechts- bzw. Linksdrehen mit dem Drehschalter 10 ein- und ausgeschaltet werden kann, wobei sowohl taktil der Anschlag der jeweiligen Kulissensegmente A bzw. B am jeweils aktivierten Anschlagbolzen M₁ bzw. M₂, zudem aber auch noch die visuelle Anzeigeeinrichtung 11, 15, 16 den Betriebszustand des Systems bzw. vorliegend des Scheibenwischers signalisieren. So ist gemäß **Fig.1** und **2** der Scheibenwischer zunächst ausgeschaltet, Drehschalter 10 und Kulissenscheibe 9 befinden sich mechanisch am linken Anschlag (Anschlagbolzen M₁ im Kulissensegment A) und das Anzeigeelement 15 ist aktiviert, beispielsweise mittels einer Leuchtdiode beleuchtet.

Wird nun der Scheibenwischer manuell eingeschaltet, so verändert die Steuerelektronik der Betätigungseinrichtung die Anzeige am Drehschalter 10 dergestalt, dass nunmehr die Situation gemäß **Fig. 4** vorliegt. Der Drehschalter 10 wurde somit um den Betrag des Schaltwinkels W nach rechts gedreht, wobei durch die Steuerelektronik das Anzeigeelement 15 deaktiviert und das Anzeigeelement 16 aktiviert wurde, wobei letzteres somit den momentan in Betrieb befindlichen Scheibenwischer signalisiert.

Wird der noch laufende Scheibenwischer später, beispielsweise beim Abstellen der Zündung, automatisch komplett abgeschaltet, so vertauscht die Steuerelektronik neben dem Aktivierungszustand der Anschlagbolzen M₁ und M₂ auch die Aktivierung der Anzeigeelemente 15 und 16 dergestalt, dass nach dem automatischen Ausschalten des Scheibenwischers wieder Anzeigeelement 15 aktiviert ist, womit sich die Situation gemäß **Fig. 6** einstellt. Die tatsächliche Position jedoch sowohl des Drehschalters 10 als auch der Kulissenscheibe 9 bleibt bei dieser automatischen Anpassung der Betätigungseinrichtung an den Systemzustand unverändert, vgl. **Fig. 3** und **Fig. 5****.**

In **Fig. 5** ist zudem noch mittels der fetten strichlierten Linie der Kuhssengesamtwinkel visualisiert. Man erkennt, dass sich sämtliche Kulissensegmente A bis H zusammengenommen zu einem Winkel von 360° addieren. Auf diese Weise wird es möglich, dass in jeder der auf 360° verteilten, insgesamt acht möglichen Schaltrelativstellungen 1 bis 8 des Drehschalters 10 bzw. Schaltrelativstellungen der Kulissenscheibe 9 stets sowohl der linke Endanschlag eines Kulissensegments als auch der rechte Endanschlag eines anderen Kulissensegments durch jeweils einen der beiden Anschlagbolzen M₁, M₂ besetzt ist. Dies ist die Voraussetzung dafür, dass jede der hier acht möglichen Schaltrelativstellungen 1 bis 8 der Kulissenscheibe 9 jederzeit mittels Aktivierung des entsprechenden Anschlagbolzens entweder als "Drehschalter ist am rechten Anschlag" oder aber "Drehschalter ist am linken Anschlag" definiert werden kann.

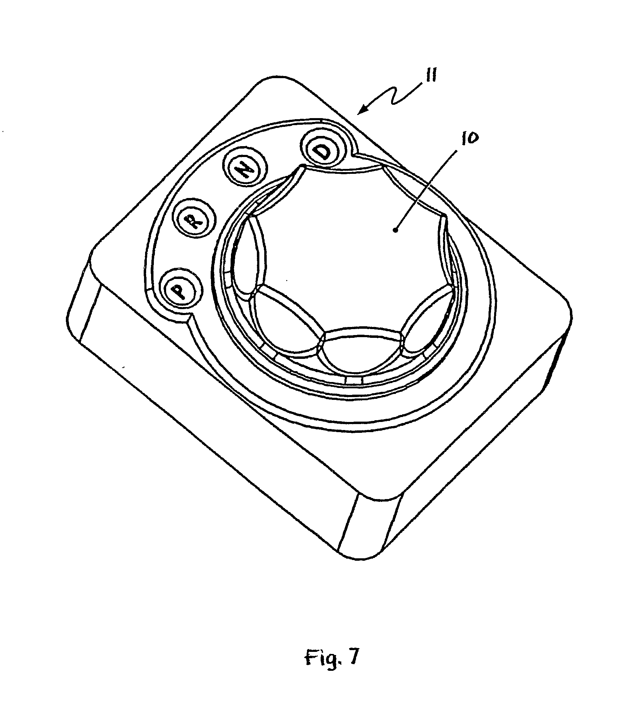

**Fig. 7** zeigt in schematischer isometrischer Darstellung ein Beispiel für eine Betätigungseinrichtung mit Drehschalter 10 und zugeordneter Anzeigeeinrichtung 11. Die Betätigungseinrichtung gemäß **Fig. 7** dient dabei insbesondere der Steuerung eines shift-by-wire-fähigen Schaltgetriebes, beispielsweise des Automatikgetriebes eines Kraftfahrzeugs. Man erkennt anhand der Anzeigeeinrichtung 11, dass die Betätigungseinrichtung gemäß **Fig. 7** im Unterschied zu der Betätigungseinrichtung gemäß **Fig.1** bis **6** nicht nur zwei Schaltstellungen, sondern deren vier aufweist. In Bezug auf die Anwendung am Kraftfahrzeuggetriebe sind die Schaltstellungen der Betätigungseinrichtung gemäß **Fig. 7** in der üblichen Weise mit P (Parksperre), R (Rückwärtsfahrt), N (Neutralstellung, Leerlauf) und D (Drive, Vorwärtsfahrt) bezeichnet.

Auch beim Kraftfahrzeuggetriebe, insbesondere beim Automatikgetriebe, treten Situation auf, in denen sich nicht nur die momentan eingelegte Getriebestufe automatisch verändert, sondern in denen vielmehr sogar der übergeordnete Schaltzustand des Getriebes selbst verändert wird - sprich Situationen, in denen das Getriebe-Steuergerät selbsttätig beispielsweise eine der Schaltstellungen P, R, N oder D einlegt. So besteht beispielsweise die Möglichkeit, dass ein elektronisch gesteuertes, shift-by-wire-fähiges Schaltgetriebe die Position P (Parksperre) automatisch stets dann einlegt, wenn der Zündschlüssel abgezogen wird, oder wenn der Fahrer das Fahrzeug verlässt. Mit einer solchen automatischen Parksperre lässt sich beispielsweise die Gefahr eines unkontrollierten Wegrollens des Kraftfahrzeugs verhindern.

In einem solchen Fall würde sich jedoch das Betätigungselement 10 des Fahrzeuggetriebes, bzw. insbesondere ein vorhandener, konventioneller GetriebeSchalthebel, unverändert in der zuletzt vom Fahrer gewählten Position (beispielsweise "Neutral") befinden, während sich aber das Getriebe tatsächlich in der automatisch eingelegten Stellung "Parksperre" befände.

Bei der Betätigungseinrichtung analog **Fig. 7** erfolgt in einem solchen Fall durch das Steuergerät des Getriebes bzw. der Betätigungseinrichtung automatisch eine Anpassung sowohl der Endanschläge für den Drehschalter 10 mittels Veränderung des Aktivierungszustands der Anschlagbolzen, analog wie anhand **Fig. 1, 3** und **5** beschrieben, als auch eine Anpassung der Anzeige 11 der momentan tatsächlich eingelegten Fahrstufe analog der Beschreibung gemäß **Fig. 2, 4** und **6****.** Da der Drehschalter 10 selbst keinerlei Form- oder Farbmarkierungen aufweist, aus denen auf den Schaltzustand des Getriebes geschlossen werden könnte, kann diese Anpassung der Betätigungseinrichtung erfolgen, ohne dass dabei die Position des Drehschalters 1 selbst verändert werden müsste.

Dadurch befindet sich im Beispielfall der automatisch eingelegten Parksperre der Drehschalter 10 im Anschluss an die automatische Anpassung des Aktivierungszustands der Anschlagbolzen durch das Steuergerät mechanisch korrekt an seinem linken Endanschlag, und es wird durch Aufleuchten des linken Anzeigeelements "P" der tatsächlich vorliegende Schaltzustand des Getriebes zutreffend angezeigt.

Die **Fig. 8** bis **27** zeigen wieder in schematischer Darstellung die Kulissenanordnung 9 sowie die Anschlagbolzen M₁,M₂,M₃ und M₄ einer weiteren Ausführungsform für die Sperreinrichtung einer Betätigungseinrichtung in unterschiedlichen Schaltstellungen. Das Betätigungselement bzw. der Drehschalter 10 der Betätigungseinrichtung gemäß **Fig. 8** bis **27** kann dabei beispielsweise ähnlich wie in der Darstellung von **Fig. 7** ausgeführt sein.

Der Drehschalter analog **Fig. 7** befindet sich dabei wieder auf derselben Drehachse wie die in Kulissenscheibe **9** gemäß **Fig. 8** bis **27****,** wobei der Drehschalter 10 mit der Kulissenscheibe 9 wieder drehfest verbunden ist. Die Kulissenscheibe 9 umfasst bei dieser Ausführungsform eine Kulissenanordnung aus wiederum acht Kulissensegmenten A bis H, wobei die acht Kulissensegmente A bis H diesmal jedoch auf vier verschiedene Kulissenbereiche (umfassend jeweils zwei Kulissensegmente) verteilt angeordnet sind. Jeder der vier Kulissenbereiche ist dabei auf einem eigenen kreisringförmigen Flächenbereich auf der Kulissenscheibe 9 angeordnet. Die Sperreinrichtung umfasst ferner vier Anschlagbolzen M₁, M₂, M₃ und M₄, wobei jedem der Kulissenbereiche ein Anschlagbolzen M₁ bis M₄ zugeordnet ist.

Die Sperreinrichtung gemäß Fig. 8 bis 27 gehört zu einer Betätigungseinrichtung, die analog der in Fig. 7 dargestellten Betätigungseinrichtung vier Schaltstellungen einnehmen kann. Dies bedeutet, dass jeder der vier Schaltstellungen (beispielsweise P, R, N und D eines Automatikgetriebes) ein eigener Kulissenbereich wie auch ein eigener Anschlagbolzen M₁ bis M₄ zugeordnet ist.

Man erkennt in den **Fig. 8** bis **11****,** insbesondere jedoch anhand der in **Fig. 8** hinzugefügten Symbole für die Getriebestufen P, R, N und D, dass die Kulissensegmente so verteilt angeordnet sind, dass für jede der acht möglichen Schaltrelativstellungen 1 bis 8 der Kulissenscheibe 9 die vier Anschlagbolzen M₁, M₂, M₃ und M₄, innerhalb ihrer jeweiligen Kulissensegmente, zusammengenommen stets alle vier Relativpositionen besetzen, die bei der vorliegenden Ausführungsform den Getriebestufen P, R, N und D entsprechen.

Mit anderen Worten gibt es für jede der - hier infolge des Schaltwinkels W = 45°, siehe **Fig. 9** **-** acht möglichen Schaltrelativstellungen 1 bis 8 stets für jede Getriebestufe P, R, N und D jeweils genau einen Anschlagbolzen M₁, M₂, M₃ oder M₄, der die zu dieser Getriebestufe gehörige entsprechende Relativposition innerhalb seines Kulissensegments innehat. Hierdurch kann für jede der acht möglichen Schaltrelativstellungen 1 bis 8 der Kulissenscheibe 9 und damit auch für jede mögliche Schaltrelativstellung des Drehschalters 10 gemäß **Fig. 7** lediglich durch Aktivierung des entsprechenden Anschlagbolzens jederzeit (um)definiert werden, welcher der Getriebestufen P, R, N oder D die aktuelle Position des Drehschalters entsprechen soll.

Man erkennt in **Fig. 8**, dass der Anschlagbolzen M₁ aktiviert bzw. senkrecht zur Zeichnungsebene ausgefahren ist (symbolisiert durch die schwarz ausgefüllte Darstellung des Anschlagbolzens M₁), der Anschlagbolzen M₁ somit also in das Kulissensegment A eingreift (zur Bezeichnung der Kulissensegmente A bis H siehe **Fig. 11**). Die weiteren Anschlagbolzen M₂, M₃ und M₄ sind in der Darstellung gemäß **Fig. 8** hingegen deaktiviert bzw. senkrecht zur Zeichnungsebene zurückgezogen, und greifen daher nicht in das zugehörige Kulissensegment B ein.

**Dies** bedeutet mit anderen Worten, dass Kulissenscheibe 9 und Anschlagbolzen M₁ gemäß der Darstellung in **Fig.1** dergestalt interagieren, dass sich die Kulissenscheibe 9 und somit auch der Drehschalter 10 aufgrund des aktivierten Anschlagbolzens M₁ momentan am Linksanschlag befinden und somit nur nach rechts im Uhrzeigersinn gedreht werden können. Durch Rechtsdrehen des Drehschalters 10 und der damit verbundenen Kulissenscheibe 9 um den Betrag des Schaltwinkels W ergibt sich sodann die Darstellung gemäß **Fig. 9****.**

Die in den **Fig. 8** bis **11** dargestellte Situation entspricht jeweils der eingelegten Getriebestufe P (Parksperre). Diese Situation tritt an der Betätigungseinrichtung insbesondere beim sog. Neustart der Betätigungseinrichtung auf. Die Situation "Neustart" entspricht dabei primär dem Systemzustand von Fahrzeuggetriebe und Betätigungseinrichtung bei Fahrtantritt bzw. beim Einschalten der Zündung des Kraftfahrzeugs. Zuvor, bei noch ausgeschalteter Zündung, befand sich das Fahrzeuggetriebe bezüglich der in **Fig. 8** bis **11** dargestellten Situation, sei es manuell oder automatisch gewählt, in der Getriebestufe P, und behält diese Getriebestufe P beim Einschalten der Zündung zunächst auch bei.

Die Steuerelektronik der Betätigungseinrichtung ermittelt beim Neustart sodann die Schaltrelativstellung des Drehschalters 10 bzw. der Kulissenscheibe 9. Die Kulissenscheibe 9 kann sich dabei faktisch lediglich in einer der in **Fig. 8** bis **11** dargestellten vier Stellungen befinden, da aufgrund des punktsymmetrischen Aufbaus der Kulissenscheibe 9 (Kulissensegment A spiegelbildlich zu Kulissensegment E, Kulissensegment B spiegelbildlich zu Kulissensegment F, Kulissensegment C spiegelbildlich zu Kulissensegment G, Kulissensegment D spiegelbildlich zu Kulissensegment H, siehe **Fig. 11**) die vier in **Fig. 8** bis **11** nicht gezeigten Schaltrelativstellungen 5, 6, 7 und 8 deckungsgleich mit den in **Fig. 8** bis **11** gezeigten Schaltrelativstellungen 1, 2, 3 und 4 sind. In **Fig. 11** ist zudem noch mittels der fetten strichlierten Linie der Kulissengesamtwinkel visualisiert. Man erkennt, dass sich sämtliche Kulissensegmente A bis H bei dieser Ausführungsform zusammengenommen zu einem Winkel von 3 x 360° = 1080° addieren.

Nachdem somit der Steuerelektronik der Betätigungseinrichtung die Schaltrelativstellung der Kulissenscheibe 9 bekannt ist, wird derjenige Anschlagbolzen M₁, M₂, M₃ oder M₄ aktiviert, der in dieser Position der Kulissenscheibe 10 gerade die der Getriebestufe P entsprechende Relativposition (hier: Rechtsanschlag) innerhalb des diesem Anschlagbolzen M₁, M₂, M₃ oder M₄ zugeordneten Kulissensegments einnimmt.

In der Situation gemäß **Fig. 8** befindet sich das Getriebe somit in Getriebestufe P. Der Drehschalter 10 bzw. die Kulissenscheibe 9 befinde sich in der Schaltrelativstellung 1 gemäß **Fig. 8**, da vor dem vorhergehenden Beenden des Systems (z. B. vor dem Ausschalten der Zündung bzw. Verlassen des Fahrzeugs) der Drehschalter in die Schaltrelativstellung 1 gedreht wurde, um die Getriebeposition P zu wählen.

Beim Neustart des Systems (beispielsweise beim Einschalten der Zündung) werden nun die Elektromagnete M₂, M₃ und M₄ mit Spannung beaufschlagt, wodurch die Anschlagbolzen M₂, M₃ und M₄ deaktiviert bzw. eingefahren werden. Damit bildet der einzige nun noch ausgefahrene Anschlagbolzen M₁ des einzigen nun noch ausgeschalteten Elektromagneten den Anschlag für das zum Anschlagbolzen M₁ gehörige Kulissensegment A (zur Zuordnung der Kulissensegmente A bis H siehe **Fig. 11**) auf der Kulissenscheibe. Der Drehschalter kann damit ausschließlich im Uhrzeigersinn gedreht werden, um so die Getriebefahrstufen R, N oder D auszuwählen, während die Schaltrelativstellung 1 in diesem Fall die Getriebeposition P repräsentiert.

In der Situation gemäß **Fig. 9** befindet sich das Getriebe wieder in Getriebestufe P. Der Drehschalter bzw. die Kulissenscheibe befinde sich hier in der Schaltrelativstellung 2, beispielsweise da die zuletzt eingelegte Getriebestufe vor dem Beenden des Systems (z. B. vor dem Ausschalten der Zündung bzw. Verlassen des Fahrzeugs) die Getriebestufe R war. Aus der Getriebestufe R sei das Getriebe nach dem Ausschalten der Zündung sodann selbstständig in die Getriebestufe P gegangen (sog. AutoP-Funktion, automatisches Einlegen der Parksperre).

Beim Neustart des Systems (beispielsweise beim Einschalten der Zündung) werden nun die Elektromagnete M₁, M₃ und M₄ mit Spannung beaufschlagt, wodurch die Anschlagbolzen M₁, M₃ und M₄ deaktiviert bzw. eingefahren werden. Damit bildet der einzige nun noch ausgefahrene Anschlagbolzen M₂ des einzigen nun noch ausgeschalteten Elektromagneten den Anschlag für das zum Anschlagbolzen M₂ gehörige Kulissensegment F auf der Kulissenscheibe (zur Zuordnung der Kulissensegmente A bis H siehe **Fig.11**). Der Drehschalter kann damit wieder ausschließlich im Uhrzeigersinn gedreht werden, um so die Getriebefahrstufen R, N oder D auszuwählen, während die eingelegte Getriebeposition P in diesem Fall durch die Schaltrelativstellung 2 der Kulissenscheibe 9 repräsentiert wird.

In der Situation gemäß **Fig. 10** befindet sich das Getriebe wieder in Getriebestufe P. Der Drehschalter bzw. die Kulissenscheibe befinde sich hier in der Schaltrelativstellung 3, beispielsweise da die zuletzt eingelegte Getriebestufe vor dem Beenden des Systems (z. B. vor dem Ausschalten der Zündung bzw. vor dem Verlassen des Fahrzeugs) die Getriebestufe N war. Aus der Getriebestufe N sei das Getriebe nach dem Ausschalten der Zündung sodann selbstständig in die Getriebestufe P gegangen (AutoP-Funktion, automatisches Einlegen der Parksperre).

Beim Neustart des Systems (beispielsweise beim Einschalten der Zündung) werden nun die Elektromagnete M₁, M₂ und M₄ mit Spannung beaufschlagt, wodurch die Anschlagbolzen M₁, M₂ und M₄ deaktiviert bzw. eingefahren werden. Damit bildet der einzige nun noch ausgefahrene Anschlagbolzen M₃ des einzigen nun noch ausgeschalteten Elektromagneten den Anschlag für das zum Anschlagbolzen M₃ gehörige Kulissensegment C auf der Kulissenscheibe (zur Zuordnung der Kulissensegmente A bis H siehe **Fig.11**). Der Drehschalter kann damit erneut ausschließlich im Uhrzeigersinn gedreht werden, um so die Getriebefahrstufen R, N oder D auszuwählen, während die eingelegte Getriebeposition P in diesem Fall durch die Schaltrelativstellung 3 der Kulissenscheibe 9 repräsentiert wird.

In der Situation gemäß **Fig.11** befindet sich das Getriebe wieder in Getriebestufe P. Der Drehschalter bzw. die Kulissenscheibe befinde sich hier in der Schaltrelativstellung 4, beispielsweise da die zuletzt eingelegte Getriebestufe vor dem Beenden des Systems (z. B. vor dem Ausschalten der Zündung bzw. vor dem Verlassen des Fahrzeugs) die Getriebestufe D war. Aus der Getriebestufe D sei das Getriebe nach dem Ausschalten der Zündung sodann wieder selbstständig in die Getriebestufe P gegangen (AutoP-Funktion, automatisches Einlegen der Parksperre).

Beim Neustart des Systems (beispielsweise beim Einschalten der Zündung) werden nun die Elektromagnete M₁, M₂ und M₃ mit Spannung beaufschlagt, wodurch die Anschlagbolzen M₁, M₂ und M₃ deaktiviert bzw. eingefahren werden. Damit bildet der einzige nun noch ausgefahrene Anschlagbolzen M₄ des einzigen nun noch ausgeschalteten Elektromagneten den Anschlag für das zum Anschlagbolzen M₄ gehörige Kulissensegment H auf der Kulissenscheibe. Der Drehschalter kann damit wieder ausschließlich im Uhrzeigersinn gedreht werden, um so die Getriebefahrstufen R, N oder D auszuwählen, während die eingelegte Getriebeposition P in diesem Fall durch die Schaltrelativstellung 4 der Kulissenscheibe 9 repräsentiert wird.

Die Situationen in den weiteren Schaltrelativstellungen 5, 6, 7 und 8 von Drehschalter bzw. Kulissenscheibe stimmen aufgrund des punktsymmetrischen Aufbaus der Kulissenscheibe 9 (Kulissensegment A spiegelbildlich zu Kulissensegment E, Kulissensegment B spiegelbildlich zu Kulissensegment F, Kulissensegment C spiegelbildlich zu Kulissensegment G, Kulissensegment D spiegelbildlich zu Kulissensegment H, siehe **Fig. 11**) dann wieder deckungsgleich mit der jeweiligen Situation gemäß **Fig. 8, 9, 10** und **11** überein.

Ein Neustart des Systems bzw. Reset der Betätigungseinrichtung kann zudem auch bei eingelegter Getriebeposition R, N oder D erfolgen. Das ist beispielsweise dann der Fall, wenn der anhand entsprechender Drehung am Drehschalter 10 eingegebene Fahrerwunsch durch das Getriebe nicht umgesetzt wurde, beispielsweise wegen einer Störung, eines unzulässigen Betriebszustands oder dergleichen. In einem solchen Fall werden abhängig von der tatsächlichen aktuellen Getriebeposition und der neuen Schaltrelativstellung von Drehschalter 10 bzw. Kulissenscheibe 9 die entsprechenden Anschlagbolzen M₁ bis M₄ aktiviert bzw. deaktiviert, so dass die Relativstellung der Kulissenscheibe 9 und des aktivierten Anschlagbolzens wieder mit dem tatsächlichen Getriebezustand übereinstimmt.

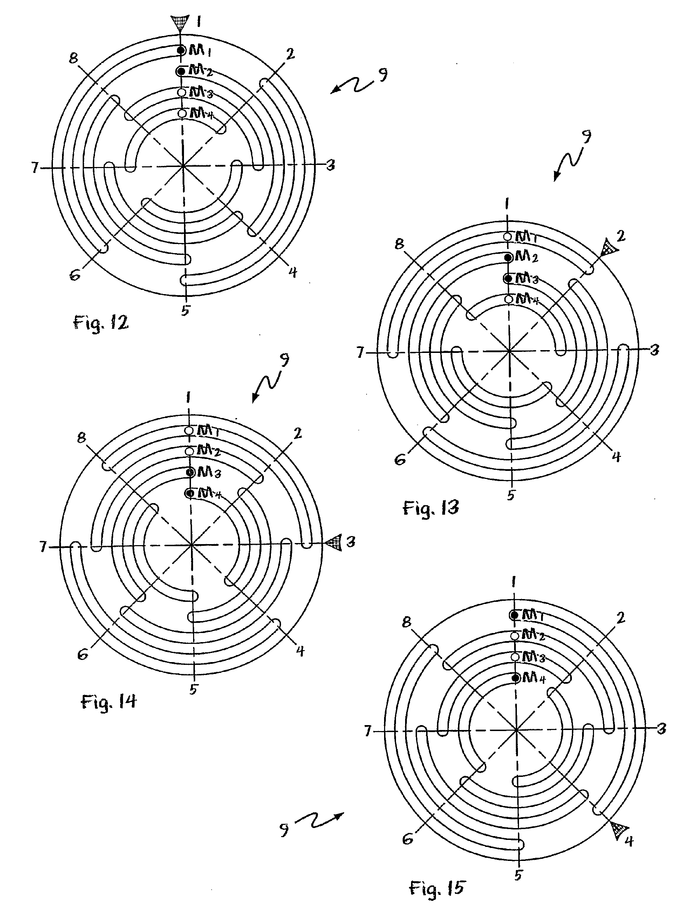

Die **Fig. 12** bis **15** betreffen die sog. "Shiftlock"-Funktion in Getriebestufe P. Um zu vermeiden, dass sich das Fahrzeug unbeabsichtigt oder unkontrolliert in Bewegung setzt, können aus der Getriebeposition P (Parksperre) Fahrstufen nur dann eingelegt werden, wenn der Fahrer den Fuß auf der Bremse hat. Daher ist der Drehschalter bei eingelegter Getriebeposition P im Sinne der Shiftlock-Funktion aus Sicherheitsgründen solange gesperrt, bis der Fahrer die Betriebsbremse betätigt. In diesem Fall ergeben sich bezüglich der möglichen Relativstellung zwischen Kulissenscheibe 9 und den Anschlagbolzen M₁ bis M₄ die Situationen gemäß **Fig. 12** bis **15**.

In der Situation gemäß **Fig. 12** befindet sich das Getriebe wieder in Getriebestufe P. Der Drehschalter bzw. die Kulissenscheibe befinde sich bei eingeschalteter Zündung hier in der Schaltrelativstellung 1. Es werden nun lediglich die Elektromagnete M₃ und M₄ (oder keiner der Elektromagnete) mit Spannung beaufschlagt, wodurch einerseits der ausgefahrene Anschlagbolzen M₁ zusammen mit Kulissensegment A (zur Zuordnung der Kulissensegmente A bis H siehe **Fig. 11**) den Linksanschlag des Drehschalters 10 gemäß Schaltposition P bildet, und andererseits der Anschlagbolzen M₂ ein Herausschalten aus Schaltposition P verhindert, bzw. zusammen mit Anschlagbolzen M₂ den Drehschalter komplett sperrt. Erst wenn die Betriebsbremse getreten wird, wird durch die Steuerelektronik auch M₂ (bzw. ggf. M₂ bis M₄) mit Spannung beaufschlagt, so dass aus P herausgeschaltet werden kann. Es ergibt sich in diesem Fall die Situation gemäß **Fig. 8**

In der Situation gemäß **Fig. 13** befindet sich das Getriebe wieder in Getriebestufe P. Der Drehschalter bzw. die Kulissenscheibe befinde sich bei eingeschalteter Zündung hier in der Schaltrelativstellung 2. Es werden nun lediglich die Elektromagnete M₁ und M₄ (oder keiner der Elektromagnete) mit Spannung beaufschlagt, wodurch einerseits der ausgefahrene Anschlagbolzen M₂ zusammen mit Kulissensegment F (zur Zuordnung der Kulissensegmente A bis H siehe **Fig. 11**) den Linksanschlag des Drehschalters 10 gemäß Schaltposition P bildet, und andererseits der Anschlagbolzen M₃ ein Herausschalten aus Schaltposition P verhindert, bzw. zusammen mit Anschlagbolzen M₂ den Drehschalter komplett sperrt. Erst wenn die Betriebsbremse getreten wird, wird durch die Steuerelektronik auch M₃ (neben M₁ und M₄) mit Spannung beaufschlagt, so dass aus P herausgeschaltet werden kann. Es ergibt sich in diesem Fall die Situation gemäß **Fig. 9**

In der Situation gemäß **Fig. 14** befindet sich das Getriebe wieder in Getriebestufe P. Der Drehschalter bzw. die Kulissenscheibe befinde sich bei eingeschalteter Zündung in der Schaltrelativstellung 3. Es werden die Elektromagnete M₁ und M₂ (oder keiner der Elektromagnete) mit Spannung beaufschlagt, wodurch einerseits der ausgefahrene Anschlagbolzen M₃ zusammen mit Kulissensegment C (zur Zuordnung der Kulissensegmente A bis H siehe **Fig.11**) den Linksanschlag des Drehschalters 10 gemäß Schaltposition P bildet, und andererseits der Anschlagbolzen M₄ ein Herausschalten aus Schaltposition P verhindert, bzw. zusammen mit Anschlagbolzen M₃ den Drehschalter komplett sperrt. Erst wenn die Betriebsbremse getreten wird, wird durch die Steuerelektronik auch M₄ (neben M₁ und M₂) mit Spannung beaufschlagt, so dass aus P herausgeschaltet werden kann. Es ergibt sich in diesem Fall die Situation gemäß **Fig. 10**

In der Situation gemäß **Fig. 15** befindet sich das Getriebe wieder in Getriebestufe P. Der Drehschalter bzw. die Kulissenscheibe befinde sich bei eingeschalteter Zündung in der Schaltrelativstellung 4. Es werden lediglich die Elektromagnete M₂ und M₃ (oder keiner der Elektromagnete) mit Spannung beaufschlagt, wodurch einerseits der ausgefahrene Anschlagbolzen M₄ zusammen mit Kulissensegment H (zur Zuordnung der Kulissensegmente A bis H siehe **Fig.11**) den Linksanschlag des Drehschalters 10 gemäß Schaltposition P bildet, und andererseits der Anschlagbolzen M₁ ein Herausschalten aus Schaltposition P verhindert, bzw. zusammen mit Anschlagbolzen M₄ den Drehschalter komplett sperrt. Erst wenn die Betriebsbremse getreten wird, wird durch die Steuerelektronik auch M₁ (neben M₂ und M₃) mit Spannung beaufschlagt, so dass aus P herausgeschaltet werden kann. Es ergibt sich in diesem Fall die Situation gemäß **Fig. 11****.**

Die Situationen in den weiteren Schaltrelativstellungen 5, 6, 7 und 8 von Drehschalter 10 bzw. Kulissenscheibe 9 stimmen aufgrund des punktsymmetrischen Aufbaus der Kulissenscheibe 9 (Kulissensegment A spiegelbildlich zu Kulissensegment E, Kulissensegment B spiegelbildlich zu Kulissensegment F, Kulissensegment C spiegelbildlich zu Kulissensegment G, Kulissensegment D spiegelbildlich zu Kulissensegment H, siehe **Fig.11**) wieder deckungsgleich mit der jeweiligen Situation gemäß **Fig.12, 13, 14** und **15** überein.

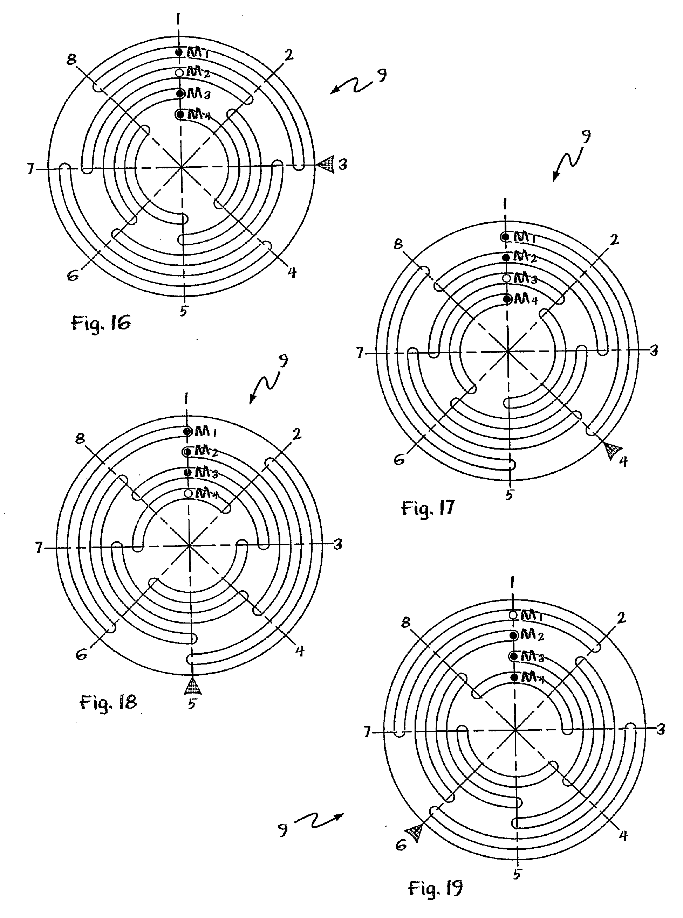

Die **Fig. 16** bis **19** betreffen ebenfalls eine Shiftlock-Funktion, hier jedoch bezüglich der Getriebestufe N. Um zu vermeiden, dass sich das Fahrzeug unbeabsichtigt oder unkontrolliert in Bewegung setzt, können aus der Getriebeposition N (Neutral bzw. Getriebeleerlauf) Fahrstufen nur dann eingelegt werden, wenn der Fahrer den Fuß auf der Bremse hat. Daher ist der Drehschalter 10 bei eingelegter Getriebeposition N im Sinne der Shiftlock-Funktion aus Sicherheitsgründen solange gesperrt, bis der Fahrer die Betriebsbremse betätigt. In diesem Fall ergeben sich bezüglich der möglichen Relativstellung zwischen Kulissenscheibe 9 und Anschlagbolzen M₁ bis M₄ die Situationen gemäß **Fig. 16** bis **19****.**

In der Situation gemäß **Fig. 16** befindet sich das Getriebe in Getriebestufe N. Der Drehschalter bzw. die Kulissenscheibe befinde sich bei eingeschalteter Zündung in der Schaltrelativstellung 3. Es wird lediglich der Elektromagnet M₂ (oder keiner der Elektromagnete) mit Spannung beaufschlagt, wodurch einerseits der ausgefahrene Anschlagbolzen M₁ zusammen mit Kulissensegment F (zur Zuordnung der Kulissensegmente A bis H siehe **Fig. 11**) die Relativwinkelstellung des Drehschalters 10 gemäß Schaltposition N abbildet, und andererseits die Anschlagbolzen M₃ und M₄ ein Herausschalten aus Schaltposition N verhindern bzw. den Drehschalter komplett sperren. Erst wenn die Betriebsbremse getreten wird, werden durch die Steuerelektronik auch M₃ und M₄ (neben M₂) mit Spannung beaufschlagt, so dass aus N herausgeschaltet werden kann.

In der Situation gemäß **Fig. 17** befindet sich das Getriebe bei eingeschalteter Zündung wieder in Getriebestufe N. Der Drehschalter bzw. die Kulissenscheibe befinde sich in der Schaltrelativstellung 4. Es wird lediglich der Elektromagnet M₃ (oder keiner der Elektromagnete) mit Spannung beaufschlagt, wodurch einerseits der ausgefahrene Anschlagbolzen M₂ zusammen mit Kulissensegment C (zur Zuordnung der Kulissensegmente A bis H siehe **Fig. 11**) die Relativwinkelstellung des Drehschalters 10 gemäß Schaltposition N abbildet, und andererseits die Anschlagbolzen M₁ und M₄ ein Herausschalten aus Schaltposition N verhindern bzw. den Drehschalter komplett sperren. Erst wenn die Betriebsbremse getreten wird, werden durch die Steuerelektronik auch M₁ und M₄ (neben M₃) mit Spannung beaufschlagt, so dass aus N herausgeschaltet werden kann.

In der Situation gemäß **Fig. 18** befindet sich das Getriebe bei eingeschalteter Zündung wieder in Getriebestufe N. Der Drehschalter bzw. die Kulissenscheibe befinde sich in der Schaltrelativstellung 5. Es wird lediglich der Elektromagnet M₄ (oder keiner der Elektromagnete) mit Spannung beaufschlagt, wodurch einerseits der ausgefahrene Anschlagbolzen M₃ zusammen mit Kulissensegment C (zur Zuordnung der Kulissensegmente A bis H siehe **Fig. 11**) die Relativwinkelstellung des Drehschalters 10 gemäß Schaltposition N abbildet, und andererseits die Anschlagbolzen M₁ und M₂ ein Herausschalten aus Schaltposition N verhindern, bzw. den Drehschalter komplett sperren. Erst wenn die Betriebsbremse getreten wird, werden durch die Steuerelektronik auch M₁ und M₂ (neben M₄) mit Spannung beaufschlagt, wonach die Blockierung des Drehschalters aufgehoben wird und aus N herausgeschaltet werden kann.

In der Situation gemäß **Fig. 19** befindet sich das Getriebe bei eingeschalteter Zündung wieder in Getriebestufe N. Der Drehschalter bzw. die Kulissenscheibe befinde sich in der Schaltrelativstellung 6. Es wird lediglich der Elektromagnet M₁ (oder keiner der Elektromagnete) mit Spannung beaufschlagt, wodurch einerseits der ausgefahrene Anschlagbolzen M₄ zusammen mit Kulissensegment H (zur Zuordnung der Kulissensegmente A bis H siehe **Fig. 11**) die Relativwinkelstellung des Drehschalters 10 gemäß Schaltposition N abbildet, und andererseits die Anschlagbolzen M₂ und M₃ ein Herausschalten aus Schaltposition N verhindern, bzw. den Drehschalter komplett sperren. Erst wenn die Betriebsbremse getreten wird, werden durch die Steuerelektronik auch M₂ und M₃ (neben M₁) mit Spannung beaufschlagt, wodurch die Blockierung des Drehschalters aufgehoben wird und aus N herausgeschaltet werden kann.

Die Situationen in den weiteren Schaltrelativstellungen 7 und 8 sowie 1 und 2 des Drehschalters 10 bzw. der Kulissenscheibe 9 stimmen aufgrund des punktsymmetrischen Aufbaus der Kulissenscheibe 9 (Kulissensegment A spiegelbildlich zu Kulissensegment E, Kulissensegment B spiegelbildlich zu Kulissensegment F, Kulissensegment C spiegelbildlich zu Kulissensegment G, Kuhssensegment D spiegelbildlich zu Kulissensegment H, siehe **Fig. 11**) dann wieder deckungsgleich mit der jeweiligen Situation gemäß **Fig. 16, 17, 18** und **19** überein.

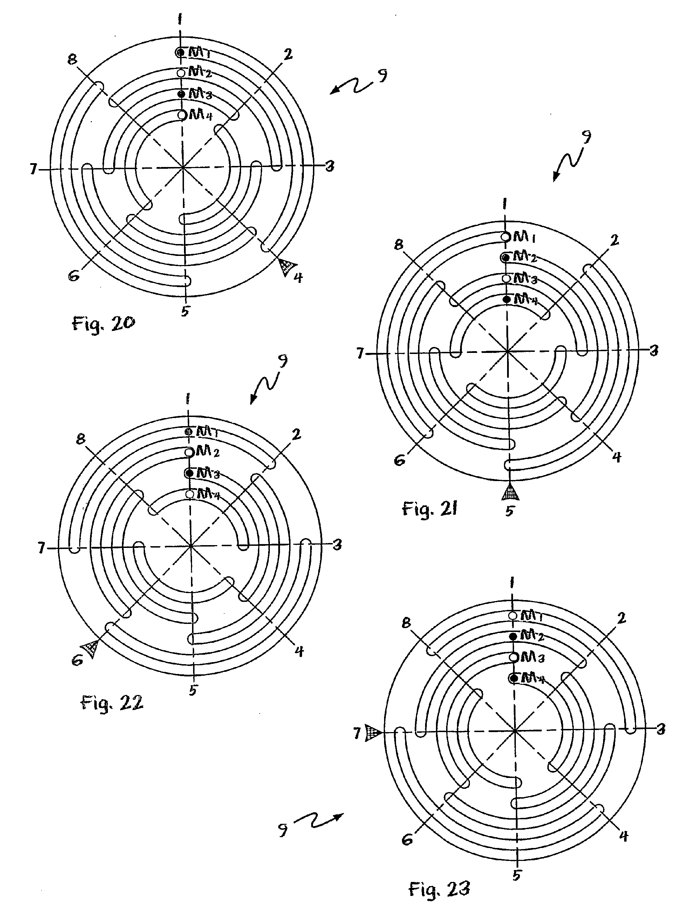

Die **Fig. 20** bis **23** betreffen die sog. "Rückwärtsgang-Sperre". Um zu vermeiden, dass bei einer Vorwärtsfahrgeschwindigkeit oberhalb einer bestimmten Grenzgeschwindigkeit, beispielsweise oberhalb von 5 km/h, die Getriebestufe R (Rückwärtsgang) eingelegt wird, wodurch der Antriebsstrang beschädigt werden kann, lässt sich die Fahrstufe R nur dann einlegen, wenn sich das Fahrzeug langsamer als die festgelegte Grenzgeschwindigkeit vorwärts bewegt. Daher wird die Schaltstellung R am Drehschalter aus Sicherheitsgründen solange gesperrt, wie sich das Fahrzeug schneller als mit der Grenzgeschwindigkeit vorwärts bewegt. In diesem Fall ergeben sich bezüglich den möglichen Relativstellungen zwischen Kulissenscheibe 9 und Anschlagbolzen M₁ bis M₄ die Situationen gemäß **Fig. 20** bis **23****.**

In der Situation gemäß **Fig. 20** befinde sich das Getriebe bei Vorwärtsfahrt des Fahrzeugs mit einer Geschwindigkeit oberhalb der Rückwärtsgangsperren-Grenzgeschwindigkeit in Getriebestufe D. Der Drehschalter bzw. die Kulissenscheibe befinde sich in der Schaltrelativstellung 4. Es werden die Elektromagnete M₂ und M₄ mit Spannung beaufschlagt, wodurch einerseits der ausgefahrene Anschlagbolzen M₁ zusammen mit Kulissensegment A (zur Zuordnung der Kulissensegmente A bis H siehe **Fig. 11**) die Relativwinkelstellung des Drehschalters 10 gemäß Schaltposition D abbildet, und andererseits der Anschlagbolzen M₃ das Einlegen der Schaltposition R verhindert. Erst wenn die Vorwärtsfahrgeschwindigkeit kleiner wird als die Grenzgeschwindigkeit der Rückwärtsgangsperre, wird durch die Steuerelektronik zusätzlich M₃ mit Spannung beaufschlagt, wodurch die zuvor bestandene Einschränkung des Drehwinkelbereichs des Drehschalters 10 auf lediglich die Positionen D und N wieder aufgehoben wird. Es kann somit nunmehr der Rückwärtsgang (wie auch die Parksperre) eingelegt werden.

In der Situation gemäß **Fig. 21** befindet sich das Getriebe bei Vorwärtsfahrt des Fahrzeugs mit einer Geschwindigkeit oberhalb der Rückwärtsgangsperren-Grenzgeschwindigkeit wieder in Getriebestufe D. Der Drehschalter bzw. die Kulissenscheibe befinde sich in der Schaltrelativstellung 5. Es werden die Elektromagnete M₁ und M₃ mit Spannung beaufschlagt, wodurch einerseits der ausgefahrene Anschlagbolzen M₂ zusammen mit Kulissensegment F (zur Zuordnung der Kulissensegmente A bis H siehe **Fig.11**) die Relativwinkelstellung des Drehschalters 10 gemäß Schaltposition D abbildet, und andererseits der Anschlagbolzen M₄ das Einlegen des Rückwärtsganges verhindert. Erst wenn die Vorwärtsfahrgeschwindigkeit kleiner wird als die Grenzgeschwindigkeit der Rückwärtsgangsperre, so wird durch die Steuerelektronik zusätzlich M₄ mit Spannung beaufschlagt, wodurch die zuvor bestandene Einschränkung des Drehwinkelbereichs des Drehschalters 10 auf lediglich die Positionen D und N wieder aufgehoben wird. Es kann somit nunmehr der Rückwärtsgang (wie auch die Parksperre) wieder eingelegt werden.

In der Situation gemäß **Fig. 22** befindet sich das Getriebe bei Vorwärtsfahrt des Fahrzeugs mit einer Geschwindigkeit oberhalb der Rückwärtsgangsperren-Grenzgeschwindigkeit wieder in Getriebestufe D. Der Drehschalter bzw. die Kulissenscheibe befinde sich in der Schaltrelativstellung 6. Es werden die Elektromagnete M₂ und M₄ mit Spannung beaufschlagt, wodurch einerseits der ausgefahrene Anschlagbolzen M₃ zusammen mit Kulissensegment C (zur Zuordnung **der** Kulissensegmente A bis H siehe **Fig.11**) die Relativwinkelstellung des Drehschalters 10 gemäß Schaltposition D abbildet, und andererseits der Anschlagbolzen M₁ das Einlegen des Rückwärtsganges verhindert. Erst wenn die Vorwärtsfahrgeschwindigkeit kleiner wird als die Grenzgeschwindigkeit der Rückwärtsgangsperre, wird durch die Steuerelektronik zusätzlich M₁ mit Spannung beaufschlagt, wodurch die zuvor bestandene Einschränkung des Drehwinkelbereichs des Drehschalters 10 auf lediglich die Positionen D und N wieder aufgehoben wird. Es kann somit nunmehr der Rückwärtsgang (wie auch die Parksperre) wieder eingelegt werden.

In der Situation gemäß **Fig. 23** befindet sich das Getriebe bei Vorwärtsfahrt des Fahrzeugs mit einer Geschwindigkeit oberhalb der Rückwärtsgangsperren-Grenzgeschwindigkeit wieder in Getriebestufe D. Der Drehschalter bzw. die Kulissenscheibe befinde sich in der Schaltrelativstellung 7. Es werden die Elektromagnete M₁ und M₃ mit Spannung beaufschlagt, wodurch einerseits der ausgefahrene Anschlagbolzen M₄ zusammen mit Kulissensegment H (zur Zuordnung der Kulissensegmente A bis H siehe **Fig.11**) die Relativwinkelstellung des Drehschalters 10 gemäß Schaltposition D abbildet, und andererseits der Anschlagbolzen M₂ das Einlegen des Rückwärtsganges verhindert. Erst wenn die Vorwärtsfahrgeschwindigkeit kleiner wird als die Grenzgeschwindigkeit der Rückwärtsgangsperre, wird durch die Steuerelektronik zusätzlich M₂ mit Spannung beaufschlagt, wodurch die zuvor bestandene Einschränkung des Drehwinkelbereichs des Drehschalters auf die Positionen D und N aufgehoben wird. Nun lässt sich somit der Rückwärtsgang (wie auch die Parksperre) einlegen.

Die Situationen in den weiteren Schaltrelativstellungen 8 sowie 1, 2 und 3 des Drehschalters 10 bzw. der Kulissenscheibe 9 stimmen aufgrund des punktsymmetrischen Aufbaus der Kulissenscheibe 9 (Kulissensegment A **spiegelbildlich** zu Kulissensegment E, Kulissensegment B spiegelbildlich zu Kulissensegment F, Kulissensegment C spiegelbildlich zu Kulissensegment G, Kulissensegment D spiegelbildlich zu Kulissensegment H, siehe **Fig.11**) dann wieder deckungsgleich mit der jeweiligen Situation gemäß **Fig. 20, 21, 22** und **23** überein.

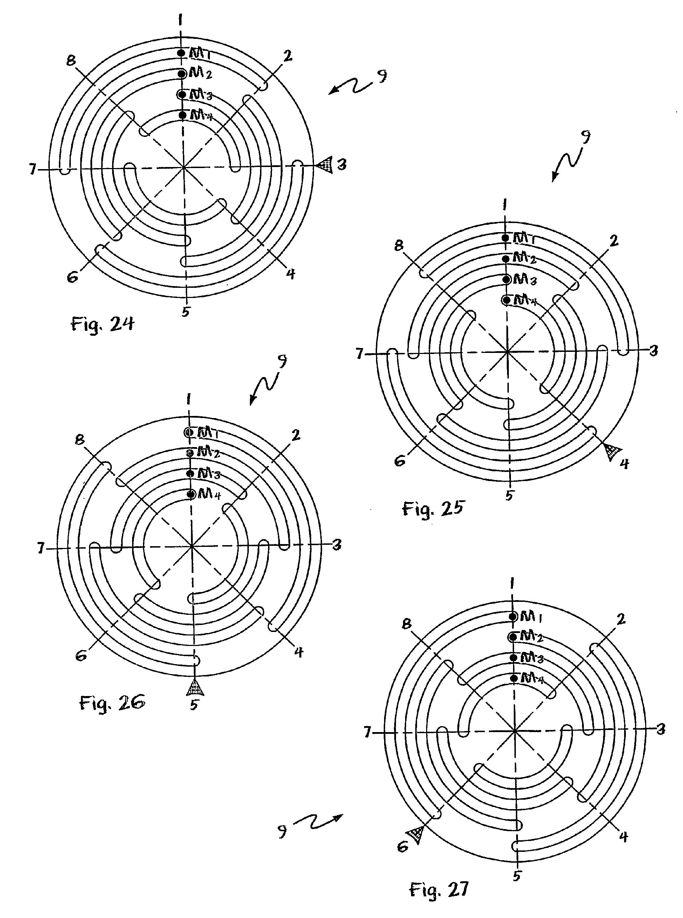

Die **Fig. 24** bis **27** zeigen mögliche Situationen für den Fall der ausgeschalteten Zündung bzw. bei System- oder Stromausfall. In diesen Fällen sind alle Magnete stromlos und damit sämtliche Anschlagbolzen M₁ bis M₄ ausgefahren, so dass der Drehschalter 10 in jedem Fall und in jeder möglichen Schaltrelativstellung 1 bis 8 komplett gesperrt ist.

**Der** Fahrer erhält somit beim Versuch der Getriebebetätigung auch taktil unmittelbar die Information, dass Schaltbefehle derzeit nicht ausgeführt werden können. Ein (nicht dargestelltes) Override-System sorgt dafür, dass bei Ausfall lediglich der Elektromagnete, oder beim Ausfall der Magnetansteuerung, mittels einer mechanischen Entriegelung der Drehschalter 10 im Sinne eines Notbetriebs dennoch betätigt werden kann.

Dabei stimmen die Situationen in den in **Fig. 24** bis **27** nicht dargestellten weiteren Schaltrelativstellungen 7 und 8 sowie 1 und 2 des Drehschalters 10 bzw. der Kulissenscheibe 9 aufgrund des punktsymmetrischen Aufbaus der Kulissenscheibe 9 (Kulissensegment A spiegelbildlich zu Kulissensegment E, Kulissensegment B spiegelbildlich zu Kulissensegment F, Kulissensegment C spiegelbildlich zu Kulissensegment G, Kulissensegment D spiegelbildlich zu Kulissensegment H, siehe **Fig. 11**) wieder deckungsgleich mit der jeweiligen Situation gemäß **Fig. 24, 25, 26** und **27** überein.

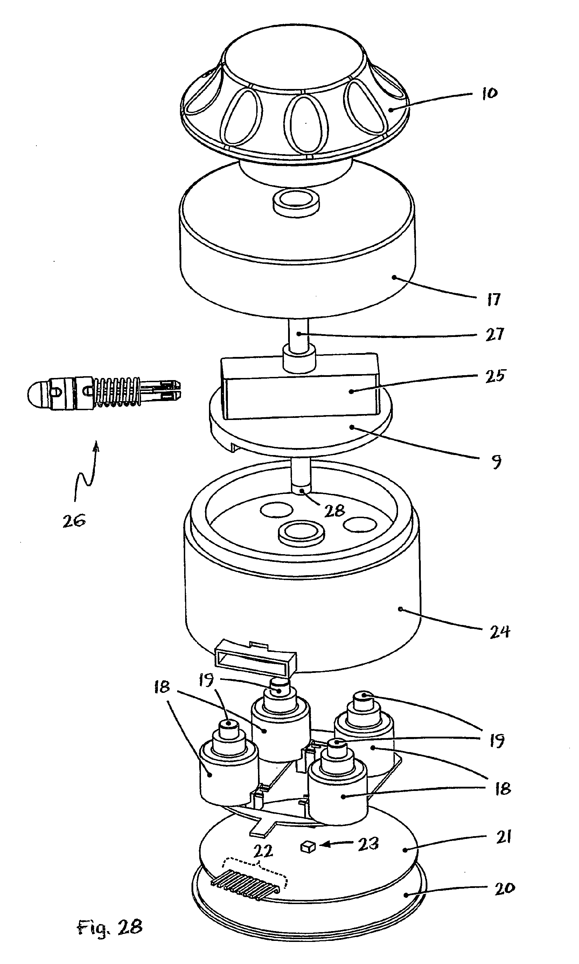

**Fig. 28** zeigt in einer schematischen Explosionsdarstellung eine weitere Ausführungsform einer Betätigungseinrichtung für ein Automatikgetriebe. Man erkennt zunächst einmal den oberhalb eines Gehäuseoberteils 17 angeordneten Drehschalter bzw. Drehknauf 10 der Betätigungseinrichtung. Der für sich genommen unbegrenzt rotierbare Drehknauf 10 ist im Wesentlichen rotationssymmetrisch und erlaubt anhand seiner Formgebung keinen Rückschluss auf seine Schaltrelativstellung. Weiterhin erkennt man in **Fig. 28** eine Magnetanordnung mit vier Elektromagneten 18. Die beweglichen Anker 19 der Elektromagneten 18 bilden gleichzeitig die Anschlagbolzen M₁ bis M₄ der Betätigungseinrichtung. Unterhalb der Magnetanordnung 18 sowie oberhalb des Gehäusebodens 20 befindet sich eine Platine 21, die die hier nicht gezeichnete Steuerungselektronik der Betätigungseinrichtung trägt. Auf der Platine 21 sind ferner die elektrischen Anschlüsse 22 zur Verbindung der Betätigungseinrichtung mit dem Getriebesteuergerät, sowie ein Sensor 23 zur Ermittlung der Schaltrelativstellung von Drehknauf 10 und Kulissenscheibe 9 angeordnet.

Die Kulissenscheibe 9 selbst befindet sich zwischen dem Gehäuseoberteil 17 und dem Gehäuseunterteil 24 und trägt zudem auf ihrer Oberseite das Gehäuse 25 für ein federbeaufschlagtes Rastierelement 26. Die Welle 27, auf der Drehknauf 10 und Kulissenscheibe 9 angeordnet sowie drehfest miteinander verbunden sind, trägt an ihrem unteren Ende einen Permanentmagneten 28, dessen magnetische Achse **senkrecht** zur Welle 27 angeordnet ist. Das Magnetfeld des Permanentmagneten 28 wirkt auf den Drehwinkelsensor 23, womit die Steuerelektronik der Betätigungseinrichtung die Schaltrelativstellung von Drehknauf 10 bzw. Kulissenscheibe 9 jederzeit ermitteln kann.

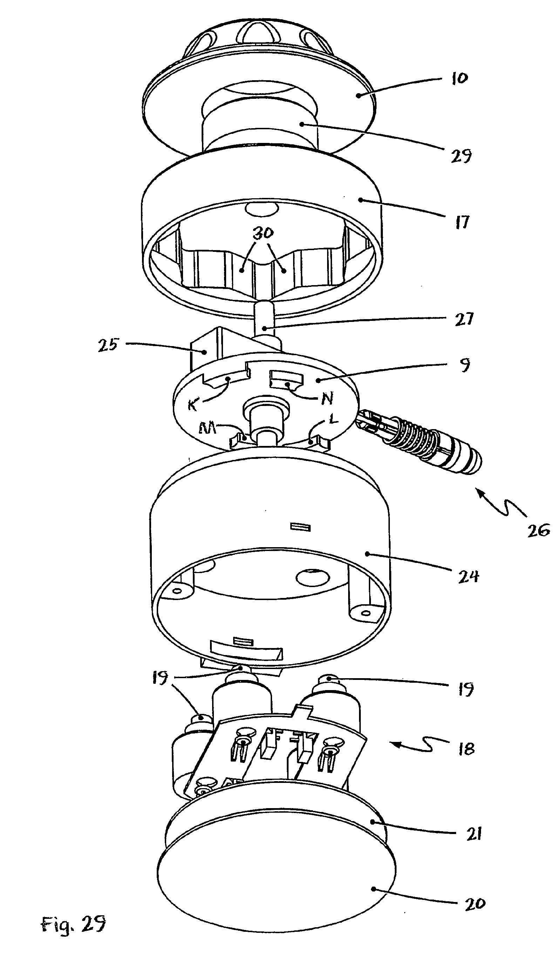

**Fig. 29** zeigt in einer **Fig. 28** entsprechenden Darstellung die Betätigungseinrichtung gemäß **Fig. 28** in der Untersicht. Man erkennt von unten nach oben wieder Gehäuseboden 20, Steuerplatine 21, Elektromagnetanordnung 18 mit Ankern 19, Gehäuseunterteil 24, Rastierelement 26, Kulissenscheibe 9, Welle 27, Gehäuseoberteil 17, sowie den auf einem Knaufträger 29 angeordneten Drehknauf 10.

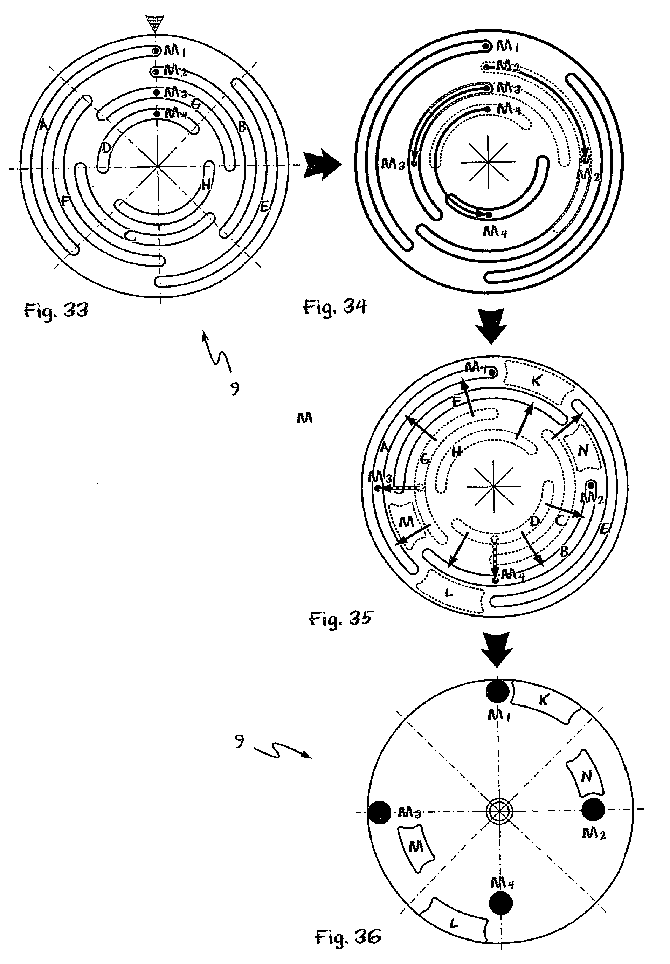

Im Unterschied zu Fig. 28 zeigt Fig. 29 auch die im Gehäuseoberteil angeordnete Rastierkontur 30, die mittels Zusammenwirkens mit dem federbeaufschlagten Rastierelement 26 für ein sicheres Einrasten des Drehknaufs 9 in seinen bei dieser Ausführungsform acht Schaltrelativstellungen, sowie für eine angenehme und deutliche Haptik bei der Bedienung des Drehknaufs 9 sorgt. Ferner erkennt man in Fig. 29 auch die Gestalt der Kulissenscheibe 9 mit den Kulissensegmenten bzw. mit den Kulissenblöcken K, L, M und N; siehe hierzu insbesondere auch **Fig. 33** bis **36****.**

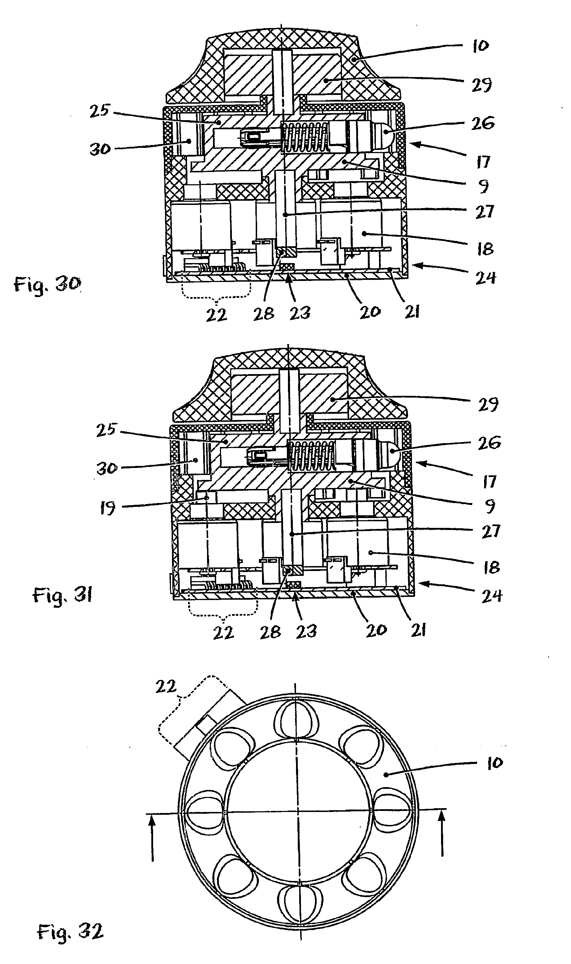

**Fig. 30** und **31** zeigt jeweils einen schematischen Längsschnitt durch die Betätigungseinrichtung gemäß **Fig. 28** und **29****,** entlang der in **Fig. 32** angegebenen Schnittebene. Der Unterschied der Darstellungen gemäß **Fig. 30** und **Fig. 31** besteht darin, dass die Elektromagnete 18 in **Fig. 30** mit Spannung beaufschlagt sind - weshalb sich die Anschlagbolzen bzw. Anker 19 gemäß **Fig. 30** in der deaktivierten bzw. eingefahrenen Stellung befinden. In **Fig. 31** sind die Elektromagnete 18 hingegen stromlos, wodurch die Anschlagbolzen bzw. Anker 19 aktiviert bzw. ausgefahren sind und damit in die Konturen auf der Unterseite der Kulissenscheibe 9 eingreifen. Aus den **Fig. 30** und **31** geht ferner insbesondere auch das Zusammenwirken des Permanentmagneten 28 mit dem im Zusammenbau direkt unterhalb des Permanentmagneten 28 angeordneten Drehwinkelsensors 23, sowie das Zusammenwirken von Rastierelement 26 und Rastierkontur 30 im Gehäuseoberteil 17 hervor.

Die Funktion der Kulissenscheibe der Betätigungseinrichtung gemäß **Fig. 28** bis **31** ist prinzipiell weitestgehend analog zu der Kulissenscheibe gemäß **Fig. 8** bis **27****.** Allerdings sind die Kulissensegmente auf der Kulissenscheibe der Betätigungseinrichtung gemäß **Fig. 28** bis **31****,** gegenüber den Kulissensegmenten der Kulissenscheibe gemäß **Fig. 8** bis **27****,** in einer anderen Weise angeordnet. Der Unterschied in der Anordnung der Kulissensegmente zwischen der Kulissenscheibe der Betätigungseinrichtung gemäß **Fig. 28** bis **31** und der Kulissenscheibe gemäß **Fig. 8** bis **27**, bzw. eine Überführung der Geometrie letzterer Kulissenscheibe in die Geometrie der erstgenannten Kulissenscheibe geht aus der Darstellung der **Fig. 33** bis **36** hervor.

In **Fig. 33** ist die Kulissenscheibe 9 mit den zugehörigen Anschlagbolzen M₁ bis M₄ gemäß **Fig. 8** bis **27** nochmals dargestellt, während **Fig. 36** die Kulissenscheibe 9 und die Anschlagbolzen M₁ bis M₄ der Betätigungseinrichtung gemäß **Fig. 28** bis **31** zeigt. Die **Fig. 34** und **35** zeigen zwei gedankliche Zwischenschritte bei einer Überführung der Geometrie der Kulissenscheibe **9** gemäß **Fig. 33** in die Geometrie der Kulissenscheibe 9 gemäß **Fig. 36****.**

Aus **Fig. 33** geht zunächst noch einmal hervor, dass zu jedem der Anschlagbolzen M₁ bis M₄ jeweils ein auf einem bestimmten radialen Abschnitt angeordneter Kulissenbereich mit jeweils zwei Kulissensegmenten gehört (M₁: Kulissensegmente A und E, M₂: Kulissensegmente B und F, M₃: Kulissensegmente C und G, M₄: Kulissensegmente D und H).

Im ersten Überführungsschritt gemäß **Fig. 34** ist hingegen dargestellt, dass zunächst einmal - für jeden der drei Anschlagbolzen M₂, M₃ und M₄ - sowohl der Anschlagbolzen als auch dessen zugehöriger, jeweils zwei Kulissensegmente umfassender Kulissenbereich gegenüber der Anordnung gemäß **Fig. 33** um einen bestimmten Winkel gegenüber der Kulissenscheibe 9 verdreht angeordnet wird. So wird sowohl der Anschlagbolzen M₂, als auch dessen die Kulissensegmente B und F umfassender Kulissenbereich um 90° gegenüber der Kulissenscheibe 9 gemäß **Fig. 33** im Uhrzeigersinn verdreht angeordnet. Der Anschlagbolzen M₃ sowie dessen die Kulissensegmente C und G umfassender Kulissenbereich wird gegenüber der Kulissenscheibe 9 gemäß **Fig. 33** um 90° im Gegenuhrzeigersinn verdreht angeordnet, während schließlich der Anschlagbolzen M₄ sowie dessen die Kulissensegmente D und H umfassender Kulissenbereich gegenüber der Kulissenscheibe 9 gemäß **Fig. 33** um 180° verdreht angeordnet wird. In der Darstellung gemäß **Fig. 34** ist dabei der besseren Erkennbarkeit für jeden der Kulissenbereiche der Anschlagbolzen M₂, M₃ und M₄ jeweils nur eines der beiden Kulissensegmente dargestellt.

Durch diese Verdrehung der Positionen sowohl der Anschlagbolzen M₂, M₃ und M₄ sowie deren jeweils zugehöriger Kulissensegmente B bis H ergibt sich zunächst einmal die Anordnung der Kulissensegmente gemäß **Fig. 35****.** Man erkennt, dass infolge der Verdrehung gemäß **Fig. 34** nunmehr die beiden inneren Kulissenbereiche mit den Kulissensegmenten C und G sowie D und H bezüglich der von den Kulissensegmenten C und G sowie D und H abgedeckten Winkelbereiche exakt mit den beiden äußeren Kulissenbereichen, umfassend die Kulissensegmente A und E sowie B und F, übereinstimmen.

Dies bedeutet jedoch, dass die beiden inneren Kulissenbereiche mit den Kulissensegmenten C und G sowie D und H potentiell redundant sind und daher mit den beiden äußeren Kulissenbereichen, umfassend die Kulissensegmente A und E sowie B und F, zusammengelegt werden können, wie dies die in **Fig. 35** eingezeichneten Pfeile versinnbildlichen sollen. Auf diese Weise fallen die beiden inneren Kulissenbereiche mit den beiden äußeren Kulissenbereichen deckungsgleich zusammen, während die beiden inneren Anschlagbolzen M₃ und M₄ ebenfalls nach außen verschoben werden, wie dies die beiden strichlierten Pfeile in **Fig. 35** zeigen. Hierdurch entstehen aus den zuvor vier radial voneinander getrennten, eigenständigen Kulissenbereichen mit den acht separaten Kulissensegmenten A bis H zwei Kulissendoppelbereiche sowie vier Kulissendoppelsegmente (Kulissendoppelsegment A+G, Kulissendoppelsegment B+D, Kulissendoppelsegment E+C, und Kulissendoppelsegment F+H).

Der Klarheit halber soll jedoch ein derartiger Kulissendoppelbereich nach wie vor als Anordnung aus zwei deckungsgleichen ("logischen") Kulissenbereichen für zwei verschiedene Anschlagbolzen, und ein Kulissendoppelsegment (beispielsweise Kulissendoppelsegment A+G) als Anordnung aus zwei deckungsgleichen ("logischen") Kulissensegmenten (beispielsweise A und G) für zwei verschiedene Anschlagbolzen (beispielsweise M₁ und M₃) betrachtet werden.

Als letzter Schritt der Überführung der Kulissenscheibe 9 gemäß **Fig. 33** in die Kulissenscheibe 9 gemäß **Fig. 36** werden die aufgrund der Zusammenlegung der acht Kulissensegmente A bis H nunmehr vier Kulissendoppelsegmente A+G, B+D, E+C und F+H durch vier Kulissenblöcke K, L, M, N ersetzt. Dies bedeutet mit anderen Worten, dass die zuvor in Form von vertieften Ausnehmungen ("negativ") in der Kulissenscheibe 9 dargestellten Kulissensegmente A bis H, bzw. Kulissendoppelsegmente A+G, B+D, E+C und F+D bei unveränderter Funktionalität nunmehr durch die erhaben auf der Kulissenscheibe 9 ("positiv") angeordneten Kulissenblöcke K, L, M, N ersetzt sind, siehe auch die isometrisch dargestellte Kulissenscheibe 9 gemäß **Fig. 29****.**

Die Anordnung der Kulissensegmente bzw. der Kulissenblöcke K, L, M, N und der Anschlagbolzen M₁, M₂, M₃ und M₄ gemäß der Darstellung von **Fig. 36** ist insbesondere insofern vorteilhaft, als sich damit sowohl Bauraum einsparen, als auch die Robustheit der Sperreinrichtung des Drehschalters wesentlich verbessern lässt. Dies betrifft vor allem die Anordnung der Anschlagbolzen M₁, M₂, M₃ und M₄ bzw. der Elektromagnete 18, die nun nicht mehr eng gedrängt in einer Reihe angeordnet werden müssen (siehe **Fig. 33**), sondern die vielmehr optimal auf der gesamten zur Verfügung stehenden Fläche verteilt werden können, siehe **Fig. 36** bzw. **Fig. 28** und **29**.

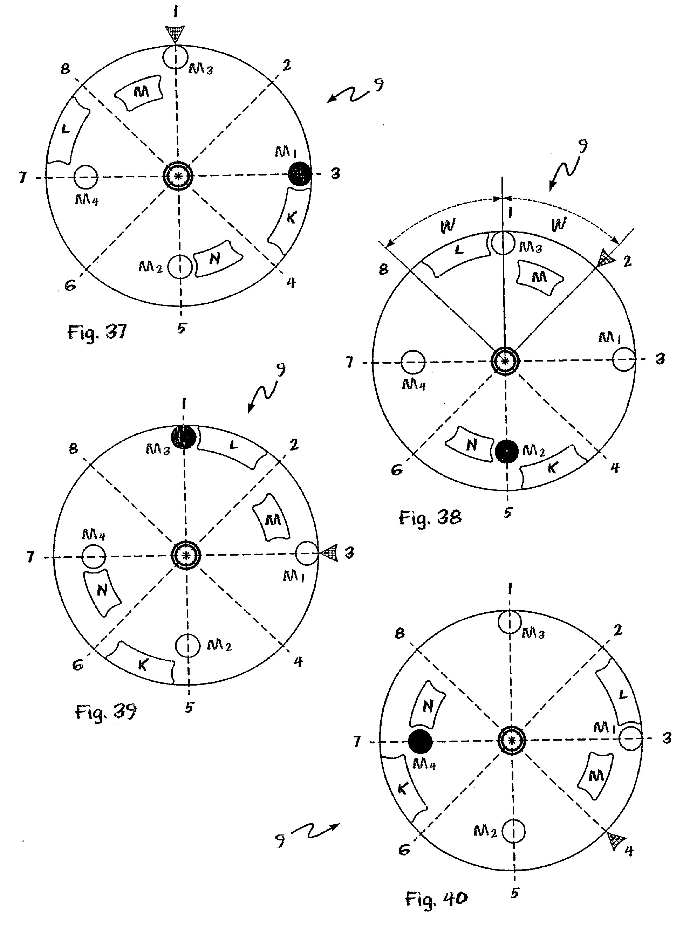

Die **Fig. 37** bis **56** zeigen wieder in schematischer Darstellung - analog der Darstellung der **Fig. 8** bis **26** - die Kulissenanordnung K, L, M, N und die Anschlagbolzen M₁, M₂, M₃ und M₄ der Sperreinrichtung für die Betätigungseinrichtung gemäß **Fig. 28** bis **32** in unterschiedlichen Schaltstellungen.

Die Kulissenscheibe 9 entspricht dabei der Kulissenscheibe 9 gemäß **Fig. 36** (siehe Beschreibung zu **Fig. 36**). Die Ausnehmungen der Kulissenbereiche A bis H gemäß **Fig. 8** bis **26** sind wie oben beschrieben ersetzt durch die erhabenen Kulissenblöcke K, L, M, N. Die Sperreinrichtung umfasst wieder vier Anschlagbolzen M₁, M₂, M₃ und M₄.

Die Sperreinrichtung gemäß **Fig. 37** bis **56** gehört zu der Betätigungseinrichtung gemäß **Fig. 28** bis **32****,** die analog der in **Fig. 7** dargestellten Betätigungseinrichtung wieder vier Schaltstellungen einnehmen kann. Dies bedeutet, dass jeder der vier Schaltstellungen, beispielsweise P, R, N und D eines Automatikgetriebes, ein "eigener" Kulissenbereich (unter der Maßgabe der Beschreibung der Kulissendoppelsegmente gemäß **Fig. 35** und **36**) wie auch ein eigener Anschlagbolzen M₁, M₂, M₃ bzw. M₄ zugeordnet ist.

Die Kulissensegmente sind dabei erneut so verteilt angeordnet, dass für jede der acht möglichen Schaltrelativstellungen der Kulissenscheibe 9 die vier Anschlagbolzen, innerhalb ihrer jeweiligen Kulissensegmente, zusammengenommen stets alle vier Relativpositionen besetzen, die bei der vorliegenden Ausführungsform den Getriebestufen P, R, N und D entsprechen.

Mit anderen Worten gibt es für jede der - hier infolge des Schaltwinkels W = 45°, siehe **Fig. 38** **-** acht möglichen Schaltrelativstellungen 1 bis 8 stets für jede der Getriebestufen P, R, N und D jeweils genau einen Anschlagbolzen M₁, M₂, M₃ oder M₄, der momentan die zu dieser Getriebestufe gehörige entsprechende Relativposition innerhalb seines Kulissensegments innehat. Hierdurch kann für jede der acht möglichen Schaltrelativstellungen 1 bis 8 der Kulissenscheibe 9 und damit auch für jede mögliche Schaltrelativstellung des Drehschalters 10 gemäß **Fig. 28** bis **32**, lediglich durch Aktivierung des entsprechenden Anschlagbolzens M₁, M₂, M₃ oder M₄, jederzeit definiert oder umdefiniert werden, welcher der Getriebestufen P, R, N oder D die aktuelle Position des Drehschalters und der Kulissenscheibe entsprechen soll.

Man erkennt in **Fig. 37**, dass der Anschlagbolzen M₁ aktiviert bzw. senkrecht zur Zeichnungsebene ausgefahren ist (symbolisiert durch die schwarz ausgefüllte Darstellung des Anschlagbolzens M₁), der Anschlagbolzens M₁ somit also in das zugehörige Kulissensegment zwischen Kulissenblock K und Kulissenblock L eingreift. Die weiteren Anschlagbolzen M₂, M₃ und M₄ sind in der Darstellung gemäß **Fig. 37** hingegen deaktiviert bzw. senkrecht zur Zeichnungsebene zurückgezogen, und greifen daher nicht in ihre jeweiligen Kulissensegmente zwischen den entsprechenden Kulissenblöcken ein.

Dies bedeutet mit anderen Worten, dass Kulissenscheibe 9 und Anschlagbolzen M₁ gemäß der Darstellung in **Fig. 37** dergestalt interagieren, dass sich die Kulissenscheibe 9 und somit auch der Drehschalter aufgrund des aktivierten Anschlagbolzens M₁ momentan am Linksanschlag befinden und somit nur nach rechts im Uhrzeigersinn gedreht werden können.

Die in den **Fig. 37** bis **40** dargestellte Situation entspricht jeweils der Getriebestufe P (Parksperre). Diese Situation tritt an der Betätigungseinrichtung insbesondere beim sog. Neustart der Betätigungseinrichtung auf. Die Situation "Neustart" entspricht dabei primär dem Systemzustand von Fahrzeuggetriebe und Betätigungseinrichtung bei Fahrtantritt bzw. beim Einschalten der Zündung des Kraftfahrzeugs. Zuvor, bei noch ausgeschalteter Zündung, befand sich das Fahrzeuggetriebe, sei es manuell oder automatisch gewählt, im vorliegenden Fall in der Getriebestufe P, und behält diese Getriebestufe P beim Einschalten der Zündung zunächst auch bei.

Die Steuerelektronik der Betätigungseinrichtung ermittelt beim Neustart sodann mittels Magnet und Sensor gemäß **Fig. 28****,** **30** und **31** die Absolutwinkelstellung der Welle 27 und damit die Schaltrelativstellung des Drehschalters 10 bzw. der Kulissenscheibe 9. Die Kulissenscheibe 9 kann sich dabei faktisch lediglich in einer der in **Fig. 37** bis **40** dargestellten vier Stellungen befinden, da aufgrund des punktsymmetrischen Aufbaus der Kulissenscheibe 9 (Kulissenblock K spiegelbildlich zu Kulissenblock L, Kulissenblock M spiegelbildlich zu Kulissenblock N) die vier in **Fig. 37** bis **40** nicht gezeigten Schaltrelativstellungen 5, 6, 7 und 8 deckungsgleich mit den in **Fig. 37** bis **40** gezeigten Schaltrelativstellungen 1, 2, 3 und 4 sind.

Nachdem der Steuerelektronik der Betätigungseinrichtung die Schaltrelativstellung der Kulissenscheibe 9 bekannt ist, wird derjenige Anschlagbolzen aktiviert, der in dieser Position der Kulissenscheibe 9 gerade die der Getriebestufe P entsprechende Relativposition (hier also Rechtsanschlag) innerhalb des diesem Anschlagbolzen zugeordneten Kulissensegments einnimmt.

In der Situation gemäß **Fig. 37** befindet sich das Getriebe in Getriebestufe P. Der Drehschalter bzw. die Kulissenscheibe 9 befinde sich in der Schaltrelativstellung 1 gemäß **Fig. 37****,** da vor dem vorhergehenden Beenden des Systems (z. B. vor dem Ausschalten der Zündung bzw. Verlassen des Fahrzeugs) der Drehschalter in die Schaltrelativstellung 1 gedreht wurde, um so die Getriebeposition P zu wählen.

Beim Neustart des Systems (beispielsweise beim Einschalten der Zündung) werden nun die Elektromagnete M₂, M₃ und M₄ mit Spannung beaufschlagt, wodurch die Anschlagbolzen M₂, M₃ und M₄ deaktiviert bzw. eingefahren werden. Damit bildet der einzige nun noch ausgefahrene Anschlagbolzen M₁ des einzigen noch ausgeschalteten Elektromagneten den Anschlag für das zum Anschlagbolzen M₁ gehörige Kulissensegment zwischen Kulissenblock K und Kulissenblock L auf der Kulissenscheibe 9 (zur Zuordnung der Kulissensegmente und zugehörigen Elektromagneten bzw. Anschlagbolzen zu den Kulissenblöcken K, L, M und N siehe **Fig. 33** bis **36**). Der Drehschalter kann damit ausschließlich im Uhrzeigersinn gedreht werden, um so die Getriebefahrstufen R, N oder D auszuwählen, während die Schaltrelativstellung 1 in diesem Fall die Getriebeposition P repräsentiert.

In der Situation gemäß **Fig. 38** befindet sich das Getriebe wieder in Getriebestufe P. Der Drehschalter bzw. die Kulissenscheibe 9 befinde sich hier in der Schaltrelativstellung 2, beispielsweise da die zuletzt eingelegte Getriebestufe vor dem Beenden des Systems (z. B. vor dem Ausschalten der Zündung bzw. Verlassen des Fahrzeugs) die Getriebestufe R war. Aus der Getriebestufe R sei das Getriebe nach dem Ausschalten der Zündung sodann selbstständig in die Getriebestufe P gegangen (sog. AutoP-Funktion, automatisches Einlegen der Parksperre).

Beim Neustart des Systems (beispielsweise beim Einschalten der Zündung) werden nun die Elektromagnete M₁, M₃ und M₄ mit Spannung beaufschlagt, wodurch die Anschlagbolzen M₁, M₃ und M₄ deaktiviert bzw. eingefahren werden. Damit bildet der einzige nun noch ausgefahrene Anschlagbolzen M₂ des einzigen noch ausgeschalteten Elektromagneten den Anschlag für das zum Anschlagbolzen M₂ gehörige Kulissensegment (zur Zuordnung der Kulissensegmente und zugehörigen Anschlagbolzen zu den Kulissenblöcken K, L, M und N siehe **Fig. 33** bis **36**). Der Drehschalter kann damit wieder ausschließlich im Uhrzeigersinn gedreht werden, um so die Getriebefahrstufen R, N oder D auszuwählen, während die eingelegte Getriebeposition P in diesem Fall durch die Schaltrelativstellung 2 der Kulissenscheibe 9 repräsentiert wird.

In der Situation gemäß **Fig. 39** befindet sich das Getriebe wieder in Getriebestufe P. Der Drehschalter bzw. die Kulissenscheibe 9 befinde sich hier in der Schaltrelativstellung 3, beispielsweise da die zuletzt eingelegte Getriebestufe vor dem Beenden des Systems (z. B. vor dem Ausschalten der Zündung bzw. vor dem Verlassen des Fahrzeugs) die Getriebestufe N war. Aus der Getriebestufe R sei das Getriebe nach dem Ausschalten der Zündung sodann selbstständig in die Getriebestufe P gegangen (AutoP-Funktion, automatisches Einlegen der Parksperre).

Beim Neustart des Systems (beispielsweise beim Einschalten der Zündung) werden nun die Elektromagnete M₁, M₂ und M₄ mit Spannung beaufschlagt, wodurch die Anschlagbolzen M₁, M₂ und M₄ deaktiviert bzw. eingefahren werden. Damit bildet der einzige nun noch ausgefahrene Anschlagbolzen M₃ des einzigen noch ausgeschalteten Elektromagneten den Anschlag für das zum Anschlagbolzen M₃ gehörige Kulissensegment (zur Zuordnung der Kulissensegmente und zugehörigen Anschlagbolzen zu den Kulissenblöcken K, L, M und N siehe **Fig. 33** bis **36**). Der Drehschalter kann damit erneut ausschließlich im Uhrzeigersinn gedreht werden, um so die Getriebefahrstufen R, N oder D auszuwählen, während die eingelegte Getriebeposition P in diesem Fall durch die Schaltrelativstellung 3 der Kulissenscheibe 9 repräsentiert wird.

In der Situation gemäß **Fig. 40** befindet sich das Getriebe wieder in Getriebestufe P. Der Drehschalter bzw. die Kulissenscheibe 9 befinde sich hier in der Schaltrelativstellung 4, beispielsweise da die zuletzt eingelegte Getriebestufe vor dem Beenden des Systems (z. B. vor dem Ausschalten der Zündung bzw. vor dem Verlassen des Fahrzeugs) die Getriebestufe D war. Aus der Getriebestufe D sei das Getriebe nach dem Ausschalten der Zündung sodann wieder selbstständig in die Getriebestufe P gegangen (AutoP-Funktion, automatisches Einlegen der Parksperre).

Beim Neustart des Systems (beispielsweise beim Einschalten der Zündung) werden nun die Elektromagnete M₁, M₂ und M₃ mit Spannung beaufschlagt, wodurch die Anschlagbolzen M₁, M₂ und M₃ deaktiviert bzw. eingefahren werden. Damit bildet der einzige nun noch ausgefahrene Anschlagbolzen M₄ des einzigen noch ausgeschalteten Elektromagneten den Anschlag für das zum Anschlagbolzen M₄ gehörige Kulissensegment (zur Zuordnung der Kulissensegmente und zugehörigen Anschlagbolzen zu den Kulissenblöcken K, L, M und N siehe **Fig. 33** bis **36**). Der Drehschalter kann damit wieder ausschließlich im Uhrzeigersinn gedreht werden, um so die Getriebefahrstufen R, N oder D auszuwählen, während die eingelegte Getriebeposition P in diesem Fall durch die Schaltrelativstellung 4 der Kulissenscheibe 9 repräsentiert wird.

Die Situationen in den weiteren Schaltrelativstellungen 5, 6, 7 und 8 von Drehschalter 10 bzw. Kulissenscheibe 9 stimmen aufgrund des punktsymmetrischen Aufbaus der Kulissenscheibe 9 (Kulissenblock K spiegelbildlich zu Kulissenblock L, Kulissenblock M spiegelbildlich zu Kulissenblock N) dann wieder deckungsgleich mit der jeweiligen Situation gemäß **Fig. 37****,** **9, 10** und **11** überein.

Ein Neustart des Systems bzw. Reset der Betätigungseinrichtung kann zudem auch bei eingelegter Getriebeposition R, N oder D erfolgen. Das ist beispielsweise dann der Fall, wenn der anhand entsprechender Drehung am Drehschalter 10 eingegebene Fahrerwunsch durch das Getriebe nicht umgesetzt wurde, beispielsweise wegen einer Störung, eines unzulässigen Betriebszustands oder dergleichen. In einem solchen Fall werden abhängig von der tatsächlichen aktuellen Getriebeposition und der neuen Schaltrelativstellung von Drehschalter 10 bzw. Kulissenscheibe 9 die entsprechenden Anschlagbolzen M₁ bis M₄ aktiviert bzw. deaktiviert, so dass die Relativwinkelstellung der Kulissenscheibe 9 und des dann aktivierten Anschlagbolzens wieder mit dem tatsächlichen Getriebezustand übereinstimmt.

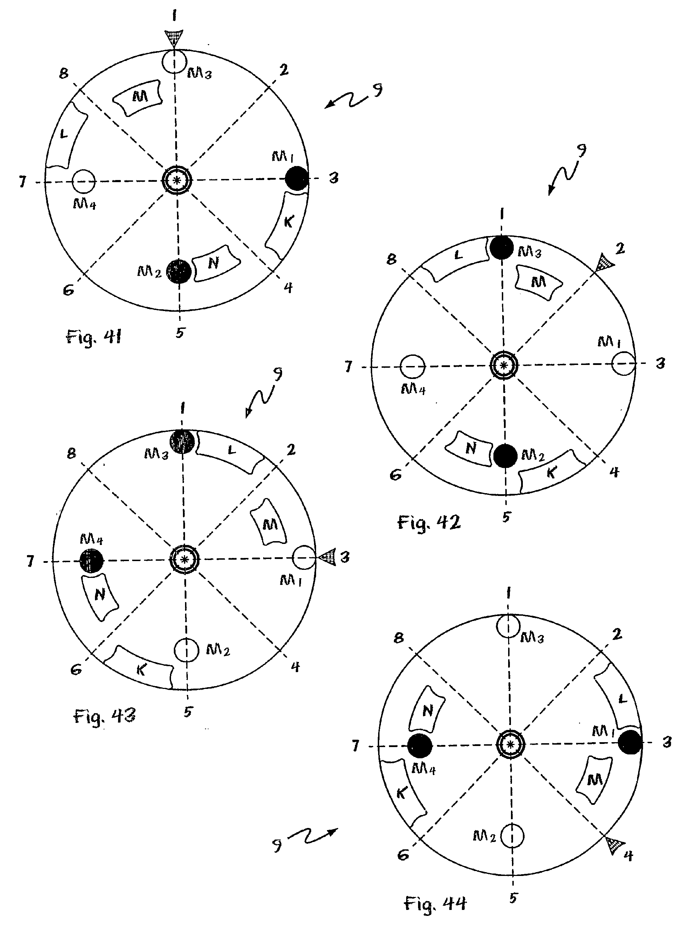

Die **Fig. 41** bis **44** betreffen die sog. "Shiftlock"-Funktion in Getriebestufe P. Um zu vermeiden, dass sich das Fahrzeug unbeabsichtigt oder unkontrolliert in Bewegung setzt, können aus der Getriebeposition P (Parksperre) Fahrstufen nur dann eingelegt werden, wenn der Fahrer den Fuß auf der Bremse hat. Daher ist der Drehschalter 10 bei eingelegter Getriebeposition P im Sinne der Shiftlock-Funktion aus Sicherheitsgründen solange gesperrt, bis der Fahrer die Betriebsbremse betätigt. In diesem Fall ergeben sich bezüglich der möglichen Relativstellung zwischen Kulissenscheibe 9 und Anschlagbolzen die Situationen gemäß **Fig. 41** bis **44**.

In der Situation gemäß **Fig. 41** befindet sich das Getriebe wieder in Getriebestufe P. Der Drehschalter 10 bzw. die Kulissenscheibe 9 befinde sich bei eingeschalteter Zündung hier in der Schaltrelativstellung 1. Es werden nun lediglich die Elektromagnete der Anschlagbolzen M₃ und M₄ (oder keiner der Elektromagnete) mit Spannung beaufschlagt, wodurch einerseits der ausgefahrene Anschlagbolzen M₁ am Kulissenblock K den Linksanschlag des Drehschalters 10 gemäß Schaltposition P bildet, und andererseits der Anschlagbolzen M₂ am Kulissenblock N ein Herausschalten aus Schaltposition P verhindert bzw. zusammen mit Anschlagbolzen M₁ den Drehschalter 10 komplett sperrt. Erst wenn die Betriebsbremse getreten wird, wird durch die Steuerelektronik auch M₂ (bzw. ggf. M₂ bis M₄) mit Spannung beaufschlagt, so dass aus P herausgeschaltet werden kann. Es ergibt sich in diesem Fall die Situation gemäß **Fig. 37**

In der Situation gemäß **Fig. 42** befindet sich das Getriebe wieder in Getriebestufe P. Der Drehschalter 10 bzw. die Kulissenscheibe 9 befinde sich bei eingeschalteter Zündung hier in der Schaltrelativstellung 2. Es werden nun lediglich die Elektromagnete der Anschlagbolzen M₁ und M₄ (oder keiner der Elektromagnete) mit Spannung beaufschlagt, wodurch einerseits der ausgefahrene Anschlagbolzen M₂ am Kulissenblock N den Linksanschlag des Drehschalters 10 gemäß Schaltposition P bildet, und andererseits der Anschlagbolzen M₃ am Kulissenblock L ein Herausschalten aus Schaltposition P verhindert bzw. zusammen mit Anschlagbolzen M₂ den Drehschalter 10 komplett sperrt. Erst wenn die Betriebsbremse getreten wird, wird durch die Steuerelektronik auch M₃ (neben M₁ und M₄) mit Spannung beaufschlagt, so dass aus P herausgeschaltet werden kann. Es ergibt sich in diesem Fall die Situation gemäß **Fig. 38**

In der Situation gemäß **Fig. 43** befindet sich das Getriebe wieder in Getriebestufe P. Der Drehschalter 10 bzw. die Kulissenscheibe 9 befinde sich bei eingeschalteter Zündung in der Schaltrelativstellung 3. Es werden die Elektromagnete M₁ und M₂ (oder keiner der Elektromagnete) mit Spannung beaufschlagt, wodurch einerseits der ausgefahrene Anschlagbolzen M₃ am Kulissenblock L den Linksanschlag des Drehschalters 10 gemäß Schaltposition P bildet, und andererseits der Anschlagbolzen M₄ am Kulissenblock N ein Herausschalten aus Schaltposition P verhindert bzw. zusammen mit Anschlagbolzen M₃ den Drehschalter 10 komplett sperrt. Erst wenn die Betriebsbremse getreten wird, wird durch die Steuerelektronik auch M₄ (neben M₁ und M₂) mit Spannung beaufschlagt, so dass aus P herausgeschaltet werden kann. Es ergibt sich in diesem Fall die Situation gemäß **Fig. 39**

In der Situation gemäß **Fig. 44** befindet sich das Getriebe wieder in Getriebestufe P. Der Drehschalter 10 bzw. die Kulissenscheibe 9 befinde sich bei eingeschalteter Zündung in der Schaltrelativstellung 4. Es werden lediglich die Elektromagnete der Anschlagbolzen M₂ und M₃ (oder keiner der Elektromagnete) mit Spannung beaufschlagt, wodurch einerseits der ausgefahrene Anschlagbolzen M₄ am Kulissenblock N den Linksanschlag des Drehschalters 10 gemäß Schaltposition P bildet, und andererseits der Anschlagbolzen M₁ am Kulissenblock L ein Herausschalten aus Schaltposition P verhindert bzw. zusammen mit Anschlagbolzen M₄ den Drehschalter 10 komplett sperrt. Erst wenn die Betriebsbremse getreten wird, wird durch die Steuerelektronik auch M₁ (neben M₂ und M₃) mit Spannung beaufschlagt, so dass aus P herausgeschaltet werden kann. Es ergibt sich in diesem Fall die Situation gemäß **Fig. 40****.**

Die Situationen in den weiteren Schaltrelativstellungen 5, 6, 7 und 8 von Drehschalter 10 bzw. Kulissenscheibe 9 stimmen aufgrund des punktsymmetrischen Aufbaus der Kulissenscheibe 9 (Kulissenblock K spiegelbildlich zu Kulissenblock L, Kulissenblock M spiegelbildlich zu Kulissenblock N) wieder deckungsgleich mit der jeweiligen Situation gemäß **Fig. 12, 13, 14** und **15** überein.

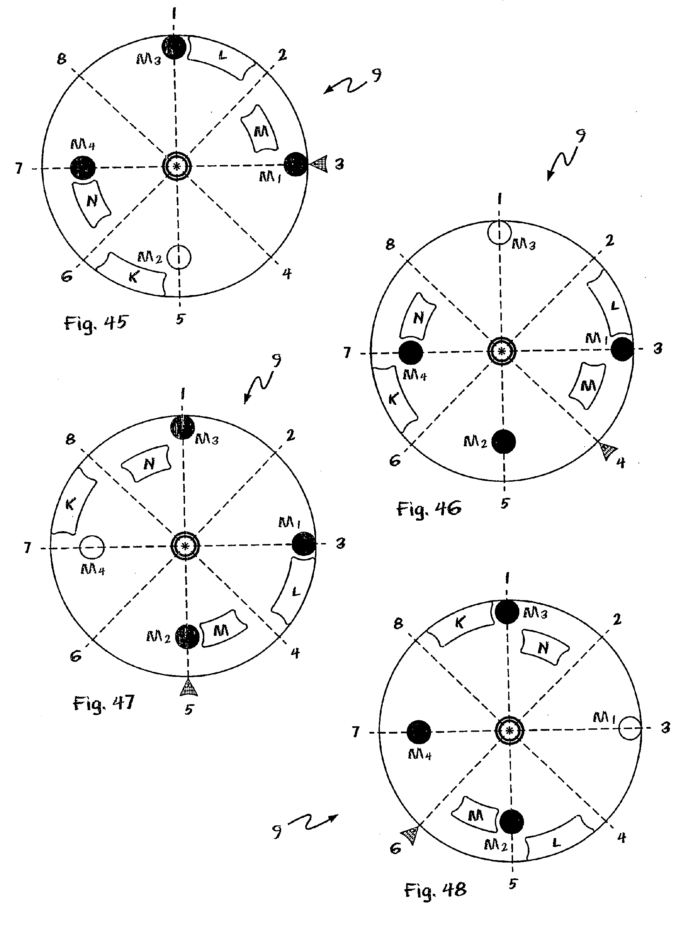

Die **Fig. 45** bis **48** betreffen ebenfalls eine Shiftlock-Funktion, hier jedoch bezüglich der Getriebestufe N. Um zu vermeiden, dass sich das Fahrzeug unbeabsichtigt oder unkontrolliert in Bewegung setzt, können aus der Getriebeposition N (Neutral bzw. Getriebeleerlauf) Fahrstufen nur dann eingelegt werden, wenn der Fahrer den Fuß auf der Bremse hat. Daher ist der Drehschalter 10 bei eingelegter Getriebeposition N im Sinne der Shiftlock-Funktion aus Sicherheitsgründen solange gesperrt, bis der Fahrer die Betriebsbremse betätigt. In diesem Fall ergeben sich bezüglich der möglichen Relativstellung zwischen Kulissenscheibe 9 und Anschlagbolzen die Situationen gemäß **Fig. 45** bis **48****.**

In der Situation gemäß **Fig. 45** befindet sich das Getriebe in Getriebestufe N. Der Drehschalter 10 bzw. die Kulissenscheibe 9 befinde sich bei eingeschalteter Zündung in der Schaltrelativstellung 3. Es wird lediglich der Elektromagnet M₂ (oder keiner der Elektromagnete) mit Spannung beaufschlagt, wodurch einerseits der ausgefahrene Anschlagbolzen M₁ zusammen mit dem zugehörigen Kulissensegment zwischen den Kulissenblöcken K und L (zur Zuordnung der Kulissensegmente und zugehörigen Anschlagbolzen zu den Kulissenblöcken K, L, M und N siehe **Fig. 33** bis **36**) die Relativwinkelstellung des Drehschalters 10 gemäß Schaltposition N abbildet, und andererseits die Anschlagbolzen M₃ und M₄ ein Herausschalten aus Schaltposition N verhindern bzw. den Drehschalter 10 komplett sperren. Erst wenn die Betriebsbremse getreten wird, werden durch die Steuerelektronik auch M₃ und M₄ (neben M₂) mit Spannung beaufschlagt, so dass aus N herausgeschaltet werden kann.

In der Situation gemäß **Fig. 46** befindet sich das Getriebe bei eingeschalteter Zündung wieder in Getriebestufe N. Der Drehschalter 10 bzw. die Kulissenscheibe 9 befinde sich in der Schaltrelativstellung 4. Es wird lediglich der Elektromagnet M₃ (oder keiner der Elektromagnete) mit Spannung beaufschlagt, wodurch einerseits der ausgefahrene Anschlagbolzen M₂ zusammen mit dem zugehörigen Kulissensegment (zur Zuordnung der Kulissensegmente und zugehörigen Anschlagbolzen zu den Kulissenblöcken K, L, M und N siehe **Fig. 33** bis **36****)** die Relativwinkelstellung des Drehschalters 10 gemäß Schaltposition N abbildet, und andererseits die Anschlagbolzen M₁ und M₄ ein Herausschalten aus Schaltposition N verhindern bzw. den Drehschalter 10 komplett sperren. Erst wenn die Betriebsbremse getreten wird, werden durch die Steuerelektronik auch M₁ und M₄ (neben M₃) mit Spannung beaufschlagt, so dass aus N herausgeschaltet werden kann.

In der Situation gemäß **Fig. 47** befindet sich das Getriebe bei eingeschalteter Zündung wieder in Getriebestufe N. Der Drehschalter 10 bzw. die Kulissenscheibe 9 befinde sich in der Schaltrelativstellung 5. Es wird lediglich der Elektromagnet M₄ (oder keiner der Elektromagnete) mit Spannung beaufschlagt, wodurch einerseits der ausgefahrene Anschlagbolzen M₃ zusammen mit dem zugehörigen Kulissensegment (zur Zuordnung der Kulissensegmente und zugehörigen Anschlagbolzen zu den Kulissenblöcken K, L, M und N siehe **Fig. 33** bis **36**) die Relativwinkelstellung des Drehschalters 10 gemäß Schaltposition N abbildet, und andererseits die Anschlagbolzen M₁ und M₂ ein Herausschalten aus Schaltposition N verhindern, bzw. den Drehschalter 10 komplett sperren. Erst wenn die Betriebsbremse getreten wird, werden durch die Steuerelektronik auch Mi und M₂ (neben M₄) mit Spannung beaufschlagt, wodurch die Blockierung des Drehschalters 10 aufgehoben wird und aus N herausgeschaltet werden kann.

In der Situation gemäß **Fig. 48** befindet sich das Getriebe bei eingeschalteter Zündung wieder in Getriebestufe N. Der Drehschalter 10 bzw. die Kulissenscheibe 9 befinde sich in der Schaltrelativstellung 6. Es wird lediglich der Elektromagnet M₁ (oder keiner der Elektromagnete) mit Spannung beaufschlagt, wodurch einerseits der ausgefahrene Anschlagbolzen M₄ zusammen mit dem zugehörigen Kulissensegment (zur Zuordnung der Kulissensegmente und zugehörigen Anschlagbolzen zu den Kulissenblöcken K, L, M und N siehe **Fig. 33** bis **36**) die Relativwinkelstellung des Drehschalters 10 gemäß Schaltposition N abbildet, und andererseits die Anschlagbolzen M₂ und M₃ ein Herausschalten aus Schaltposition N verhindern, bzw. den Drehschalter 10 komplett sperren. Erst wenn die Betriebsbremse getreten wird, werden durch die Steuerelektronik auch M₂ und M₃ (neben M₁) mit Spannung beaufschlagt, wodurch die Blockierung des Drehschalters 10 aufgehoben wird und aus N herausgeschaltet werden kann.

Die Situationen in den weiteren Schaltrelativstellungen 7 und 8 sowie 1 und 2 des Drehschalters 10 bzw. der Kulissenscheibe 9 stimmen aufgrund des punktsymmetrischen Aufbaus der Kulissenscheibe 9 (Kulissenblock K spiegelbildlich zu Kulissenblock L, Kulissenblock M spiegelbildlich zu Kulissenblock N) dann wieder deckungsgleich mit der jeweiligen Situation gemäß **Fig. 45, 46, 47** und **48** überein.

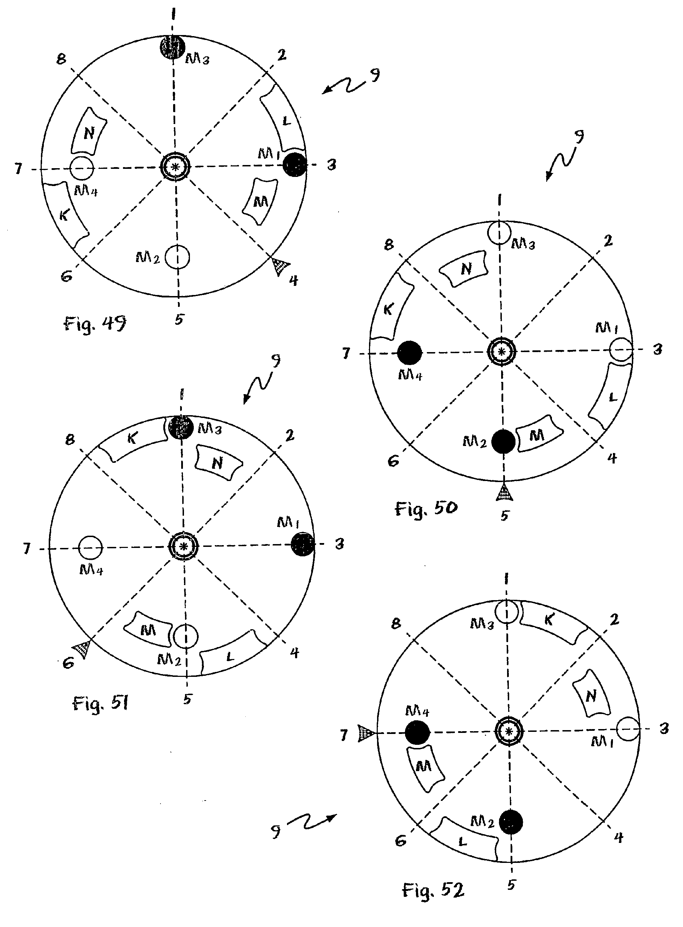

Die **Fig. 49** bis **52** betreffen die sog. "Rückwärtsgang-Sperre". Um zu vermeiden, dass bei einer Vorwärtsfahrgeschwindigkeit oberhalb einer bestimmten Grenzgeschwindigkeit, beispielsweise oberhalb von 5 km/h, die Getriebestufe R (Rückwärtsgang) eingelegt wird, wodurch der Antriebsstrang beschädigt werden kann, lässt sich die Fahrstufe R nur dann einlegen, wenn sich das Fahrzeug langsamer als die festgelegte Grenzgeschwindigkeit vorwärts bewegt. Daher wird die Schaltstellung R am Drehschalter 10 aus Sicherheitsgründen solange gesperrt, wie sich das Fahrzeug schneller als mit der Grenzgeschwindigkeit vorwärts bewegt. In diesem Fall ergeben sich bezüglich der möglichen Relativstellungen zwischen Kulissenscheibe 9 und Anschlagbolzen die Situationen gemäß **Fig. 49** bis **52**.

In der Situation gemäß **Fig. 49** befinde sich das Getriebe bei Vorwärtsfahrt des Fahrzeugs mit einer Geschwindigkeit oberhalb der Rückwärtsgangsperren-Grenzgeschwindigkeit in Getriebestufe D. Der Drehschalter 10 bzw. die Kulissenscheibe 9 befinde sich in der Schaltrelativstellung 4. Es werden die Elektromagnete M₂ und M₄ mit Spannung beaufschlagt, wodurch einerseits der ausgefahrene Anschlagbolzen M₁ zusammen mit dem zugehörigen Kulissensegment (zur Zuordnung der Kulissensegmente und zugehörigen Anschlagbolzen zu den Kulissenblöcken K, L, M und N siehe **Fig. 33** bis **36**) die Relativwinkelstellung des Drehschalters 10 gemäß Schaltposition D abbildet, und andererseits der Anschlagbolzen M₃ zusammen mit Kulissenblock L das Einlegen der Schaltposition R verhindert. Erst wenn die Vorwärtsfahrgeschwindigkeit kleiner wird als die Grenzgeschwindigkeit der Rückwärtsgangsperre, wird durch die Steuerelektronik zusätzlich M₃ mit Spannung beaufschlagt, wodurch die zuvor bestandene Einschränkung des Drehwinkelbereichs des Drehschalters 10 lediglich auf die Positionen D und N wieder aufgehoben wird. Es kann somit nunmehr der Rückwärtsgang (wie auch die Parksperre) eingelegt werden.

In der Situation gemäß **Fig. 50** befinde sich das Getriebe bei Vorwärtsfahrt des Fahrzeugs mit einer Geschwindigkeit oberhalb der Rückwärtsgangsperren-Grenzgeschwindigkeit wieder in Getriebestufe D. Der Drehschalter 10 bzw. die Kulissenscheibe 9 befinde sich in der Schaltrelativstellung 5. Es werden die Elektromagnete M₁ und M₃ mit Spannung beaufschlagt, wodurch einerseits der ausgefahrene Anschlagbolzen M₂ zusammen mit dem zugehörigen Kulissensegment (zur Zuordnung der Kulissensegmente und zugehörigen Anschlagbolzen zu den Kulissenblöcken K, L, M und N siehe **Fig. 33** bis **36**) die Relativwinkelstellung des Drehschalters 10 gemäß Schaltposition D abbildet, und andererseits der Anschlagbolzen M₄ zusammen mit Kulissenblock N das Einlegen des Rückwärtsganges verhindert. Erst wenn die Vorwärtsfahrgeschwindigkeit kleiner wird als die Grenzgeschwindigkeit der Rückwärtsgangsperre, so wird durch die Steuerelektronik zusätzlich M₄ mit Spannung beaufschlagt, wodurch die zuvor bestandene Einschränkung des Drehwinkelbereichs des Drehschalters 10 auf lediglich die Positionen D und N wieder aufgehoben wird. Es kann somit nunmehr der Rückwärtsgang (wie auch die Parksperre) wieder eingelegt werden.

In der Situation gemäß **Fig. 51** befinde sich das Getriebe bei Vorwärtsfahrt des Fahrzeugs mit einer Geschwindigkeit oberhalb der Rückwärtsgangsperren-Grenzgeschwindigkeit wieder in Getriebestufe D. Der Drehschalter 10 bzw. die Kulissenscheibe 9 befinde sich in der Schaltrelativstellung 6. Es werden die Elektromagnete M₂ und M₄ mit Spannung beaufschlagt, wodurch einerseits der ausgefahrene Anschlagbolzen M₃ zusammen mit dem zugehörigen Kulissensegment (zur Zuordnung der Kulissensegmente und zugehörigen Anschlagbolzen zu den Kulissenblöcken K, L, M und N siehe **Fig. 33** bis **36**) die Relativwinkelstellung des Drehschalters 10 gemäß Schaltposition D abbildet, und andererseits der Anschlagbolzen M₁ zusammen mit Kulissenblock L das Einlegen des Rückwärtsganges verhindert. Erst wenn die Vorwärtsfahrgeschwindigkeit kleiner wird als die Grenzgeschwindigkeit der Rückwärtsgangsperre, so wird durch die Steuerelektronik zusätzlich M₁ mit Spannung beaufschlagt, wodurch die zuvor bestandene Einschränkung des Drehwinkelbereichs des Drehschalters 10 lediglich auf die Positionen D und N wieder aufgehoben wird. Es kann somit nunmehr der Rückwärtsgang (wie auch die Parksperre) wieder eingelegt werden.

In der Situation gemäß **Fig. 52** befinde sich das Getriebe bei Vorwärtsfahrt des Fahrzeugs mit einer Geschwindigkeit oberhalb der Rückwärtsgangsperren-Grenzgeschwindigkeit wieder in Getriebestufe D. Der Drehschalter 10 bzw. die Kulissenscheibe 9 befinde sich in der Schaltrelativstellung 7. Es werden die Elektromagnete Mi und M₃ mit Spannung beaufschlagt, wodurch einerseits der ausgefahrene Anschlagbolzen M₄ zusammen mit dem zugehörigen Kulissensegment (zur Zuordnung der Kulissensegmente und zugehörigen Anschlagbolzen zu den Kulissenblöcken K, L, M und N siehe **Fig. 33** bis **36**) die Relativwinkelstellung des Drehschalters 10 gemäß Schaltposition D abbildet, und andererseits der Anschlagbolzen M₂ zusammen mit Kulissenblock M das Einlegen des Rückwärtsganges verhindert. Erst wenn die Vorwärtsfahrgeschwindigkeit kleiner wird als die Grenzgeschwindigkeit der Rückwärtsgangsperre, so wird durch die Steuerelektronik zusätzlich M₂ mit Spannung beaufschlagt, wodurch die zuvor bestandene Einschränkung des Drehwinkelbereichs des Drehschalters 10 auf die Positionen D und N aufgehoben wird. Nun lässt sich somit der Rückwärtsgang (wie auch die Parksperre) wieder einlegen.

Die Situationen in den weiteren Schaltrelativstellungen 8 sowie 1, 2 und 3 des Drehschalters 10 bzw. der Kulissenscheibe 9 stimmen aufgrund des punktsymmetrischen Aufbaus der Kulissenscheibe 9 (Kulissenblock K spiegelbildlich zu Kulissenblock L, Kulissenblock M spiegelbildlich zu Kulissenblock N) dann wieder deckungsgleich mit der jeweiligen Situation gemäß **Fig. 49, 50, 51** und **52** überein.

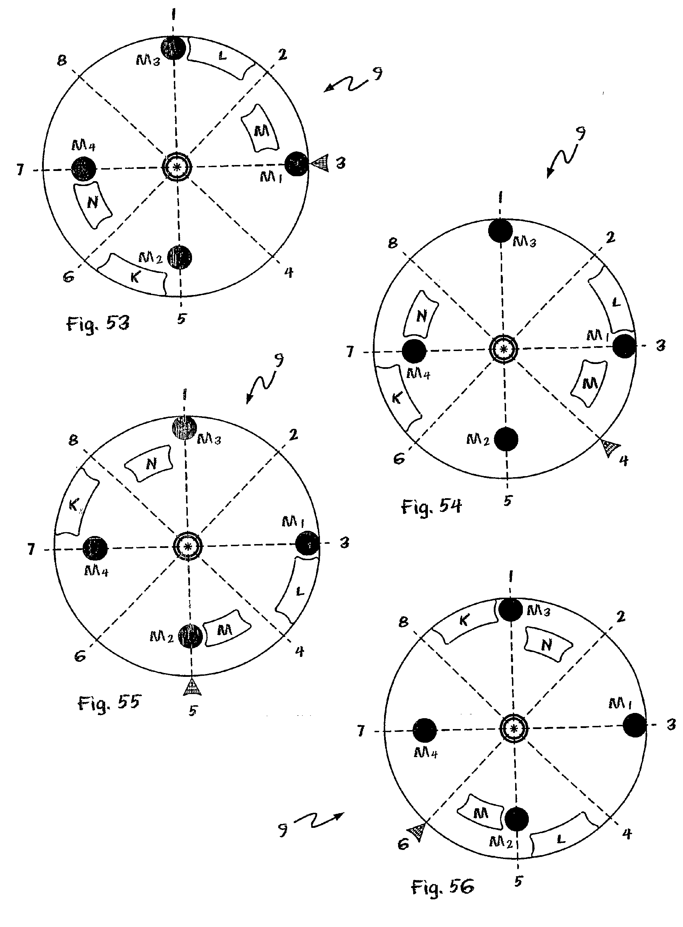

Die **Fig. 53** bis **56** zeigen mögliche Situationen für den Fall der ausgeschalteten Zündung bzw. bei System- oder Stromausfall. In diesen Fällen sind alle Magnete stromlos und damit sämtliche Anschlagbolzen M₁ bis M₄ ausgefahren, so dass der Drehschalter 10 in jedem Fall und in jeder möglichen Schaltrelativstellung 1 bis 8 komplett gesperrt ist.

Der Fahrer erhält somit beim Versuch der Getriebebetätigung auch taktil unmittelbar die Information, dass Schaltbefehle derzeit nicht ausgeführt werden können. Ein (nicht dargestelltes) Override-System sorgt dafür, dass bei Ausfall lediglich der Elektromagnete, oder beim Ausfall der Magnetansteuerung, mittels einer mechanischen Entriegelung der Drehschalter 10 im Sinne eines Notbetriebs dennoch betätigt werden kann.

Dabei stimmen die Situationen in den in **Fig. 53** bis **56** nicht dargestellten weiteren Schaltrelativstellungen 7 und 8 sowie 1 und 2 des Drehschalters 10 bzw. der Kulissenscheibe 9 aufgrund des punktsymmetrischen Aufbaus der Kulissenscheibe 9 (Kulissenblock K spiegelbildlich zu Kulissenblock L, Kulissenblock M spiegelbildlich zu Kulissenblock N) wieder deckungsgleich mit der jeweiligen Situation gemäß **Fig. 53, 54, 55** und **56** überein.

Im Ergebnis wird somit deutlich, dass dank der Erfindung eine Betätigungseinrichtung für elektrisch bzw. elektronisch gesteuerte technische Systeme geschaffen wird, die eine ebenso intuitive, sichere, leicht verständliche und fehlerfreie Betätigung des technischen Systems ermöglicht, wie dies bei mechanischen Betätigungselementen mit diskreten Rastpositionen der Fall ist. Gleichzeitig wird dank der Erfindung eine unter allen Betriebsbedingungen eindeutige, intuitiv erfassbare und insbesondere taktile Rückmeldung des tatsächlichen Systemzustands realisiert.

Die Erfindung leistet damit einen fundamentalen Beitrag zur Verbesserung der Sicherheit, Ergonomie und Bedienbarkeit von komplexen technischen Systemen, insbesondere in Bezug auf die Anwendung bei der Steuerung von automatischen Getrieben und dgl. am Kraftfahrzeug.

### Bezugszeichenliste

- 1-8: Schaltrelativstellungen
- 9: Kulissenanordnung, Kulissenscheibe
- 10: Betätigungselement, Drehschalter, Drehknauf
- 11: Anzeigeeinrichtung
- 12: Kulissenbereich
- 13: Kulissenbereich
- 14: Pfeilsymbol
- 15: Anzeigeelement
- 16: Anzeigeelement
- 17: Gehäuseoberteil
- 18: Elektromagnet
- 19: Anker
- 20: Gehäuseboden
- 21: Platine, Steuerungseinrichtung
- 22: Anschlüsse
- 23: Drehwinkelsensor
- 24: Gehäuseunterteil
- 25: Gehäuse (Rastiereinrichtung)
- 26: Rastierelement
- 27: Welle
- 28: Permanentmagnet
- 29: Knaufträger
- 30: Rastierkontur
- M₁ bis M₄: Anschlagbolzen
- A bis H: Kulissensegmente
- K, L, M, N: Kulissenblöcke
- W: Schaltwinkel

## Patentansprüche

1. Betätigungseinrichtung für ein technisches System, insbesondere zur Auswahl von Schaltstufen eines shift by-wire-Gangwechselgetriebes, die Betätigungseinrichtung aufweisend ein für sich genommen unbegrenzt rotierbares Betätigungselement (10) sowie eine Sperreinrichtung mit einer Kulissenanordnung (9) und mit Anschlagelementen zur Begrenzung des Drehwinkels des Betätigungselements (10) auf einen Gesamtschaltwinkel, wobei das Betätigungselement (10) innerhalb des Gesamtschaltwinkels eine Anzahl von n, wobei n>1, Schaltstellungen einnehmen kann,
**dadurch gekennzeichnet,**
**dass** die Kulissenanordnung (9) für jede der n Schaltstellungen des Betätigungselements (10) ein eigenes, in Abhängigkeit des Zustands des technischen Systems gesteuert aktivierbares Anschlagelement (M₁, M₂, M₃, M₄) und einen Kulissenbereich (12, 13, ...) aufweist,
der Kulissenbereich (12, 13, ...) umfassend zumindest ein sich über den Gesamtschaltwinkel erstreckendes Kulissensegment (A, B, C, ...), zwischen dessen Endanschlägen ein Anschlagelement (M₁, M₂, M₃, M₄) eine von n Relativpositionen einnehmen kann, die den n Schaltstellungen des Betätigungselements (10) entsprechen,
wobei die den n Anschlagelementen (M₁, M₂, M₃, M₄) zugeordneten Kulissensegmente (A, B, C, ...) sich zu einem Kulissengesamtwinkel von 360° oder einem Vielfachen davon addieren,
und wobei Kulissensegnente (A, B, C, ...) und/oder Anschlagelemente (M₁, M₂, M₃, M₄) so auf den Kulissengesamtwinkel verteilt angeordnet sind,
**dass** für jede Schaltrelativstellung (1, 2, 3, ...) des Betätigungselements (10) jede der n Relativpositionen innerhalb jeweils eines der Kulissensegmente (A, B, C, ...) durch jeweils eines der n Anschlagelemente M₁, M₂, M₃ , M₄besetzt ist.

2. Betätigungseinrichtung nach Anspruch 1,
**dadurch gekennzeichnet,**
**dass** eine Anzahl von *m* wobei *m* >1, Kulissenbereichen (12, 13) bzw.
Kulissensegmenten (A, B, C, ...) zu einem Mehrfach-Kulissenbereich bzw. Mehrfach-Kulissensegment (A+G, B+D, ...) zusammengefasst sind, wobei dem Mehrfach-Kulissensegment (A+G, B+D, ...) m Anschlagelemente (M_{1,} M₂, M_{3,} M₄) zugeordnet sind.

3. Betätigungseinrichtung nach Anspruch 1 oder 2,
**dadurch gekennzeichnet,**
**dass** die Kulissenbereiche (12, 13) Längsabschnitten der Oberfläche eines zylindrischen Körpers entsprechen.

4. Betätigungseinrichtung nach Anspruch 1 oder 2,
**dadurch gekennzeichnet,**
**dass** die Kulissenanordnung (9) im Wesentlichen kreisringförmig ist.

5. Betätigungseinrichtung nach Anspruch 4,
**dadurch gekennzeichnet,**
**dass** jedem Kulissenbereich (12, 13) der Kulissenanordnung (9) ein bestimmter kreisringförmiger Teilflächenbereich der Kulissenanordnung (9) zugeordnet ist.

6. Betätigungseinrichtung nach einem der Ansprüche 3 bis 5,
**dadurch gekennzeichnet,**
**dass** mehreren Kulissenbereichen (12, 13) derselbe Teilflächenbereich der Kulissenanordnung (9) zugeordnet ist.

7. Betätigungseinrichtung nach einem der Ansprüche 1 bis 6,
**dadurch gekennzeichnet,**
**dass** das Betätigungselement (10) im Wesentlichen rotationssymmetrisch ist.

8. Betätigungseinrichtung nach einem der Ansprüche 1 bis 7,
**dadurch gekennzeichnet,**
**dass** die Betätigungseinrichtung eine Rastiereinrichtung (25, 26, 30) mit einer der Anzahl der möglichen Schaltrelativstellungen entsprechenden Mehrzahl von Rastpositionen aufweist.

9. Betätigungseinrichtung nach Anspruch 8,
**dadurch gekennzeichnet,**
**dass** die Rastpositionen gleichmäßig auf eine volle Umdrehung des Betätigungselements (10) verteilt sind.

10. Betätigungseinrichtung nach Anspruch 8 oder 9,
**dadurch gekennzeichnet,**
**dass** die Rastiereinrichtung (25, 26, 30) eine umlaufende Rastierkontur (30) und ein mit der Rastierkontur (30) korrespondierendes, federbeaufschlagtes Rastierelement (26) aufweist.

11. Betätigungseinrichtung nach Anspruch 10,
**dadurch gekennzeichnet,**
**dass** die Rastierkontur (30) einstückig mit einem Gehäuseteil (17) einer Gehäuseanordnung (17, 20, 24) der Betätigungseinrichtung ausgebildet ist.

12. Betätigungseinrichtung nach Anspruch 10 oder 11,
**dadurch gekennzeichnet,**
**dass** das Rastierelement (26) mit der Kulissenanordnung (9) verbunden ist.

13. Betätigungseinrichtung nach einem der Ansprüche 1 bis 12,
**gekennzeichnet durch**
eine Steuerungseinrichtung (21) zur gesteuerten Aktivierung der Anschlagelemente (M₁, M₂, M₃, M₄).

14. Betätigungseinrichtung nach Anspruch 13,
**gekennzeichnet durch**
eine mit der Steuerungseinrichtung (21) verbindbare Sensoranordnung (23, 28) zur Ermittlung der Absolutwinkelstellung der Kulissenanordnung (9).

15. Betätigungseinrichtung nach Anspruch 13 oder 14,
**dadurch gekennzeichnet,**
**dass** die Betätigungseinrichtung für jedes Anschlagelement (M_{1,} M_{2,} M₃, M₄) eine mit der Steuerungseinrichtung (21) verbindbare Aktoreinrichtung (18) zur Aktivierung des Anschlagelements (M₁, M₂, M₃, M₄) aufweist, wobei die Aktoreinrichtung (18) durch eine über die Steuerungseinrichtung (21) zuführbare Hilfsenergie antreibbar ist.

16. Betätigungseinrichtung nach Anspruch 15,
**dadurch gekennzeichnet,**
**dass** die Aktoreinrichtung (18) so eingerichtet ist, dass das Anschlagelement (M_{1,} M₂, M₃, M₄) bei Wegfall der Hilfsenergie in den aktivierten Zustand versetzt bzw. im aktivierten Zustand gehalten wird.

17. Betätigungseinrichtung nach Anspruch 15 oder 16,
**dadurch gekennzeichnet,**
**dass** die Aktoreinrichtung (18) einen elektromagnetischen Antrieb zur Aktivierung des Anschlagelements (M₁, M_{2,} M₃, M₄) aufweist.

18. Betätigungseinrichtung nach Anspruch 17,
**dadurch gekennzeichnet,**
**dass** das Anschlagelement (M₁, M₂, M₃, M₄) durch den Ankerstößel (19) des Elektromagneten der Aktoreinrichtung (18) gebildet ist.

19. Betätigungseinrichtung nach einem der Ansprüche 1 bis 18,
**dadurch gekennzeichnet,**
**dass** die Kulisseneinrichtung (9) drehfest mit dem Betätigungselement (10) verbunden ist, und die Anschlagelemente (M₁, M₂, M₃, M₄) gehäusefest angeordnet sind.

20. Betätigungseinrichtung nach einem der Ansprüche 1 bis 19,
**dadurch gekennzeichnet,**
**dass** die Betätigungseinrichtung mit einer separaten Anzeigeeinrichtung (11) verbunden ist.

21. Betätigungseinrichtung nach einem der Ansprüche 1 bis 19,
**dadurch gekennzeichnet,**
**dass** die Betätigungseinrichtung eine Anzeigeeinrichtung (11) umfasst.

22. Betätigungseinrichtung nach Anspruch 20 oder 21,
**dadurch gekennzeichnet,**
**dass** die Anzeigeeinrichtung (11) für jede Schaltstellung ein diskretes Anzeigeelement (15, 16) aufweist.

23. Betätigungseinrichtung nach Anspruch 22,
**dadurch gekennzeichnet,**
**dass** die Abstände zwischen den diskreten Anzeigeelementen (15, 16) mit der Winkeldifferenz (W) zwischen den Rastpositionen des Betätigungselements (10) korrespondieren.

24. Betätigungseinrichtung nach einem der Ansprüche 1 bis 23,
**dadurch gekennzeichnet,**
**dass** die Betätigungseinrichtung eine mechanische Entriegelung zur manuellen Deaktivierung der Anschlagelemente (M₁, M₂, M₃, M₄) umfasst.

## Claims

1. Operating device for a technical system, in particular for the selection of shift stages of a shift-by-wire gearshift transmission, the operating device having an operating element (10) which, considered independently, is infinitely rotatable and having a blocking device with a slotted guide arrangement (9) and with stop elements for limiting the angle of rotation of the operating element (10) to an overall switching angle, wherein the operating element (10) can assume a number of n switching positions within the overall switching angle, where n > 1, **characterized**
**in that** the slotted guide arrangement (9) has, for each of the n switching positions of the operating element (10), a dedicated stop element (M₁, M₂, M₃, M₄), which can be activated in controlled fashion as a function of the state of the technical system, and a slotted guide region (12, 13, ...),
the slotted guide region (12, 13, ...) comprising at least one slotted guide segment (A, B, C, ...) which extends over the overall switching angle and between the end stops of which a stop element (M₁, M₂, M₃, M₄) can assume one of n relative positions which correspond to the n switching positions of the operating element (10),
wherein the slotted guide segments (A, B, C, ...) assigned to the n stop elements (M₁, M₂, M₃, M₄) add up to an overall slotted guide angle of 360° or a multiple thereof,
and wherein slotted guide segments (A, B, C, ...) and/or stop elements (M₁, M₂, M₃, M₄) are arranged so as to be distributed over the overall slotted guide angle in such a way that, for each switching relative position (1, 2, 3, ...) of the operating element (10), each of the n relative positions within in each case one of the slotted guide segments (A, B, C, ...) is occupied by in each case one of the n stop elements (M₁, M₂, M₃, M₄).

2. Operating device according to Claim 1, **characterized**
**in that** a number of m slotted guide regions (12, 13) or slotted guide segments (A, B, C, ...), where m > 1, are combined to form a multiple slotted guide region or multiple slotted guide segment (A+G, B+D, ...), wherein the multiple slotted guide segment (A+G, B+D, ...) is assigned m stop elements (M₁, M₂, M₃, M₄).

3. Operating device according to Claim 1 or 2, **characterized**
**in that** the slotted guide regions (12, 13) correspond to longitudinal portions of the surface of a cylindrical body.

4. Operating device according to Claim 1 or 2, **characterized**
**in that** the slotted guide arrangement (9) is substantially in the shape of a circular ring.

5. Operating device according to Claim 4, **characterized**
**in that** each slotted guide region (12, 13) of the slotted guide arrangement (9) is assigned a certain circular-ring-shaped partial surface region of the slotted guide arrangement (9).

6. Operating device according to one of Claims 3 to 5,
**characterized**
**in that** a plurality of slotted guide regions (12, 13) are assigned the same partial surface region of the slotted guide arrangement (9).

7. Operating device according to one of Claims 1 to 6,
**characterized**
**in that** the operating element (10) is substantially rotationally symmetrical.

8. Operating device according to one of Claims 1 to 7,
**characterized**
**in that** the operating device has a detent device (25, 26, 30) with a multiplicity of detent positions corresponding to the number of possible switching relative positions.

9. Operating device according to Claim 8,
**characterized**
**in that** the detent positions are distributed uniformly over one full rotation of the operating element (10).

10. Operating device according to Claim 8 or 9,
**characterized**
**in that** the detent device (25, 26, 30) has an encircling detent contour (30) and a spring-loaded detent element (26) which corresponds to the detent contour (30).

11. Operating device according to Claim 10,
**characterized**
**in that** the detent contour (30) is formed in one piece with a housing part (17) of a housing arrangement (17, 20, 24) of the operating device.

12. Operating device according to Claim 10 or 11,
**characterized**
**in that** the detent element (26) is connected to the slotted guide arrangement (9).

13. Operating device according to one of Claims 1 to 12,
**characterized by**
a control device (21) for the controlled activation of the stop elements (M₁, M₂, M₃, M₄).

14. Operating device according to Claim 13,
**characterized by**
a sensor arrangement (23, 28) which can be connected to the control device (21) and which serves for determining the absolute angle position of the slotted guide arrangement (9).

15. Operating device according to Claim 13 or 14,
**characterized**
**in that** the operating device has, for each stop element (M₁, M₂, M₃, M₄), an actuator device (18) which can be connected to the control device (21) and which serves for activating the stop element (M₁, M₂, M₃, M₄), wherein the actuator device (18) can be driven by auxiliary energy that can be supplied by means of the control device (21).

16. Operating device according to Claim 15,
**characterized**
**in that** the actuator device (18) is set up such that, when the auxiliary energy is withdrawn, the stop element (M₁, M₂, M₃, M₄) is moved into the activated state or held in the activated state.

17. Operating device according to Claim 15 or 16,
**characterized**
**in that** the actuator device (18) has an electromagnetic drive for activating the stop element (M₁, M₂, M₃, M₄).

18. Operating device according to Claim 17,
**characterized**
**in that** the stop element (M₁, M₂, M₃, M₄) is formed by the armature plunger (19) of the electromagnet of the actuator device (18).

19. Operating device according to one of Claims 1 to 18,
**characterized**
**in that** the slotted guide device (9) is connected rotationally conjointly to the operating element (10), and the stop elements (M₁, M₂, M₃, M₄) are arranged so as to be fixed with respect to the housing.

20. Operating device according to one of Claims 1 to 19,
**characterized**
**in that** the operating device is connected to a separate display device (11).

21. Operating device according to one of Claims 1 to 19,
**characterized**
**in that** the operating device comprises a display device (11).

22. Operating device according to Claim 20 or 21,
**characterized**
**in that** the display device (11) has a discrete display element (15, 16) for each switching position.

23. Operating device according to Claim 22,
**characterized**
**in that** the spacings between the discrete display elements (15, 16) correspond to the angle difference (W) between the detent positions of the operating element (10).

24. Operating element according to one of Claims 1 to 23,
**characterized**
**in that** the operating device comprises a mechanical unlocking means for manual deactivation of the stop elements (M₁, M₂, M₃, M₄).

## Revendications

1. Dispositif d'actionnement pour un système technique, notamment pour la sélection de rapports de changement de vitesses d'une boîte de vitesses à changement de vitesses à commande électrique, le dispositif d'actionnement présentant un élément d'actionnement (10) pouvant tourner de manière illimitée en soi, ainsi qu'un dispositif de blocage avec un agencement de coulisse (9) et avec des éléments de butée pour limiter l'angle de rotation de l'élément d'actionnement (10) à un angle de changement de vitesses total, l'élément d'actionnement (10) pouvant adopter, à l'intérieur de l'angle de changement de vitesses total, un certain nombre de n positions de changement de vitesses, avec n > 1,
**caractérisé en ce que**
l'agencement de coulisse (9) présente, pour chacune des n positions de changement de vitesses de l'élément d'actionnement (10), un élément de butée propre (M₁, M₂, M₃, M₄) pouvant être activé de manière commandée en fonction de l'état du système technique, et une région de coulisse (12, 13, ...), la région de coulisse (12, 13, ...) comprenant au moins un segment de coulisse (A, B, C, ...) s'étendant sur l'angle de changement de vitesses total, entre les butées de fin de course duquel un élément de butée (M₁, M₂, M₃, M₄) peut adopter l'une parmi n positions relatives qui correspondent aux n positions de changement de vitesses de l'élément d'actionnement (10), les segments de coulisse (A, B, C, ...) associés aux n éléments de butée (M₁, M₂, M₃, M₄) s'ajoutant pour donner un angle total de coulisse de 360° ou un multiple de celui-ci,
et des segments de coulisse (A, B, C, ...) et/ou des éléments de butée (M₁, M₂, M₃, M₄) étant disposés de manière répartie sur l'angle total de coulisse de telle sorte que
pour chaque position relative de changement de vitesses (1, 2, 3, ...) de l'élément d'actionnement (10), chacune des n positions relatives à l'intérieur d'un des segments de coulisse respectifs (A, B, C, ...) soit occupée par l'un respectif des n éléments de butée (M₁, M₂, M₃, M₄).

2. Dispositif d'actionnement selon la revendication 1,
**caractérisé en ce qu'**
un certain nombre de m régions de coulisse (12, 13) ou de segments de coulisse (A, B, C, ...), avec m >1, sont réunis pour donner une région de coulisse multiple ou un segment de coulisse multiple (A+G, B+D, ...), m éléments de butée (M₁, M₂, M₃, M₄) étant associés au segment de coulisse multiple (A+G, B+D, ...).

3. Dispositif d'actionnement selon la revendication 1 ou 2,
**caractérisé en ce que**
les régions de coulisse (12, 13) correspondent à des portions longitudinales de la surface d'un corps cylindrique.

4. Dispositif d'actionnement selon la revendication 1 ou 2,
**caractérisé en ce qu'**
l'agencement de coulisse (9) est essentiellement de forme annulaire circulaire.

5. Dispositif d'actionnement selon la revendication 4,
**caractérisé en ce qu'**
une région de surface partielle de forme annulaire circulaire de l'agencement de coulisse (9) est associée à chaque région de coulisse (12, 13) de l'agencement de coulisse (9).

6. Dispositif d'actionnement selon l'une quelconque des revendications 3 à 5,
**caractérisé en ce que**
la même région de surface partielle de l'agencement de coulisse (9) est associée à plusieurs régions de coulisse (12, 13).

7. Dispositif d'actionnement selon l'une quelconque des revendications 1 à 6,
**caractérisé en ce que**
l'élément d'actionnement (10) est essentiellement doté d'une symétrie de révolution.

8. Dispositif d'actionnement selon l'une quelconque des revendications 1 à 7,
**caractérisé en ce que**
le dispositif d'actionnement présente un dispositif d'encliquetage (25, 26, 30) avec une pluralité de positions d'encliquetage correspondant au nombre des positions relatives de changement de vitesses possibles.

9. Dispositif d'actionnement selon la revendication 8,
**caractérisé en ce que**
les positions d'encliquetage sont réparties uniformément sur une rotation complète de l'élément d'actionnement (10).

10. Dispositif d'actionnement selon la revendication 8 ou 9,
**caractérisé en ce que**
le dispositif d'encliquetage (25, 26, 30) présente un contour d'encliquetage (30) périphérique et un élément d'encliquetage (26) sollicité par ressort, correspondant au contour d'encliquetage (30).

11. Dispositif d'actionnement selon la revendication 10,
**caractérisé en ce que**
le contour d'encliquetage (30) est réalisé d'une seule pièce avec une partie de boîtier (17) d'un agencement de boîtier (17, 20, 24) du dispositif d'actionnement.

12. Dispositif d'actionnement selon la revendication 10 ou 11,
**caractérisé en ce que**
l'élément d'encliquetage (26) est connecté à l'agencement de coulisse (9).

13. Dispositif d'actionnement selon l'une quelconque des revendications 1 à 12,
**caractérisé par**
un dispositif de commande (21) pour l'activation commandée des éléments de butée (M₁, M₂, M₃, M₄).

14. Dispositif d'actionnement selon la revendication 13,
**caractérisé par**
un agencement de capteur (23, 28) pouvant être connecté au dispositif de commande (21) pour déterminer la position angulaire absolue de l'agencement de coulisse (9).

15. Dispositif d'actionnement selon la revendication 13 ou 14,
**caractérisé en ce que**
le dispositif d'actionnement présente, pour chaque élément de butée (M₁, M₂, M₃, M₄), un dispositif d'actionneur (18) pouvant être connecté au dispositif de commande (21) pour activer l'élément de butée (M₁, M₂, M₃, M₄), le dispositif d'actionneur (18) pouvant être entraîné par une énergie auxiliaire pouvant être fournie par le biais du dispositif de commande (21).

16. Dispositif d'actionnement selon la revendication 15,
**caractérisé en ce que**
le dispositif d'actionneur (18) est prévu de manière à ce que l'élément de butée (M₁, M₂, M₃, M₄) soit placé ou maintenu dans l'état activé en cas de suppression de l'énergie auxiliaire.

17. Dispositif d'actionnement selon la revendication 15 ou 16,
**caractérisé en ce que**
le dispositif d'actionneur (18) présente un entraînement électromagnétique pour l'activation de l'élément de butée (M₁, M₂, M₃, M₄).

18. Dispositif d'actionnement selon la revendication 17,
**caractérisé en ce que**
l'élément de butée (M₁, M₂, M₃, M₄) est formé par le poussoir d'induit (19) de l'électroaimant du dispositif d'actionneur (18).

19. Dispositif d'actionnement selon l'une quelconque des revendications 1 à 18,
**caractérisé en ce que**
le dispositif de coulisse (9) est connecté de manière solidaire en rotation à l'élément d'actionnement (10), et les éléments de butée (M₁, M₂, M₃, M₄) sont disposés de manière fixée au boîtier.

20. Dispositif d'actionnement selon l'une quelconque des revendications 1 à 19,
**caractérisé en ce que**
le dispositif d'actionnement est connecté à un dispositif d'affichage séparé (11).

21. Dispositif d'actionnement selon l'une quelconque des revendications 1 à 19,
**caractérisé en ce que**
le dispositif d'actionnement comprend un dispositif d'affichage (11).

22. Dispositif d'actionnement selon la revendication 20 ou 21,
**caractérisé en ce que**
le dispositif d'affichage (11) présente, pour chaque position de changement de vitesses, un élément d'affichage discret (15, 16).

23. Dispositif d'actionnement selon la revendication 22,
**caractérisé en ce que**
les distances entre les éléments d'affichage discrets (15, 16) correspondent à la différence angulaire (W) entre les positions d'encliquetage de l'élément d'actionnement (10).

24. Dispositif d'actionnement selon l'une quelconque des revendications 1 à 23,
**caractérisé en ce que**
le dispositif d'actionnement comprend un déverrouillage mécanique pour la désactivation manuelle des éléments de butée (M₁, M₂, M₃, M₄).
